(19) Europäisches Patentamt
European Patent Office
Office européen des brevets

(11) EP 4 745 634 A1

(12) # EUROPEAN PATENT APPLICATION
published in accordance with Art. 153(4) EPC

(43) Date of publication:
**20.05.2026 Bulletin 2026/21**

(21) Application number: **24839792.9**

(22) Date of filing: **10.07.2024**

(51) International Patent Classification (IPC):
***G02B 5/30*** (2006.01) ***C07F 7/08*** (2006.01)
***C07F 7/10*** (2006.01) ***C08F 2/44*** (2006.01)
***C08G 77/00*** (2006.01) ***C08L 83/00*** (2006.01)

(52) Cooperative Patent Classification (CPC):
**C07F 7/08; C07F 7/10; C08F 2/44; C08G 77/00; C08L 83/00; G02B 5/30**

(86) International application number:
**PCT/JP2024/024984**

(87) International publication number:
**WO 2025/013902 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 JP 2023113697**
**11.07.2023 JP 2023113782**
**29.09.2023 JP 2023169664**
**29.09.2023 JP 2023169671**
**26.12.2023 JP 2023219204**
**22.03.2024 JP 2024046680**

(71) Applicant: **FUJIFILM Corporation**
**Tokyo 106-8620 (JP)**

(72) Inventors:
- **INADA, Hiroshi**
  **Minamiashigara-shi, Kanagawa 250-0193 (JP)**
- **OKUBO, Megumi**
  **Minamiashigara-shi, Kanagawa 250-0193 (JP)**
- **MACHIDA, Takashi**
  **Minamiashigara-shi, Kanagawa 250-0193 (JP)**
- **YAMAMOTO, Aiko**
  **Minamiashigara-shi, Kanagawa 250-0193 (JP)**
- **KODAMA, Keisuke**
  **Minamiashigara-shi, Kanagawa 250-0193 (JP)**
- **GOTO, Ryoji**
  **Minamiashigara-shi, Kanagawa 250-0193 (JP)**
- **KISHINO, Masamichi**
  **Minamiashigara-shi, Kanagawa 250-0193 (JP)**

(74) Representative: **HGF**
**HGF Limited**
**4th Floor, 1 City Square**
**Leeds LS1 2ES (GB)**

(54) **COMPOSITION, OPTICALLY ANISOTROPIC FILM, AND COMPOUND**

(57) An object of the present invention is to provide a composition which is capable of forming an optically anisotropic film in which visible unevenness and alignment unevenness are suppressed. The composition of the present invention contains a silicon-containing compound selected from the group consisting of a compound A that satisfies Requirement (a1) to Requirement (a3) and a compound B that satisfies Requirement (bl) to Requirement (b4), and a liquid crystal compound.

Requirement (a1): A value obtained by dividing a total number of methyl groups bonded to silicon atoms in a molecule by a molecular weight of the compound is 0.0140 or more. Requirement (a2): The compound A is represented by A-$(Z^{a1}\text{-}Y^{a1}\text{-}(X^{a1})_m)_n$. Requirement (a3): The compound A has a molecular weight of 500 to 8000.

Requirement (b1): A value obtained by dividing a total number of methyl groups bonded to silicon atoms in a molecule by a molecular weight of the compound is 0.0140 or more. Requirement (b2): The compound B has two or more groups represented by -$L^{b1}$-$X^{b1}$. Requirement (b3): The compound B has a partial structure represented by *-$(Z^{b1}\text{-}Y^{b1})_s$-$W^{b1}$. Requirement (b4): The compound B has a molecular weight of 500 to 8000.

EP 4 745 634 A1

## Description

## BACKGROUND OF THE INVENTION

1. Field of the Invention

The present invention relates to a composition, an optically anisotropic film, and a compound.

2. Description of the Related Art

An optically anisotropic film formed by using a composition containing a liquid crystal compound and aligning the liquid crystal compound in a predetermined alignment state is used in various applications such as an optical compensation sheet. The composition containing a liquid crystal compound may contain an alignment agent that can restrict the aligning properties of the liquid crystal compound from an air interface side where the alignment restriction force from a support side is weakened. As such an alignment agent, a fluorine-based alignment agent having a perfluoroalkyl chain, which has a low surface free energy and is likely to be unevenly distributed on the surface, has been widely used in the related art. However, in recent years, there has been a demand for a PFAS-free alternative material from the viewpoint of environmental pollution, and a silicon-based alignment agent is expected to be such an alternative.

For example, as a liquid crystal compound having a silicon-containing moiety, JP1996-113577A (JP-H08-113577A) discloses a compound having a predetermined silicon-containing structural moiety and a predetermined mesogenic moiety.

## SUMMARY OF THE INVENTION

Examples of the performance required for the above-mentioned alignment agent include suppression of visible unevenness of a film formed of a composition containing the above-mentioned alignment agent and suppression of alignment unevenness of a liquid crystal compound. The visible unevenness is intended to refer to a phenomenon in which unevenness in tint is visually recognized due to film thickness unevenness or the like.

In a case where the present inventors formed an optically anisotropic film using the compound described in the above-mentioned document, the present inventors have not been able to achieve both suppression of visible unevenness and suppression of alignment unevenness at the same time.

Therefore, an object of the present invention is to provide a composition which is capable of forming an optically anisotropic film in which visible unevenness and alignment unevenness are suppressed.

In addition, another object of the present invention is to provide an optically anisotropic film formed of the above-mentioned composition and a compound related to the above-mentioned composition.

As a result of extensive studies to achieve the above-mentioned objects, the present inventors have found that the objects can be achieved by the following configurations.

[1] A composition comprising:

a silicon-containing compound selected from the group consisting of a compound A that satisfies Requirement (a1) to Requirement (a3) which will be described later and a compound B that satisfies Requirement (b1) to Requirement (b4) which will be described later; and
a liquid crystal compound.

[2] The composition according to [1], in which the compound A is a compound represented by Formula (A2) which will be described later or a compound represented by Formula (A3) which will be described later.

[3] The composition according to [1] or [2], in which the compound B is a compound represented by Formula (B1) which will be described later.

[4] The composition according to [2], in which, in Formula (A2) which will be described later, in a substituent T, a moiety bonded to a group represented by $Y^{a3}$ is -CO-O-, -O-CO-O-, -NH-CO-O-, or -CO-O-NH-, and in Formula (A3) which will be described later, in the substituent T, a moiety bonded to an aromatic ring constituting an aromatic ring group is -CO-O-, -O-CO-O-, -NH-CO-O-, or -CO-O-NH-.

[5] An optically anisotropic film formed of the composition according to any one of [1] to [4].

[6] A compound that satisfies Requirement (a1) to Requirement (a3) which will be described later.

[7] The compound according to [6], in which the compound is represented by Formula (A2) or Formula (A3) which will be described later.

[8] The compound according to [7], in which, in Formula (A2), in a substituent T, a moiety bonded to a group

represented by $Y^{a3}$ is -CO-O-, -O-CO-O-, -NH-CO-O-, or -CO-O-NH-, and in Formula (A3) which will be described later, in the substituent T, a moiety bonded to an aromatic ring constituting an aromatic ring group is -CO-O-, -O-CO-O-, -NH-CO-O-, or -CO-O-NH-.

[9] A compound that satisfies Requirement (b1) to Requirement (b4) which will be described later.

[10] The compound according to [9], in which the compound is represented by Formula (B1) which will be described later.

According to the present invention, it is possible to provide a composition which is capable of forming an optically anisotropic layer in which visible unevenness and alignment unevenness are suppressed.

In addition, according to the present invention, it is also possible to provide an optically anisotropic film and a compound, which are related to the above-mentioned composition.

## DESCRIPTION OF THE PREFERRED EMBODIMENTS

Hereinafter, the present invention will be described in more detail.

The description of the configuration requirements described below may be made based on the representative embodiments of the present invention, but the present invention is not limited to those embodiments.

In the present specification, any numerical range expressed using "to" means a range that includes the numerical values written before and after "to" as the lower limit value and the upper limit value, respectively.

In addition, in the present specification, in a case where two or more types of a certain component are present, the "content" of the component means a total content of the two or more types of components.

In any numerical range described in a stepwise manner in the present specification, an upper limit value or a lower limit value described in a certain numerical range may be replaced with an upper limit value or a lower limit value of another numerical range described in a stepwise manner. In addition, in any numerical range described in the present specification, an upper limit value or a lower limit value described in a certain numerical range may be replaced with values shown in the Examples.

In the present specification, a combination of two or more preferred aspects is a more preferred aspect.

In the present specification, in a case where there are a plurality of substituents, linking groups, or the like (hereinafter, referred to as substituents or the like) represented by specific reference numerals, or a case where a plurality of substituents or the like are simultaneously specified, this means that the substituents or the like may be the same as or different from each other. The same applies to the definition of the number of substituents or the like.

In the present specification, the bonding direction of a divalent group (for example, -CO-O-) described is not limited unless otherwise specified. For example, in a case where Y is -CO-O- in a compound represented by Formula "X-Y-Z", the compound may be "X-O-CO-Z" or may be "X-CO-O-Z".

In the present specification, the solid content of the composition is intended to refer to a component that forms a film (for example, a cured product or a film), and does not include a solvent. The component that forms a film referred to here may be a component that reacts (polymerizes) during the formation of the film to change a chemical structure thereof. In addition, even in a case where a component is liquid, the component is considered to be a solid content as long as the component forms the film.

In the present specification, unless otherwise specified, the molecular weight in a case where there is a molecular weight distribution is a weight-average molecular weight (Mw). In the present specification, the weight-average molecular weight (Mw) and the number-average molecular weight (Mn) are values in terms of polystyrene by gel permeation chromatography (GPC).

In the present specification, Re(λ) and Rth(λ) represent an in-plane retardation at a wavelength λ and a thickness direction retardation at a wavelength λ. Unless otherwise specified, the wavelength λ is set to 550 nm.

In addition, in the present specification, Re(λ) and Rth(λ) are values measured at a wavelength λ using AxoScan OPMF-1 (manufactured by Opto Science, Inc.).

Specifically, an average refractive index ((nx + ny + nz)/3) and a film thickness (d (μm)) are input to AxoScan OPMF-1 to calculate the following.

slow axis direction (°)

$$\mathrm{Re}(\lambda) = \mathrm{R0}(\lambda)$$

$$\mathrm{Rth}(\lambda) = ((nx + ny)/2 - nz) \times d$$

Although R0(λ) is displayed as a numerical value calculated by AxoScan OPMF-1, R0(λ) means Re(λ).

[Composition]

Hereinafter, the composition according to an embodiment of the present invention will be described in more detail.

The composition according to the embodiment of the present invention (hereinafter, also simply referred to as "composition") contains a silicon-containing compound selected from the group consisting of a compound A satisfying Requirement (a1) to Requirement (a3) which will be described later and a compound B satisfying Requirement (b1) to Requirement (b4) which will be described later, and a liquid crystal compound.

Although the reason why the composition having the above-mentioned configuration can achieve the objects of the present invention is not always clear, the present inventors speculate as follows.

The mechanism by which the effect is obtained is not limited by the following speculation. In other words, even in a case where the effect is obtained by a mechanism other than the one described below, it is still included within the scope of the present invention.

In a case where an optically anisotropic film is formed using a composition containing a liquid crystal compound, visible unevenness and alignment unevenness can be suppressed by including a predetermined silicon-containing compound selected from the compound A and the compound B.

Specifically, the silicon-containing compound has a silicon-containing moiety that is likely to be unevenly distributed on the surface of the coating film, as shown in Requirement (a2) and Requirement (b2). Furthermore, the value obtained by dividing the total number of methyl groups bonded to silicon atoms by the molecular weight of the compound is equal to or greater than a predetermined value as shown in Requirement (a1) and Requirement (b1), and the specific compound has a predetermined molecular weight as shown in Requirement (a3) and Requirement (b4), so that the silicon-containing compound is efficiently unevenly distributed on the surface of the coating film, and the surface tension of the composition can be efficiently reduced by the silicon-containing compound on the surface. As a result, it is presumed that the visible unevenness of the formed film is suppressed.

In addition, the silicon-containing compound can contribute to the aligning properties of the liquid crystal compound by having a structure including a predetermined linking group and a ring structure as shown in Requirement (a2) and Requirement (b3). Further, the silicon-containing compound is efficiently unevenly distributed on the surface as described above, and thus there is no disturbance of the alignment due to scattering of the silicon-containing compound among the liquid crystal compounds in the layer. As a result, it is presumed that the alignment unevenness of the formed film can also be suppressed.

Hereinafter, the expression "it is possible to form an optically anisotropic film in which visible unevenness is suppressed" is also simply referred to as "is excellent in visible unevenness suppression performance", the expression "it is possible to form an optically anisotropic film in which alignment unevenness is suppressed" is also simply referred to as "is excellent in alignment unevenness suppression performance", and the expression "it is possible to form an optically anisotropic film in which at least one of visible unevenness or alignment unevenness is further suppressed" is also simply referred to as "the effect of the present invention is more excellent".

Hereinafter, each of the components contained in the composition will be described in more detail.

[Silicon-containing compound]

The composition contains a silicon-containing compound selected from the group consisting of a compound A and a compound B.

<Compound A>

The compound A satisfies Requirement (a1) to Requirement (a3).

(a1) The value obtained by dividing the total number of methyl groups bonded to silicon atoms in the molecule by the molecular weight of the compound is 0.0140 or more.

(a2) The compound A is represented by Formula (A1).

Formula (A1) $A\text{-}(Z^{a1}\text{-}Y^{a1}\text{-}(X^{a1})_m)_n$

In Formula (A1), A represents an aromatic ring which may have a substituent, an aliphatic ring which may have a substituent, or a group represented by $A^1\text{-}L^A\text{-}A^2$. $A^1$ and $A^2$ each independently represent an aromatic ring which may have a substituent or an aliphatic ring which may have a substituent. $L^A$ represents -C≡C- or $-CH_2-$.

$Z^{a1}$'s each independently represent a chain-like alkylene group, -O-, -CO-, or a group formed by combining two or

more selected from the group consisting of a chain-like alkylene group, -O-, -CO-, and -$NR^N$-. $R^N$ represents a hydrogen atom or a substituent.

$Y^{a1}$'s each independently represent an aromatic ring which may have a substituent or an aliphatic ring which may have a substituent.

$X^{a1}$'s each independently represent a silicon-containing group having a Si-O-Si structure.

n represents an integer of 2 or more.

m's each independently represent an integer of 1 or more.

(a3) The compound A has a molecular weight of 500 to 8000.

Hereinafter, each requirement will be described in more detail.

(Requirement (a1))

(a1) The value obtained by dividing the total number of methyl groups bonded to silicon atoms in the molecule by the molecular weight of the compound is 0.0140 or more.

In a case where the value obtained by dividing the total number of methyl groups bonded to silicon atoms by the molecular weight of the compound is less than 0.0140, the degree of uneven distribution of the silicon-containing compound on the surface of the coating film is low, and the alignment unevenness and the visible unevenness are poor, which is not preferable.

Specifically, the value obtained by dividing the total number of methyl groups bonded to silicon atoms by the molecular weight of the compound is determined by a calculation formula of (total number of methyl groups directly bonded to silicon atoms)/(molecular weight). For example, in a case where the molecular weight of the compound is 2000.00 and the compound has only four structures of -$Si(CH_3)_3$ as a structure in which silicon atoms and methyl groups are bonded, the number of methyl groups bonded to silicon atoms is 12, so the value obtained by dividing the total number of methyl groups bonded to silicon atoms by the molecular weight of the compound is determined to be 12/2000.00 = 0.006.

In the compound A, the value obtained by dividing the total number of methyl groups bonded to silicon atoms by the molecular weight of the compound is preferably 0.0140 to 0.0280, more preferably 0.0140 to 0.0245, still more preferably 0.0150 to 0.0245, and particularly preferably 0.0170 to 0.0245, from the viewpoint that the effect of the present invention is more excellent.

(Requirement (a2))

(a2) The compound A is represented by Formula (A1).

Formula (A1) $A\text{-}(Z^{a1}\text{-}Y^{a1}\text{-}(X^{a1})_m)_n$

In Formula (A1), A represents an aromatic ring which may have a substituent, an aliphatic ring which may have a substituent, or a group represented by $A^1$-$L^A$-$A^2$. A is preferably an aromatic ring which may have a substituent or a group represented by $A^1$-$L^A$-$A^2$, and more preferably an aromatic ring which may have a substituent, from the viewpoint that the alignment unevenness suppression performance is more excellent.

The number of ring member atoms in the aromatic ring is preferably 5 to 10, and more preferably 5 or 6.

The aromatic ring may be either an aromatic hydrocarbon ring or an aromatic heterocyclic ring and is preferably an aromatic hydrocarbon ring. The number of heteroatoms contained in the aromatic heterocyclic ring is preferably 4 or less, and more preferably 2 or less. Above all, from the viewpoint that the alignment unevenness suppression performance is more excellent, the number of nitrogen atoms contained in the aromatic heterocyclic ring is preferably 2 or less.

In addition, the aromatic ring may be a monocyclic ring, may be a fused ring, or may be a structure in which two aromatic rings are linked by a single bond. The number of fused rings in the fused ring is preferably 2 or 3, and more preferably 2. More specifically, the structure in which two aromatic rings are linked by a single bond is a structure represented by Ar-Ar (Ar is an aromatic ring), examples of which include a biaryl structure.

Examples of the aromatic hydrocarbon ring include a benzene ring, a naphthalene ring, an anthracene ring, a phenanthroline ring, and a biphenyl ring. Examples of the aromatic heterocyclic ring include a pyridine ring, a pyridazine ring, an imidazole ring, a thiophene ring, a quinoline ring, an isoquinolylene ring, an oxazole ring, a thiazole ring, an oxadiazole ring, a benzothiazole ring, a benzothiadiazole ring, a phthalimide ring, a thienothiazole ring, a thiazolothiazole ring, a thienothiophene ring, and a thienooxazole ring. The aromatic ring is preferably a benzene ring, a naphthalene ring, or a biphenyl ring, and more preferably a benzene ring.

The number of ring member atoms in the aliphatic ring is preferably 5 to 10, and more preferably 5 or 6.

The aliphatic ring may be either an aliphatic hydrocarbon ring or an aliphatic heterocyclic ring and is preferably an aliphatic hydrocarbon ring. In addition, the aliphatic ring may be a monocyclic ring, may be a fused ring, or may be a structure in which two aliphatic rings are linked by a single bond. The number of fused rings in the fused ring is preferably 2

or 3, and more preferably 2. More specifically, the structure in which two aliphatic rings are linked by a single bond is a structure represented by Cy-Cy (Cy is an aliphatic ring), examples of which include a bicycloalkane structure.

Examples of the aliphatic hydrocarbon ring include a cyclopentane ring, a cyclohexane ring, a cycloheptane ring, a cyclooctane ring, a cyclononane ring, a cyclododecane ring, a cyclodocosane ring, and a bicyclohexane ring. Examples of the aliphatic heterocyclic ring include a pyrrolidine ring, an oxolane ring, a thiolane ring, a piperidine ring, a tetrahydropyran ring, a thiane ring, a piperazine ring, and a morpholine ring. The aliphatic ring is preferably a cyclohexane ring or a bicyclohexane ring, and more preferably a cyclohexane ring.

Examples of the substituent which may be contained in the aromatic ring and the aliphatic ring include an alkyl group which may have a halogen atom, a silicon-containing group having a Si-O-Si structure, an alkyl ester group, an acyl group, an alkoxy group, an alkylthio group, an alkyloxycarbonyl group, a carbamoyl group, an acylamino group, a halogen atom, a cyano group, and a nitro group, among which an alkyl group, a silicon-containing group having a Si-O-Si structure, an alkyl ester group, an alkoxy group, or an acyl group is preferable, a linear alkyl group having 1 to 4 carbon atoms, a silicon-containing group having a Si-O-Si structure, a methyl ester group, a methoxy group, or an acetyl group is more preferable, and a methyl group, an ethyl group, a methoxy group, or a methyl ester group is still more preferable. The definition and suitable aspect of the silicon-containing group having a Si-O-Si structure are the same as those of the group represented by $X^{a1}$ which will be described later.

$A^1$ and $A^2$ each independently represent an aromatic ring which may have a substituent or an aliphatic ring which may have a substituent. The definitions and suitable aspects of the aromatic ring which may have a substituent and the aliphatic ring which may have a substituent are the same as those of the aromatic ring which may have a substituent and the aliphatic ring which may have a substituent, each of which is represented by A. In addition, $A^1$ and $A^2$ are each preferably a monocyclic ring or a fused ring, and more preferably a monocyclic ring.

$L^A$ represents -C=C- or $-CH_2-$.

In a case where A is a group represented by $A^1$-$L^A$-$A^2$, it is preferred that $A^1$ is bonded to at least one group represented by $-Z^{a1}-Y^{a1}-(X^{a1})_m$ and $A^2$ is bonded to at least one group represented by $-Z^{a1}-Y^{a1}-(X^{a1})_m$.

In Formula (A1), $Z^{a1}$'s each independently represent a chain-like alkylene group, -O-, -CO-, or a group formed by combining two or more selected from the group consisting of a chain-like alkylene group, -O-, -CO-, and $-NR^N-$, That is, $Z^{a1}$ represents a chain-like alkylene group, -O-, or -CO-, or represents a group formed by combining two or more selected from the group consisting of a chain-like alkylene group, -O-, -CO-, and $-NR^N-$. $R^N$ represents a hydrogen atom or a substituent. In a case where the group represented by $Z^{a1}$ is the above-mentioned group, the alignment of the liquid crystal compound is unlikely to be disturbed, and the alignment unevenness suppression performance is excellent.

Examples of the substituent represented by $R^N$ include an alkyl group, an alkenyl group, and an aryl group, among which an alkyl group is preferable, a linear alkyl group having 1 to 4 carbon atoms is more preferable, and a methyl group or an ethyl group is still more preferable.

The chain-like alkylene group may be linear or branched.

The number of carbon atoms in the chain-like alkylene group is preferably 1 to 6, more preferably 1 to 4, and still more preferably 1 to 3.

From the viewpoint that the effect of the present invention is more excellent, the group represented by $Z^{a1}$ is preferably a chain-like alkylene group having 1 to 3 carbon atoms, -O-, -CO-O-, -O-CO-O-, $-NR^N-CO-$, $-NR^N-CO-O-$, $-CO-NR^N-$, or $-NR^N-CO-NR^N-$, more preferably a chain-like alkylene group having 1 to 3 carbon atoms, -O-, -CO-, -CO-NH-, -CO-O-, or -NH-CO-O-, still more preferably -O-, -CO-, -CO-O-, or -NH-CO-O-, and particularly preferably -O- or -CO-O-.

In Formula (A1), $Y^{a1}$'s each independently represent an aromatic ring which may have a substituent or an aliphatic ring which may have a substituent.

The definitions and suitable aspects of the aromatic ring which may have a substituent and the aliphatic ring which may have a substituent are the same as the definitions and suitable aspects of the above-mentioned aromatic ring which may have a substituent and the above-mentioned aliphatic ring which may have a substituent, each of which is represented by A.

The aromatic ring represented by $Y^{a1}$ is also preferably a monocyclic ring or a fused ring, and more preferably a monocyclic ring. In addition, the aliphatic ring represented by $Y^{a1}$ is also preferably a monocyclic ring or a fused ring, and more preferably a monocyclic ring.

In Formula (A1), $X^{a1}$'s each independently represent a silicon-containing group having a Si-O-Si structure.

The number of silicon atoms contained in the group represented by $X^{a1}$ is 2 or more, preferably 3 or more, more preferably 4 or more, and still more preferably 5 or more. The upper limit of the number of silicon atoms is not particularly limited, and is often 12 or less.

Above all, $X^{a1}$ preferably has a monovalent substituent S having a siloxane structure containing three or more silicon atoms. The siloxane structure containing three or more silicon atoms is intended to refer to a structure in which three or more silicon atoms are linked while forming a Si-O-Si structure, and may be linear or branched.

Examples of the substituent S include monovalent groups represented by Formula (C-1) to Formula (C-3), among which a group represented by Formula (C-2) or a group represented by Formula (C-3) is preferable, and a group

represented by Formula (C-3) is more preferable.

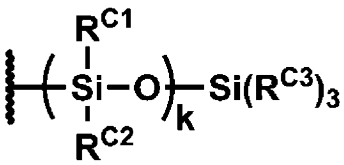

(C-1)

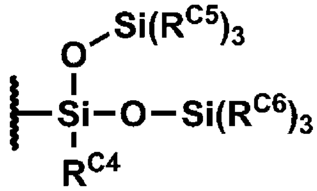

(C-2)

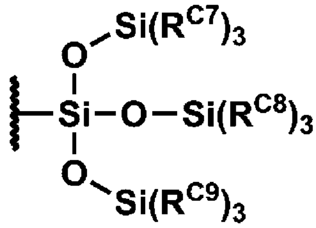

(C-3)

In Formula (C-1), $R^{C1}$ to $R^{C3}$ each independently represent an alkyl group having 1 to 10 carbon atoms which may have a substituent.

In Formula (C-2), $R^{C4}$ represents an alkyl group having 1 to 10 carbon atoms which may have a substituent. $R^{C5}$ and $R^{C6}$ each independently represent an alkyl group having 1 to 10 carbon atoms which may have a substituent, or a group represented by Formula (C-1X).

In Formula (C-3), $R^{C7}$ to $R^{C9}$ each independently represent an alkyl group having 1 to 10 carbon atoms which may have a substituent, or a group represented by Formula (C-1X).

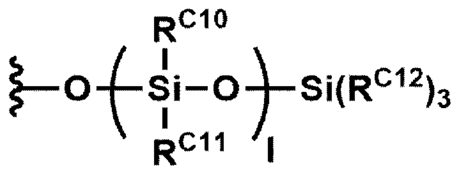

(C-1X)

In Formula (C-1X), $R^{C10}$ to $R^{C12}$ each independently represent an alkyl group having 1 to 10 carbon atoms which may have a substituent. 1 represents an integer of 0 to 20.

In Formula (C-1) to Formula (C-3) and Formula (C-1X), the alkyl group having 1 to 10 carbon atoms, which is represented by each of $R^{C1}$ to $R^{C12}$, may be either chain-like or cyclic, and is preferably chain-like and more preferably linear.

The number of carbon atoms in the alkyl group having 1 to 10 carbon atoms is preferably 1 to 6, and more preferably 1 to 3.

It is also preferable that the alkyl group having 1 to 10 carbon atoms has no substituent.

Above all, $R^{C1}$ to $R^{C4}$ and $R^{C10}$ to $R^{C12}$ are each preferably a methyl group.

Above all, $R^{C5}$ to $R^{C9}$ are each preferably a methyl group or a group represented by Formula (C-1X).

In Formula (C-1), k represents an integer of 2 to 20.

k is preferably an integer of 3 to 10, and more preferably an integer of 3 to 8, from the viewpoint that the effect of the present invention is more excellent.

In Formula (C-1X), 1 represents an integer of 0 to 20.

1 is preferably an integer of 0 to 10, and more preferably an integer of 0 to 8, from the viewpoint that the effect of the present invention is more excellent.

The number of substituents S contained in the group represented by $X^{a1}$ is preferably 1 or more, more preferably 1 to 6, and still more preferably 1 to 3.

Examples of the group represented by $X^{a1}$ include a group represented by $-L^x-(X^{a2})_x$. $L^x$ represents an (x+1)-valent linking group. $X^{a2}$'s each independently represent a substituent S. x represents an integer of 1 or more.

In a case where x is 1, $L^x$ represents a divalent linking group. Examples of the divalent linking group include a chain-like alkylene group, -O-, -CO-, $-NR^N-$, and a group formed by combining these groups. $R^N$ represents a hydrogen atom or a substituent. Examples of the above-mentioned combined group include -chain-like alkylene group-O-, -chain-like alkylene group-O-CO-, -chain-like alkylene group-$NR^N$-CO-, and -chain-like alkylene group-$NR^N$-CO-O-. In addition, examples of the divalent linking group also include a group in which the above-mentioned group is combined with a divalent aromatic ring group or a divalent aliphatic ring group.

In Formula (A1), n represents an integer of 2 or more.

n is preferably an integer of 2 to 6, more preferably an integer of 2 to 4, and still more preferably 2 or 3.

In Formula (A1), m represents an integer of 1 or more.

m is preferably an integer of 1 to 6, more preferably an integer of 1 to 3, and still more preferably 1 or 2.

In addition, in a case where $X^{a1}$ has a group represented by Formula (C-1) in which k is 2 or a group represented by Formula (C-2) in which $R^{C5}$ and $R^{C6}$ are each an alkyl group having 1 to 10 carbon atoms, as the siloxane structure containing three or more silicon atoms, it is preferable that m is an integer of 2 or more.

(Requirement (a3))

(a3) The compound A has a molecular weight of 500 to 8000.

In a case where the molecular weight is less than 500, the degree of uneven distribution of the silicon-containing compound on the surface is low, and the alignment unevenness and the visible unevenness are poor, which is not preferable. In addition, in a case where the molecular weight is more than 8000, the silicon-containing compound is likely to inhibit the alignment of the liquid crystal compound, and the alignment unevenness and the visible unevenness are poor, which is not preferable.

The molecular weight of the compound A is preferably 700 or more, and more preferably 800 or more, from the viewpoint that the effect of the present invention is more excellent. In addition, the molecular weight of the compound is preferably 6000 or less, and more preferably 4000 or less, from the viewpoint that the visible unevenness suppression performance is more excellent. Above all, the molecular weight of the compound A is preferably 700 to 6000, and more preferably 800 to 4000, from the viewpoint that the visible unevenness suppression performance is more excellent.

The compound A is preferably a compound represented by Formula (A2) or a compound represented by Formula (A3).

Formula (A2) $A\text{-}(Z^{a1}\text{-}(Y^{a2}\text{-}Z^{a2})_r\text{-}Y^{a3}\text{-}(T^{a1})_{m1})_n$

Formula (A3) $A\text{-}(Z^{a1}\text{-}Y^{a1}\text{-}(Z^{a3}\text{-}3^{a1})_{m2})_n$

In Formula (A2) and Formula (A3), A, $Z^{a1}$, $Y^{a1}$, and n have the same definitions as A, $Z^{a1}$, $Y^{a1}$, and n in Formula (A1).

In Formula (A2), $Z^{a2}$'s each independently represent a chain-like alkylene group, -O-, -CO-, or a group formed by combining two or more selected from the group consisting of a chain-like alkylene group, -O-, -CO-, and -$NR^N$-. $R^N$ represents a hydrogen atom or a substituent. The details of $R^N$ are as described above.

The definition and suitable aspect of the group represented by $Z^{a2}$ are the same as the definition and suitable aspect of the group represented by $Z^{a1}$.

In Formula (A2), $Y^{a2}$ and $Y^{a3}$ each independently represent an aromatic ring which may have a substituent or an aliphatic ring which may have a substituent.

The definition and suitable aspect of the group represented by each of $Y^{a2}$ and $Y^{a3}$ are the same as the definition and suitable aspect of the group represented by $Y^{a1}$.

In Formula (A2), r's each independently represent an integer of 0 or more. r is preferably an integer of 0 to 3, and more preferably 0 or 1.

In a case where r is 0, $Y^{a3}$ has the same definition as $Y^{a1}$ in Formula (A1), and in a case where r is an integer of 1 or more, $Y^{a2}$ bonded to $Z^{a1}$ has the same definition as $Y^{a1}$ in Formula (A1).

In Formula (A2), $T^{a1}$ represents a monovalent substituent T having a siloxane structure containing three or more silicon atoms. In this regard, in the substituent T, a moiety bonded to a group represented by $Y^{a3}$ is -O-, -CO-, -$NR^N$-, -S-, or a group formed by combining these groups.

$R^N$ represents a hydrogen atom or a substituent. The details of $R^N$ are as described above.

The substituent T preferably has the above-mentioned substituent S as the siloxane structure containing three or more silicon atoms.

In the substituent T, the moiety bonded to the group represented by $Y^{a3}$ is preferably -O-, -CO-, -NH-, or a group formed by combining these groups, more preferably -CO-O-, -O-CO-O-, -NH-CO-O-, or -CO-O-NH-, and still more preferably -CO-O- or -O-CO-O-, from the viewpoint that the effect of the present invention is more excellent.

In addition, in the substituent T, it is also preferable that the moiety bonded to the group represented by $Y^{a3}$ is -CO-O- or -O-, from the viewpoint that the alignment unevenness suppression performance is more excellent.

In the substituent T, the moiety bonded to the group represented by $Y^{a3}$ is intended to refer to a moiety between the group represented by $Y^{a3}$ and a linking group (for example, a hydrocarbon group) different from -O-, -CO-, -$NR^N$-, and -S- from the bonding position with the group represented by $Y^{a3}$ in the substituent T.

Examples of the substituent T include a group represented by $\text{-}Z^{T1}\text{-}L^{T1}\text{-}(X^{T1})_{m3}$.

$Z^{T1}$ is a moiety that is bonded to a structure substituted by the substituent T in the substituent T (specifically, for example, an aromatic ring of a group represented by $Y^{a3}$ in Formula (A2) or a group represented by $B^{a1}$ in Formula (A3)),

and represents -O-, -CO-, $-NR^N-$, -S-, or a group formed by combining these groups.

$Z^{T1}$ is preferably -O-, -CO-, -NH-, or a group formed by combining these groups, more preferably -CO-O-, -O-CO-O-, -NH-CO-O-, or -CO-O-NH-, and still more preferably -CO-O- or -O-CO-O-. In addition, $Z^{T1}$ is also preferably -CO-O- or -O-.

$L^{T1}$ represents an (m3+1)-valent aliphatic hydrocarbon group.

At least one carbon atom of the (m3+1)-valent aliphatic hydrocarbon group may be substituted with $-NR^N-$, -O-, -S-, -CO-, -CS-, -SO-, or $-SO_2-$. In this regard, the carbon atom adjacent to $Z^{T1}$ is not substituted.

The aliphatic hydrocarbon group is preferably chain-like, and more preferably linear.

The number of carbon atoms in the aliphatic hydrocarbon group is preferably 1 to 10, more preferably 1 to 6, and still more preferably 2 to 4, from the viewpoint that the effect of the present invention is more excellent.

$X^{T1}$ represents the above-mentioned substituent S and is more preferably a group represented by Formula (C-2) or a group represented by Formula (C-3), and still more preferably a group represented by Formula (C-3).

m3 represents an integer of 1 or more and is preferably an integer of 1 to 3, more preferably an integer of 1 or 2, and still more preferably 1.

In Formula (A2), m1 represents an integer of 1 or more.

m1 is preferably an integer of 1 to 6, more preferably an integer of 1 to 3, and still more preferably 1 or 2.

In Formula (A3), $Z^{a3}$'s each independently represent a chain-like alkylene group, -O-, -CO-, or a group formed by combining two or more selected from the group consisting of a chain-like alkylene group, -O-, -CO-, and $-NR^N-$. $R^N$ represents a hydrogen atom or a substituent. The details of $R^N$ are as described above.

The definition and suitable aspect of the group represented by $Z^{a3}$ are the same as the definition and suitable aspect of the group represented by $Z^{a1}$.

In Formula (A3), $B^{a1}$ represents a monovalent aromatic ring group in which one or more monovalent substituents T each having a siloxane structure containing three or more silicon atoms are substituted. In this regard, in the substituent T, a moiety bonded to the aromatic ring constituting the aromatic ring group is -O-, -CO-, $-NR^N-$, -S-, or a group formed by combining these groups.

The aromatic ring constituting the monovalent aromatic ring group represented by $B^{a1}$ is preferably a monocyclic ring or a fused ring, and more preferably a monocyclic ring.

The aromatic ring may be either an aromatic hydrocarbon ring or an aromatic heterocyclic ring and is preferably an aromatic hydrocarbon ring. Examples of the aromatic hydrocarbon ring and the aromatic heterocyclic ring are as exemplified as the aromatic ring represented by A described above, and above all, a benzene ring is preferable.

The definition and suitable aspect of the substituent T contained in the aromatic ring group represented by $B^{a1}$ are the same as those of the substituent T in Formula (A2). The number of substituents T substituted on the aromatic ring group represented by $B^{a1}$ is 1 or more, preferably 1 to 6, more preferably 1 to 3, and still more preferably 1 or 2.

The aromatic ring may have a substituent different from the substituent T. Examples of the substituent different from the substituent T include a substituent not containing a silicon atom, and more specific examples thereof include an alkyl group which may have a halogen atom, an alkyl ester group, an acyl group, an alkoxy group, an alkylthio group, an alkyloxycarbonyl group, a carbamoyl group, an acylamino group, a halogen atom, a cyano group, and a nitro group. The substituent different from the substituent T is preferably an alkyl group, an alkyl ester group, an alkoxy group, or an acyl group, more preferably a linear alkyl group having 1 to 4 carbon atoms, a methyl ester group, a methoxy group, or an acetyl group, and still more preferably a methyl group, an ethyl group, a methoxy group, or a methyl ester group.

The moiety where the substituent T is bonded to the aromatic ring constituting the aromatic ring group represented by $B^{a1}$ (for example, the group represented by $Z^{T1}$ in the group represented by $-Z^{T1}-L^{T1}-(X^{T1})_{m3}$) is preferably -O-, -CO-, -NH-, or a group formed by combining these groups, more preferably -CO-O-, -O-CO-O-, -NH-CO-O-, or -CO-O-NH-, and still more preferably -CO-O- or -O-CO-O-, from the viewpoint that the effect of the present invention is more excellent. In addition, the above-mentioned moiety is also preferably -CO-O- or -O-, from the viewpoint that the alignment unevenness suppressing performance is more excellent.

Examples of $B^{a1}$ include a group represented by $-Y^{a4}-(T^{a1})_{m4}$.

$Y^{a4}$ represents an aromatic ring which may have a substituent.

$T^{a1}$ represents a substituent T. In this regard, in the substituent T, a moiety bonded to $Y^{a4}$ is -O-, -CO-, $-NR^N-$, -S-, or a group formed by combining these groups.

m4 represents an integer of 1 or more and is preferably 1 to 6, more preferably 1 to 3, and still more preferably 1 or 2.

In Formula (A3), m2 represents an integer of 2 or more.

m2 is preferably an integer of 2 to 6, more preferably 2 or 3, and still more preferably 2.

Examples of the compound A include the following compounds.

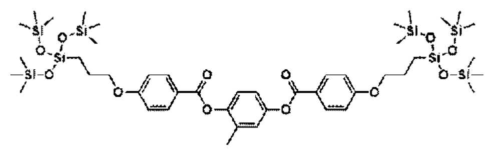

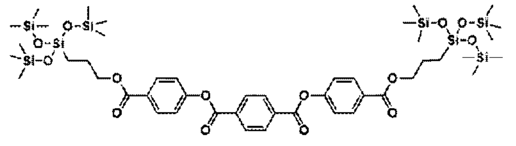

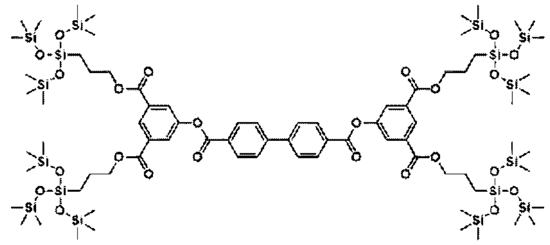

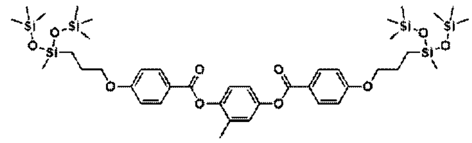

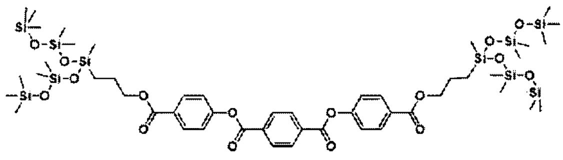

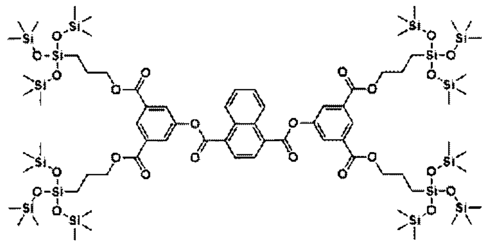

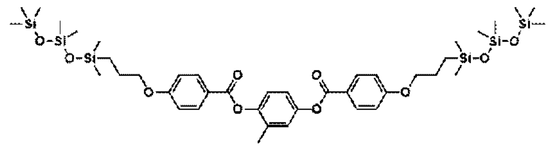

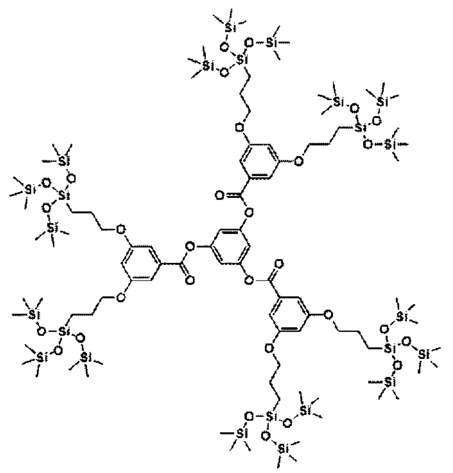

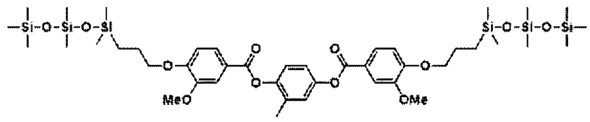

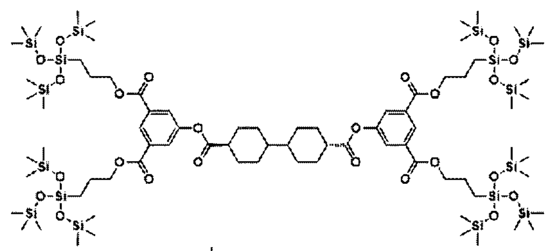

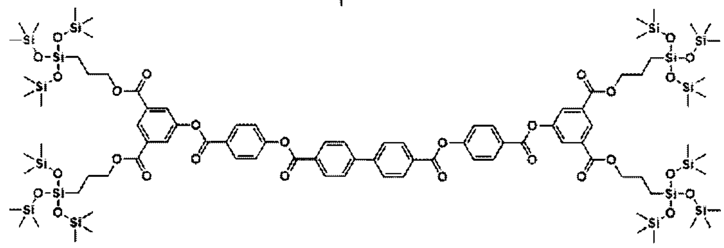

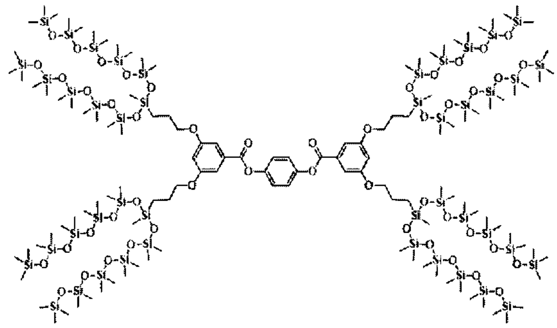

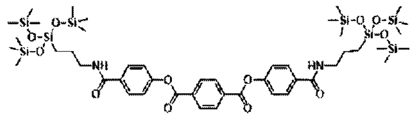

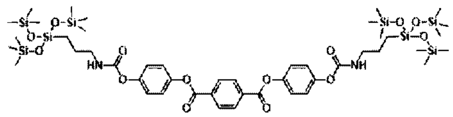

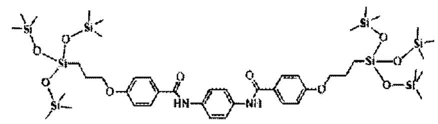

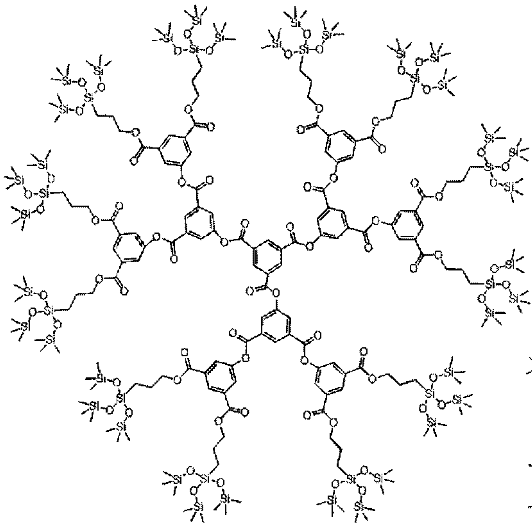

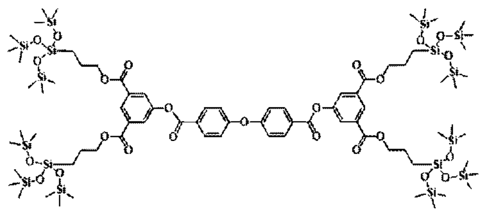

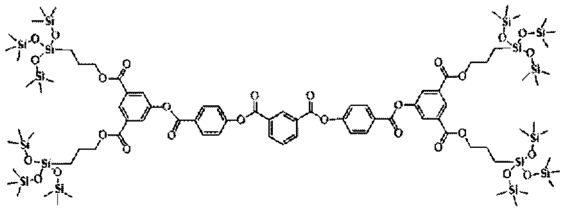

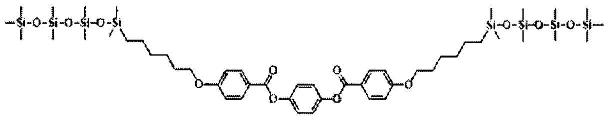

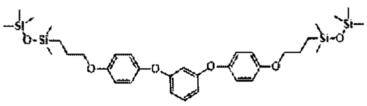

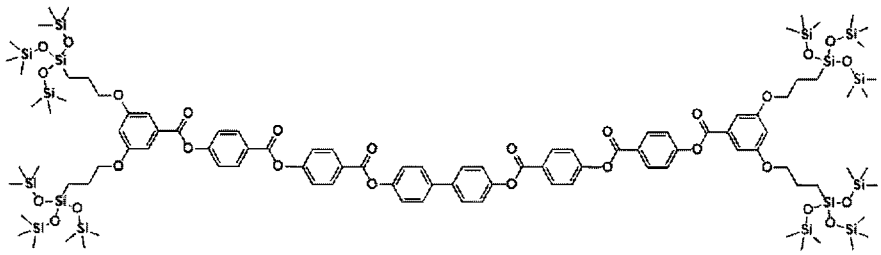

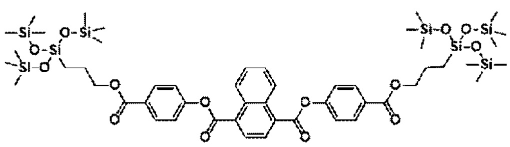

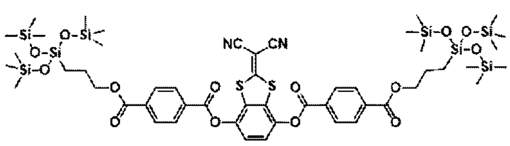

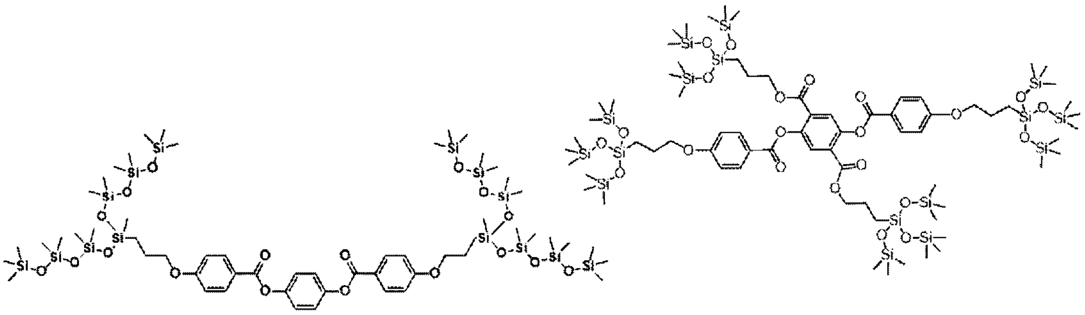

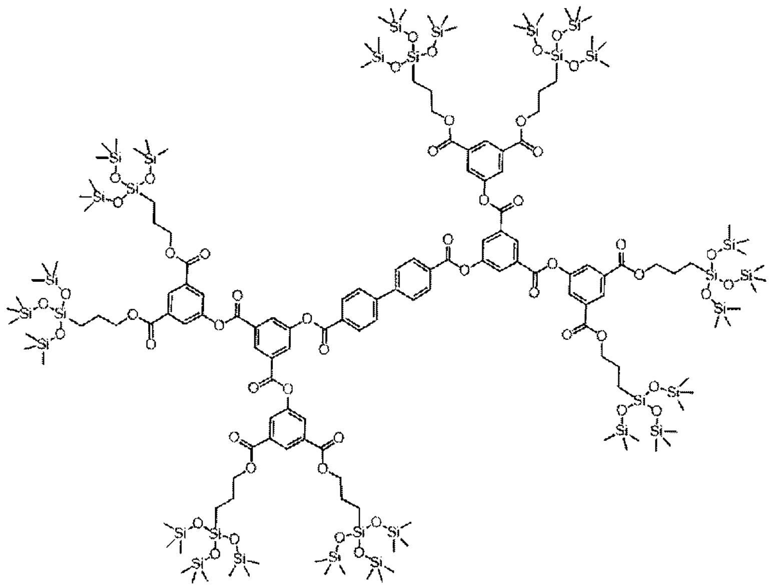

<Compound B>

The compound B satisfies Requirement (b1) to Requirement (b4).

(b1) The value obtained by dividing the total number of methyl groups bonded to silicon atoms in the molecule by the molecular weight of the compound is 0.0140 or more.
(b2) The compound B has two or more groups represented by $-L^{b1}-X^{b1}$.

$L^{b1}$'s each independently represent an alkylene group which may have a heteroatom or -O-.
$X^{b1}$ represents a monovalent group selected from the group consisting of groups represented by Formula (C-1) to Formula (C-3).

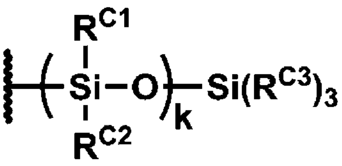

(C-1)

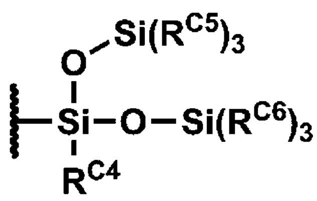

(C-2)

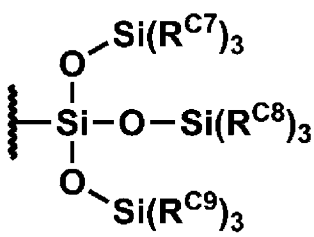

(C-3)

In Formula (C-1), $R^{C1}$ to $R^{C3}$ each independently represent an alkyl group having 1 to 10 carbon atoms. k represents an integer of 2 to 20.
In Formula (C-2), $R^{C4}$ represents an alkyl group having 1 to 10 carbon atoms. $R^{C5}$ and $R^{C6}$ each independently

represent an alkyl group having 1 to 10 carbon atoms or a group represented by Formula (C-1X).

In Formula (C-3), $R^{C7}$ to $R^{C9}$ each independently represent an alkyl group having 1 to 10 carbon atoms or a group represented by Formula (C-1X).

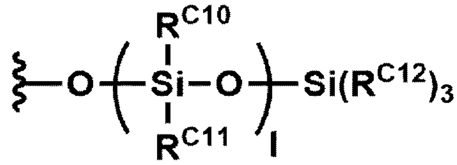

(C-1X)

In Formula (C-1X), $R^{C10}$ to $R^{C12}$ each independently represent an alkyl group having 1 to 10 carbon atoms. 1 represents an integer of 0 to 20.

(b3) The compound B has a partial structure represented by $*-(Z^{b1}-Y^{b1})_s-W^{b1}$.

**[0143]** * represents a bonding position.

$Z^{b1}$'s each independently represent an alkylene group, -O-, -CO-, $-NR^N-$, or a group formed by combining these groups. $R^N$ represents a hydrogen atom or a substituent.

$Y^{b1}$'s each independently represent an aromatic ring which may have a substituent or an aliphatic ring which may have a substituent.

$W^{b1}$ represents a hydrogen atom or a substituent which does not contain a silicon atom.

s represents an integer of 1 or more.

(b4) The compound B has a molecular weight of 500 to 8000.

Hereinafter, each requirement will be described in more detail.

(Requirement (b1))

(b1) The value obtained by dividing the total number of methyl groups bonded to silicon atoms in the molecule by the molecular weight of the compound is 0.0140 or more.

In a case where the value obtained by dividing the total number of methyl groups bonded to silicon atoms by the molecular weight of the compound is less than 0.0140, the degree of uneven distribution of the silicon-containing compound on the surface of the coating film is low, and the alignment unevenness and the visible unevenness are poor, which is not preferable.

The calculation method of the value obtained by dividing the total number of methyl groups bonded to silicon atoms by the molecular weight of the compound is the same as the calculation method of the value obtained by dividing the total number of methyl groups bonded to silicon atoms by the molecular weight of the compound in Requirement (a1) of the compound A.

In the compound B, the value obtained by dividing the total number of methyl groups bonded to silicon atoms by the molecular weight of the compound is preferably 0.0140 to 0.0280, more preferably 0.0140 to 0.0250, still more preferably 0.0150 to 0.0250, and particularly preferably 0.0150 to 0.0200, from the viewpoint that the effect of the present invention is more excellent.

(Requirement (b2))

(b2) The compound B has two or more groups represented by $-L^{b1}-X^{b1}$.

$L^{b1}$'s each independently represent an alkylene group which may have a heteroatom or -O-.

Examples of the heteroatom which may be contained in the alkylene group include an oxygen atom, a nitrogen atom, and a sulfur atom. The alkylene group may have two or more heteroatoms as long as the same heteroatoms are not adjacent to each other.

The alkylene group is preferably a chain-like alkylene group, and more preferably a linear alkylene group.

The number of carbon atoms in the alkylene group is preferably 1 to 10, more preferably 1 to 6, and still more preferably 2 to 4.

$L^{b1}$ is preferably -O- or a chain-like alkylene group having 1 to 6 carbon atoms.

$X^{b1}$ represents a monovalent group selected from the group consisting of groups represented by Formula (C-1) to Formula (C-3) and is preferably a group represented by Formula (C-2) or a group represented by Formula (C-3), and more preferably a group represented by Formula (C-3).

Formula (C-1) to Formula (C-3) are as described above for the compound A.

The number of groups represented by $-L^{b1}-X^{b1}$ contained in the compound B is 2 or more, preferably 2 to 8, more preferably 2 to 6, and still more preferably 2 to 4.

(Requirement (b3))

(b3) The compound B has a partial structure represented by $*-(Z^{b1}-Y^{b1})_s-W^{b1}$ (hereinafter, also referred to as a "partial structure B")

**[0164]** * represents a bonding position.

In the partial structure B, $Z^{b1}$'s each independently represent an alkylene group, -O-, -CO-, $-NR^N-$, or a group formed by combining these groups. $R^N$ represents a hydrogen atom or a substituent. The details of $R^N$ are as described above.

The definition and suitable aspect of the alkylene group in $Z^{b1}$ are the same as those of the alkylene group represented by $Z^{a1}$,

The group represented by $Z^{b1}$ is also preferably a chain-like alkylene group, -O-, -CO-, or a group formed by combining two or more selected from the group consisting of a chain-like alkylene group, -O-, -CO-, and $-NR^N-$.

Above all, the group represented by $Z^{b1}$ is preferably a chain-like alkylene group having 1 to 3 carbon atoms, -O-, -CO-O-, -O-CO-O-, $-NR^N-CO-$, $-NR^N-CO-O-$, $-CO-NR^N-$, or $-NR^N-CO-NR^N-$, more preferably a chain-like alkylene group having 1 to 3 carbon atoms, -O-, -CO-, -CO-NH-, -CO-O-, or -NH-CO-O-, still more preferably -O-, -CO-, -CO-O-, or -NH-CO-O-, and particularly preferably -O- or -CO-O-.

In the partial structure B, $Y^{b1}$'s each independently represent an aromatic ring which may have a substituent or an aliphatic ring which may have a substituent.

The definitions and suitable aspects of the aromatic ring and the aliphatic ring represented by $Y^{b1}$ are the same as the definitions and suitable aspects of the aromatic ring and the aliphatic ring in the group represented by $Y^{a1}$.

It is also preferable that the substituent contained in the aromatic ring and the aliphatic ring contains no silicon atom.

Examples of the substituent include an alkyl group which may have a halogen atom, an alkyl ester group, an acyl group, an alkoxy group, an alkylthio group, an alkyloxycarbonyl group, a carbamoyl group, an acylamino group, a halogen atom, a cyano group, and a nitro group, among which an alkyl group, an alkyl ester group, an alkoxy group, or an acyl group is preferable, a linear alkyl group having 1 to 4 carbon atoms, a methyl ester group, a methoxy group, or an acetyl group is more preferable, and a methyl group, an ethyl group, a methoxy group, or a methyl ester group is still more preferable.

It is also preferable that the substituent contained in the aromatic ring and aliphatic ring does not include a ring group (an aromatic ring group or an aliphatic ring group).

In the partial structure B, $W^{b1}$ represents a hydrogen atom or a substituent which does not contain a silicon atom.

Examples of the substituent which does not contain a silicon atom include an aryl group which may have an alkyl group, a heteroaryl group which may have an alkyl group, an alkyl group which may have a halogen atom, an alkyl ester group, an acyl group, an alkoxy group, an alkylthio group, an alkyloxycarbonyl group, a carbamoyl group, an acylamino group, a halogen atom, a cyano group, and a nitro group, among which an aryl group, an alkyl group, an alkyl ester group, an alkoxy group, or an acyl group is preferable, a phenyl group, a naphthyl group, a linear alkyl group having 1 to 4 carbon atoms, a methyl ester group, a methoxy group, or an acetyl group is more preferable, and a phenyl group, a methyl group, an ethyl group, a methoxy group, or a methyl ester group is still more preferable.

In the partial structure B, s represents an integer of 1 or more.

s is preferably an integer of 1 to 8, more preferably an integer of 1 to 6, and still more preferably an integer of 1 to 4.

(Requirement (b4))

(b4) The compound B has a molecular weight of 500 to 8000.

In a case where the molecular weight is less than 500, the degree of uneven distribution of the silicon-containing compound on the surface is low, and the alignment unevenness and the visible unevenness are poor, which is not preferable. In addition, in a case where the molecular weight is more than 8000, the silicon-containing compound is likely to inhibit the alignment of the liquid crystal compound, and the alignment unevenness and the visible unevenness are poor, which is not preferable.

The molecular weight of the compound B is preferably 800 to 4000, and more preferably 800 to 1400, from the viewpoint that the effect of the present invention is more excellent.

In addition, the compound B preferably has two or more ring structures, and from the viewpoint that the alignment unevenness suppression performance is more excellent, the compound B more preferably has three or more ring structures. The upper limit of the number of ring structures is not particularly limited, and is often 10 or less and preferably 6 or less. The ring structure includes an aromatic ring and an aliphatic ring.

The compound B is preferably a compound represented by Formula (B1).

Formula (B1) $B^{b1}\text{-}(Z^{b1}\text{-}Y^{b1})_s\text{-}W^{b1}$

In Formula (B1), $Z^{b1}$, $Y^{b1}$, $W^{b1}$, and s have the same definitions as $Z^{b1}$, $Y^{b1}$, $W^{b1}$, and s in the above-mentioned partial structure B.

In Formula (B1), $B^{b1}$ represents an aromatic ring which is substituted with two or more groups represented by $-L^{b1}-X^{b1}$, or which is substituted with one or more groups having two or more groups represented by $-L^{b1}-X^{b1}$.

The aromatic ring constituting the monovalent aromatic ring group represented by $B^{b1}$ is preferably a monocyclic ring or a fused ring, and more preferably a monocyclic ring.

The aromatic ring may be either an aromatic hydrocarbon ring or an aromatic heterocyclic ring and is preferably an aromatic hydrocarbon ring. Examples of the aromatic hydrocarbon ring and the aromatic heterocyclic ring are as exemplified as the aromatic ring represented by A described above, and a benzene ring is preferable.

The group represented by $-L^{b1}-X^{b1}$ is as described above in Requirement (b2).

The number of groups represented by $-L^{b1}-X^{b1}$ in $B^{b1}$ is 2 or more, preferably 2 to 6, and more preferably 2 to 4. The number of groups represented by $-L^{b1}-X^{b1}$ is the total number of groups represented by $-L^{b1}-X^{b1}$ directly substituted on the aromatic ring and groups represented by $-L^{b1}-X^{b1}$ contained in the group having two or more groups represented by $-L^{b1}-X^{b1}$.

Examples of the group having two or more groups represented by $-L^{b1}-X^{b1}$ include a group represented by $-Z^{b2}-L^{b2}-(L^{b1}-X^{b1})_{m5}$ and a group represented by $-Z^{b2}-L^{b3}-SiR^{Si}_{3-w}(L^{b1}-X^{b1})_w$.

$Z^{b2}$ represents a single bond, or -O-, -CO-, $-NR^N-$, -S-, or a group formed by combining these groups. $R^N$ represents a hydrogen atom or a substituent. The details of $R^N$ are as described above.

$Z^{b2}$ is preferably -O-, -CO-, -NH-, or a group formed by combining these groups, more preferably -O-, -CO-O-, -O-CO-O-, -NH-CO-O-, or -CO-O-NH-, and still more preferably -CO-O- or -O-CO-O-.

In addition, $Z^{b2}$ is also preferably -CO-O- or -O-, from the viewpoint that the alignment unevenness suppression performance is more excellent.

$L^{b2}$ represents an (m5+1)-valent aliphatic hydrocarbon group.

At least one carbon atom of the (m5+1)-valent aliphatic hydrocarbon group may be substituted with $-NR^N-$, -O-, -S-, -CO-, -CS-, -SO-, or $-SO_2-$. In this regard, the carbon atoms adjacent to $Z^{b2}$ and $L^{b1}$ are not substituted.

The aliphatic hydrocarbon group is preferably chain-like, and more preferably linear.

The number of carbon atoms in the aliphatic hydrocarbon group is preferably 1 to 10, and more preferably 1 to 6.

m5 represents an integer of 2 or more and is preferably 2 to 4, more preferably 2 or 3, and still more preferably 2.

$L^{b3}$ represents a divalent aliphatic hydrocarbon group.

At least one carbon atom of the divalent aliphatic hydrocarbon group may be substituted with $-NR^N-$, -O-, -S-, -CO-, -CS-, -SO-, or $-SO_2-$. In this regard, the carbon atom adjacent to $Z^{b2}$ is not substituted.

The aliphatic hydrocarbon group is preferably chain-like, and more preferably linear.

The number of carbon atoms in the aliphatic hydrocarbon group is preferably 1 to 10, more preferably 1 to 6, and still more preferably 2 to 4.

$R^{Si}$'s each independently represent an alkyl group having 1 to 10 carbon atoms which may have a substituent.

The alkyl group having 1 to 10 carbon atoms may be either chain-like or cyclic and is preferably chain-like, and more preferably linear.

The number of carbon atoms in the alkyl group having 1 to 10 carbon atoms is preferably 1 to 6, and more preferably 1 to 3.

w represents 2 or 3.

From the viewpoint that the alignment unevenness suppression performance is more excellent, it is also preferable that, in the group represented by $B^{b1}$, the number of groups represented by $-L^{b1}-X^{b1}$ that are substituted on the aromatic ring is 2 or less, and the number of groups represented by $-L^{b1}-X^{b1}$ in the group having two or more groups represented by $-L^{b1}-X^{b1}$ is 2.

Examples of the compound B include the following compounds.

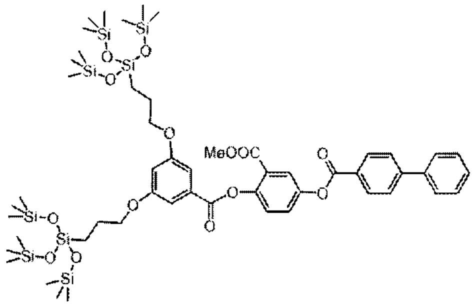

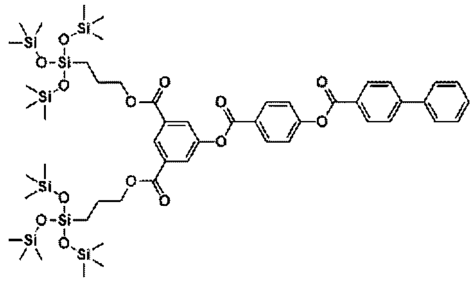

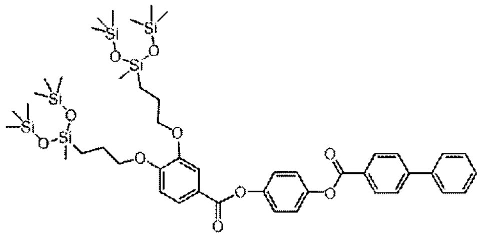

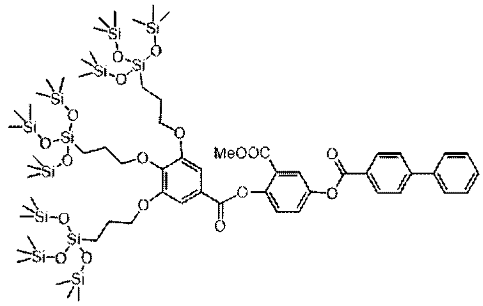

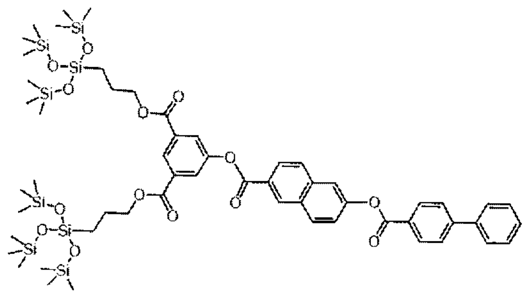

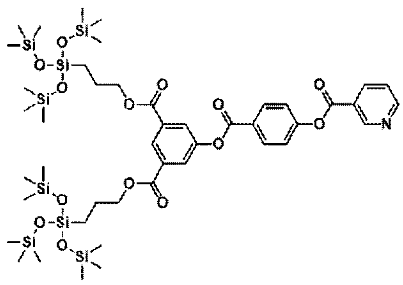

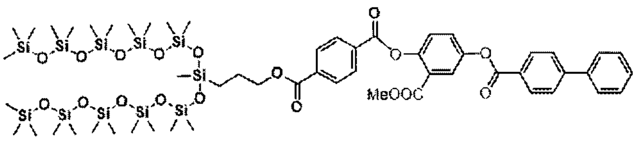

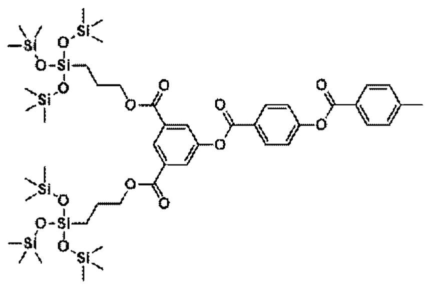

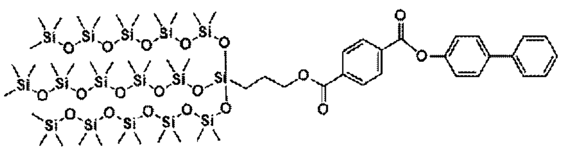

The silicon-containing compounds may be used alone or in combination of two or more thereof. In a case where two or more types of silicon-containing compounds are used in combination, two or more types of either the compound A or the compound B may be used in combination, or the compound A and the compound B may be used in combination.

The content of the silicon-containing compound is preferably 0.01% to 5.0% by mass, and more preferably 0.01% to 1.0% by mass with respect to the total solid content of the composition, from the viewpoint that the effect of the present invention is more excellent.

[Liquid crystal compound]

The composition according to the embodiment of the present invention contains a liquid crystal compound.

The liquid crystal compound is not particularly limited and a known liquid crystal compound can be used. In general, the liquid crystal compound can be classified into a rod-like type compound (rod-like liquid crystal compound) and a disk-like type compound (discotic liquid crystal compound) depending on the shape thereof. Further, the liquid crystal

compound can be classified into a low molecular weight type liquid crystal compound and a polymer type liquid crystal compound. The polymer generally refers to one having a polymerization degree of 100 or more (Polymer Physics-Phase Transition Dynamics, Masao Doi, p. 2, Iwanami Shoten Publishers, 1992).

The liquid crystal compound may be either a rod-like liquid crystal compound or a disk-like liquid crystal compound.

In the composition according to the embodiment of the present invention, two or more types of rod-like liquid crystal compounds, two or more types of disk-like liquid crystal compounds, or a mixture of a rod-like liquid crystal compound and a disk-like liquid crystal compound may be used.

The liquid crystal compound contained in the composition may be either a low molecular weight liquid crystal compound or a polymer liquid crystal compound, or may be a mixture thereof.

The liquid crystal compound is preferably a polymerizable liquid crystal compound, from the viewpoint of alignment properties.

The polymerizable liquid crystal compound is a liquid crystal compound having a polymerizable group, and the alignment state thereof can be immobilized by polymerizing the compound after alignment. In addition, the alignment state of the polymer liquid crystal compound can be immobilized by removing the solvent from the composition after the alignment of the compound and drying the composition.

The polymerizable liquid crystal compound is preferably at least one polymerizable liquid crystal compound selected from the group consisting of a polymerizable rod-like liquid crystal compound and a polymerizable disk-like liquid crystal compound.

The polymerizable group contained in the polymerizable liquid crystal compound is not particularly limited, and is preferably a polymerizable group capable of radical polymerization or cationic polymerization. Examples of the polymerizable group include an acryloyl group, a methacryloyl group, an epoxy group, and a vinyl group.

The rod-like liquid crystal compound is preferably one described in claim 1 of JP1999-513019A (JP-H11-513019A) or paragraphs [0026] to [0098] of JP2005-289980A, and the discotic liquid crystal compound is preferably one described in paragraphs [0020] to [0067] of JP2007-108732A or paragraphs [0013] to [0108] of JP2010-244038A.

A liquid crystal compound having reverse wavelength dispersibility (reverse dispersibility compound) may be used as the liquid crystal compound. In the present specification, the liquid crystal compound having "reverse wavelength dispersibility" refers to a liquid crystal compound in which, in a case where an in-plane retardation (Re) value of a film produced using such a liquid crystal compound is measured at a specific wavelength (visible light range), the Re value is equal to or higher than an increase in measurement wavelength.

The liquid crystal compound having reverse wavelength dispersibility is not particularly limited as long as it can form a layer having reverse wavelength dispersibility, and examples thereof include the compounds represented by General Formula (I) described in JP2008-297210A (particularly, the compounds described in paragraphs [0034] to [0039]), the compounds represented by General Formula (1) described in JP2010-084032A (particularly, the compounds described in paragraphs [0067] to [0073]), the compounds represented by General Formula (1) described in JP2016-081035A (particularly, the compounds described in paragraphs [0043] to [0055]), and the compounds represented by General Formula (II) described in JP2016-053709A (particularly, the compounds described in paragraphs [0036] to

**[0222]** [0043]. Further examples of the liquid crystal compound having reverse wavelength dispersibility include the compounds described in paragraphs [0027] to [0100] of JP2011-006360A, paragraphs [0028] to [0125] of JP2011-006361A, paragraphs [0034] to [0298] of JP2012-207765A, paragraphs [0016] to [0345] of JP2012-077055A, paragraphs

**[0223]** [0017] to [0072] of WO12/141245A, paragraphs [0021] to [0088] of WO12/147904A, paragraphs [0028] to [0115] of WO14/147904A, and paragraphs [0025] to [0056] of WO2021/060427A.

The liquid crystal compounds may be used alone or in combination of two or more thereof.

The content of the liquid crystal compound is preferably 50% to 99.99% by mass, and more preferably 70% to 99% by mass with respect to the total solid content of the composition.

The composition may contain other components in addition to the silicon-containing compound and the liquid crystal compound. Hereinafter, other components that may be contained in the composition will be described.

[Polymerization initiator]

It is preferable that the composition contains a polymerization initiator.

Examples of the polymerization initiator include a photopolymerization initiator and a thermal polymerization initiator, among which a photopolymerization initiator is preferable. A photopolymerization initiator capable of initiating a polymerization reaction upon irradiation with ultraviolet rays is preferable. Examples of the photopolymerization initiator include an alkylphenone compound, an $\alpha$-carbonyl compound, an acyloin ether, an $\alpha$-hydrocarbon-substituted aromatic acyloin compound, a polynuclear quinone compound, a combination of a triarylimidazole dimer with a p-aminophenyl

ketone, an acridine compound, a phenazine compound, an oxadiazole compound, an o-acyl oxime compound, and an acylphosphine oxide compound.

Commercially available products can also be used as the photopolymerization initiator, and examples thereof include IRGACURE 184, IRGACURE 907, IRGACURE 369, IRGACURE 651, IRGACURE 819, IRGACURE OXE-01, and IRGACURE OXE-02 (all manufactured by BASF SE).

The polymerization initiators may be used alone or in combination of two or more thereof.

The content of the polymerization initiator is preferably 0.01% to 30% by mass, and more preferably 0.1% to 15% by mass with respect to the total solid content of the composition.

[Solvent]

The composition preferably contains a solvent, from the viewpoint of workability for forming a coating film or the like.

Examples of the solvent include organic solvents such as ketones (for example, acetone, 2-butanone, methyl ethyl ketone, methyl isobutyl ketone, cyclopentanone, and cyclohexanone), ethers (for example, dioxane, tetrahydrofuran, tetrahydropyran, dioxolane, tetrahydrofurfuryl alcohol, and cyclopentyl methyl ether), aliphatic hydrocarbons (for example, hexane), alicyclic hydrocarbons (for example, cyclohexane), aromatic hydrocarbons (for example, benzene, toluene, xylene, and trimethylbenzene), halogenated carbons (for example, dichloromethane, trichloromethane (chloroform), dichloroethane, dichlorobenzene, and chlorotoluene), esters (for example, methyl acetate, ethyl acetate, ethyl propionate, butyl acetate, and diethyl carbonate), alcohols (for example, ethanol, isopropanol, butanol, and cyclohexanol), cellosolves (for example, methyl cellosolve, ethyl cellosolve, and 1,2-dimethoxyethane), cellosolve acetates, sulfoxides (for example, dimethyl sulfoxide), amides (for example, dimethylformamide, dimethylacetamide, N-methylpyrrolidone, N-ethylpyrrolidone, and 1,3-dimethyl-2-imidazolidinone), and heterocyclic compounds (for example, pyridine), and water.

The solvents may be used alone or in combination of two or more thereof.

In a case where the composition contains a solvent, the content of the solvent in the composition is preferably an amount such that the concentration of solid contents is 0.5% to 30% by mass, and more preferably an amount such that the concentration of solid contents is 1% to 20% by mass.

[Alignment control agent]

The composition may contain an alignment control agent different from the above-mentioned silicon-containing compound, as necessary. The alignment control agent makes it possible to form various alignment states such as homeotropic alignment (vertical alignment), tilt alignment, hybrid alignment, and cholesteric alignment in addition to homogeneous alignment, and also makes it possible to achieve a specific alignment state more uniformly and with more precise control.

For example, a low molecular weight alignment control agent or a high molecular weight alignment control agent can be used as the alignment control agent which accelerates homogeneous alignment.

With regard to the low molecular weight alignment control agent, reference can be made to the descriptions in, for example, paragraphs [0009] to [0083] of JP2002-020363A, paragraphs [0111] to [0120] of JP2006-106662A, and paragraphs [0021] to [0029] of JP2012-211306A, the contents of which are incorporated herein by reference.

With regard to the high molecular weight alignment control agent, reference can be made to the descriptions in, for example, paragraphs [0021] to [0057] of JP2004-198511A and paragraphs [0121] to [0167] of JP2006-106662A, the contents of which are incorporated herein by reference.

Examples of the alignment control agent that forms or accelerates homeotropic alignment include a boronic acid compound and an onium salt compound, and specifically, reference can be made to the compounds described in, for example, paragraphs [0023] to [0032] of JP2008-225281A, paragraphs [0052] to [0058] of JP2012-208397A, paragraphs [0024] to [0055] of JP2008-026730A, and paragraphs [0043] to [0055] of JP2016-193869A, the contents of which are incorporated herein by reference.

The composition may contain a chiral agent.

The chiral agent (optically active compound) has a function of inducing a helical structure of a cholesteric liquid crystalline phase. The chiral agent may be selected according to the purpose, since the twisted direction or helical pitch of the helix induced varies depending on the compound.

The chiral agent is not particularly limited, and for example, the compounds described in (Liquid Crystal Device Handbook, Chapter 3, Section 4-3, chiral agents for twisted nematic (TN) or super twisted nematic (STN), p. 199, edited by the 142nd Committee of the Japan Society for the Promotion of Science, 1989), isosorbide, isomannide derivatives, and the like can be used.

The chiral agent generally contains an asymmetric carbon atom, but an axially chiral compound or planar chiral compound that does not contain an asymmetric carbon atom can also be used as the chiral agent. Examples of the axially chiral compound or planar chiral compound include binaphthyl, helicene, paracyclophane, and derivatives thereof.
In addition, the chiral agent may have a polymerizable group. The polymerizable group contained in a polymerizable chiral agent is preferably the same group as the polymerizable group contained in the polymerizable liquid crystal compound. In addition, the chiral agent itself may be a liquid crystal compound.

The chiral agent may have a photoisomerization moiety.

The photoisomerization moiety is preferably a cinnamoyl moiety, a chalcone moiety, an azobenzene moiety, or a stilbene moiety, and more preferably a cinnamoyl moiety, a chalcone moiety, or a stilbene moiety.
The compounds described in JP2002-080478A, JP2002-080851A, JP2002-179668A, JP2002-179669A, JP2002-179670A, JP2002-179681A, JP2002-179682A, JP2002-338575A, JP2002-338668A, JP2003-313189A, JP2003-313292A, and the like can be used as the chiral agent.
The chiral agents may be used alone or in combination of two or more thereof. In a case where a film having a plurality of alignment states in one layer is formed, it is preferable that two or more types of chiral agents including a chiral agent A and a chiral agent B that induces a helix in a direction opposite to that of the chiral agent A are used as the chiral agent. For example, in a case where the helix induced by the chiral agent A is right-handed, the helix induced by the chiral agent B is left-handed.
The content of the chiral agent is preferably 0.01% to 15% by mass, and more preferably 1.0% to 10% by mass with respect to the content of the liquid crystal compound.

[Other additives]

The composition may contain components other than the above-mentioned components.
Examples of the other components include an antioxidant, an ultraviolet absorber, a sensitizer, a stabilizer, a plasticizer, a chain transfer agent, a polymerization inhibitor, a tilt angle control agent, a thickener, a flame retardant, a surfactant, a dispersant, and a coloring material such as a dye or a pigment.

[Optically anisotropic film]

An optically anisotropic film is obtained using the composition according to the embodiment of the present invention. In other words, the composition according to the embodiment of the present invention is suitably used for the formation of an optically anisotropic film.
The liquid crystal compound in the optically anisotropic film may be in a state exhibiting liquid crystallinity or may be a film in which the alignment state is immobilized (liquid crystal cured film), and is preferably a film in which the alignment state is immobilized. In the liquid crystal cured film, the liquid crystal compound may no longer exhibit liquid crystallinity.
The alignment state of the liquid crystal compound in the optically anisotropic film may be any state of horizontal alignment, vertical alignment, tilt alignment, or twisted alignment.
In addition, a plurality of alignment states may be provided in a film as in the liquid crystal cured layer described in WO2021/033640A, having, along a thickness direction, a first region in which an alignment state of a liquid crystal compound twist-aligned along a helical axis extending along a thickness direction is immobilized and a second region in which an alignment state of a liquid crystal compound homogeneously aligned is immobilized.
In the present specification, the "horizontal alignment" refers to an alignment state where a main surface of the optically anisotropic film (or a surface of a member in a case where the optically anisotropic film is formed on a member such as a support or an alignment film) and a major axis direction of the liquid crystal compound are parallel to each other. It is not required for the main surface of the optically anisotropic film and the major axis direction of the liquid crystal compound to be strictly parallel to each other, and in the present specification, the horizontal alignment means that alignment is made such that the angle formed between the major axis direction of the liquid crystal compound and the main surface of the specific film is less than 10°.
Examples of the optically anisotropic film include an A-plate, a C-plate, and an optically anisotropic film having, along a thickness direction, a first region in which an alignment state of a liquid crystal compound twist-aligned along a helical axis extending along a thickness direction is immobilized, and a second region in which an alignment state of a liquid crystal compound homogeneously aligned is immobilized (hereinafter, this aspect is abbreviated as an "optically anisotropic film A").
There are two types of A-plates, that is, a positive A-plate (A-plate which is positive) and a negative A-plate (A-plate which is negative). The positive A-plate satisfies a relationship of Expression (A1) and the negative A-plate satisfies a relationship of Expression (A2) in a case where a refractive index in an in-plane slow axis direction of a film (in a direction in

which an in-plane refractive index is maximum) is defined as nx, a refractive index in an in-plane direction orthogonal to the in-plane slow axis is defined as ny, and a refractive index in a thickness direction is defined as nz. The positive A-plate has an Rth showing a positive value and the negative A-plate has an Rth showing a negative value.

$$\text{Expression (A1)} \qquad nx > ny \approx nz$$

$$\text{Expression (A2)} \qquad ny < nx \approx nz$$

There are two types of C-plates, that is, a positive C-plate (C-plate which is positive) and a negative C-plate (C-plate which is negative). The positive C-plate satisfies a relationship of Expression (C1) and the negative C-plate satisfies a relationship of Expression (C2). The positive C-plate has an Rth showing a negative value and the negative C-plate has an Rth showing a positive value.

$$\text{Expression (C1)} \qquad nz > nx \approx ny$$

$$\text{Expression (C2)} \qquad nz < nx \approx ny$$

The symbol "≈" encompasses not only a case where the both sides are completely the same as each other but also a case where the both sides are substantially the same as each other. The expression "substantially the same" means that, for example, a case where (ny - nz) × d (in which d is a thickness of a film) is -10 to 10 nm and preferably -5 to 5 nm is also included in "ny ≈ nz"; and a case where (nx - nz) x d is -10 to 10 nm and preferably -5 to 5 nm is also included in "nx ≈ nz".

The Re and Rth may be appropriately adjusted depending on the application of the film according to the embodiment of the present invention. Re and Rth can be adjusted depending on the thickness of the optically anisotropic film and the type of the liquid crystal compound contained therein.

In a case where the alignment direction of the liquid crystal compound is twist-aligned along the helical axis (particularly in a case where the cholesteric liquid crystalline phase is immobilized), the twisted angle of the liquid crystal compound (change in angle from one surface to the other surface of the cured film) can be adjusted according to the purpose.

The pitch of the helical structure varies depending on the type of a chiral agent to be added to the composition and the addition concentration of the chiral agent, and an alignment state having a desired pitch can be obtained by adjusting any one or more of the above-mentioned conditions. As the method for measuring the helical turning direction and helical pitch, the methods described in "Introduction to Experimental Liquid Crystal Chemistry" (edited by the Japanese Liquid Crystal Society, published by Sigma Publishing Co., Ltd., 2007, p. 46) and "Liquid Crystal Handbook" (edited by the Liquid Crystal Handbook Editing Committee, published by Maruzen Publishing Co., Ltd., p. 196) can be used.

The thickness of the optically anisotropic film may be appropriately adjusted depending on the application, and is preferably 0.1 to 50 μm, more preferably 0.3 to 20 μm, and still more preferably 1 to 10 μm.

[Method for forming optically anisotropic film]

Examples of the method for forming an optically anisotropic film include a method in which a coating film is formed using the composition according to the embodiment of the present invention, a liquid crystal compound contained in the coating film is brought into a desired alignment state, and then the alignment state is immobilized by polymerization.

The alignment treatment of bringing a liquid crystal compound into a desired alignment state is not particularly limited, and examples thereof include a method of applying an electric field to a coating film and a method of heating a coating film, among which a method of heating a coating film is preferable. The heating temperature in the heating may be selected depending on the type of the liquid crystal compound to be contained. The alignment treatment may be carried out at the same time as the removal of the solvent. In a case where heating is carried out as the alignment treatment, it is also preferable to maintain the liquid crystal compound at a temperature lower than that in the alignment treatment in order to stabilize the alignment direction of the liquid crystal compound.

The polymerization treatment is not particularly limited, and a method of irradiation with ultraviolet rays is preferable. It is also preferable that the irradiation with ultraviolet rays is carried out in an environment with a low oxygen concentration. In the present specification, "ultraviolet rays" refers to electromagnetic waves mainly containing electromagnetic waves having a wavelength of 200 to 400 nm, and preferably mainly containing electromagnetic waves having a wavelength of 300 to 400 nm. The light source of ultraviolet rays is not particularly limited, and any known light source can be used. The irradiation with ultraviolet rays having any wavelength range may be carried out using a filter or the like. Examples of the light source of ultraviolet rays include a high-pressure mercury lamp, a metal halide lamp, and a light

emitting diode (LED). In addition, the polymerization treatment may be carried out under heating conditions in order to accelerate the polymerization reaction.

[Optical film]

The optically anisotropic film formed of the composition according to the embodiment of the present invention is also preferably used in an optical film. In other words, the optically anisotropic film can be used as an optical film in combination with other layers.
The optical film may be, for example, an optical film having a support, an alignment film, and an optically anisotropic layer in this order. The support and the alignment film are both optional members.

[Optically anisotropic layer]

The optically anisotropic layer may be the above-mentioned optically anisotropic film or may be a layer in which the above-mentioned optically anisotropic film is combined with another liquid crystal film. That is, the above-mentioned optically anisotropic film may be formed on a surface of another liquid crystal layer, or another liquid crystal layer may be formed on a surface of the above-mentioned optically anisotropic film. For example, in a case where a polarizing plate which will be described later is used as a circular polarization plate or in a case where an optical film is used as an optical compensation film of an in-plane-switching (IPS) type or fringe-field-switching (FFS) type liquid crystal display device, the optically anisotropic layer is preferably a laminate of a positive A-plate and a positive C-plate.
The other liquid crystal layer may be a liquid crystal layer formed of the composition according to the embodiment of the present invention, or may be a liquid crystal layer formed by immobilizing a composition containing a liquid crystal compound and, as necessary, optional components (for example, a polymerization initiator, a dichroic substance, and a leveling agent) in a predetermined alignment state.
In a case where the above-mentioned optically anisotropic film is laminated with another liquid crystal layer, it is also preferable that the optically anisotropic film is laminated through an adhesion layer. Examples of the adhesion layer include known adhesive layers and pressure sensitive adhesive layers.
Examples of the material for forming the pressure sensitive adhesive layer include a member formed of a substance in which a ratio ($\tan\delta = G''/G'$) between a storage elastic modulus G' and a loss elastic modulus G", each measured with a dynamic viscoelastometer, is 0.001 to 1.5, in which a so-called pressure sensitive adhesive, a readily creepable substance, and the like are included. Examples of the pressure sensitive adhesive include a polyvinyl alcohol-based pressure sensitive adhesive.
The adhesive layer is preferably a curable adhesive composition which is cured by irradiation with active energy rays or by heating. Examples of the curable adhesive composition include a curable adhesive composition containing a cationically polymerizable compound and a curable adhesive composition containing a radically polymerizable compound.
The thickness of the adhesive layer is preferably 0.01 to 20 μm, more preferably 0.01 to 10 μm, and still more preferably 0.05 to 5 μm. In a case where the thickness of the adhesive layer is within this range, lifting or peeling is less likely to occur between the protective layer or the liquid crystal cured layer and the polarizer, which are laminated. In addition, from the viewpoint of being able to suppress the generation of air bubbles, the thickness of the adhesive layer is preferably 0.4 μm or more.
With regard to the adhesive layer, reference can be made to, for example, the description in paragraphs [0062] to [0080] of JP2016-035579A, the contents of which are incorporated herein by reference.
In addition, the above-mentioned optically anisotropic film may be peeled off from the support and used alone as an optical film.

[Support]

The support is a substrate for forming a film.
The support is preferably transparent. Specifically, the support preferably has a light transmittance of 80% or more.
Examples of the support include a glass substrate and a polymer film. Examples of the material for the polymer film include cellulose-based polymers; acrylic polymers having an acrylic acid ester polymer such as polymethyl methacrylate and a lactone ring-containing polymer; thermoplastic norbornene-based polymers; polycarbonate-based polymers; polyester-based polymers such as polyethylene terephthalate and polyethylene naphthalate; styrene-based polymers such as polystyrene and an acrylonitrile-styrene copolymer (AS resin); polyolefin-based polymers such as polyethylene, polypropylene, and an ethylene-propylene copolymer; vinyl chloride-based polymers; amide-based polymers such as nylon and aromatic polyamide; imide-based polymers; sulfone-based polymers; polyether sulfone-based

polymers; polyether ether ketone-based polymers; polyphenylene sulfide-based polymers; vinylidene chloride-based polymers; vinyl alcohol-based polymers; vinyl butyral-based polymers; arylate-based polymers; polyoxymethylene-based polymers; epoxy-based polymers; and polymers made by mixing these polymers.

In addition, an aspect in which a polarizer which will be described later also serves as such a support may be adopted.

The thickness of the support is not particularly limited and is preferably 5 to 100 μm, and more preferably 5 to 50 μm. It is preferable that the support is peelable.

[Alignment film]

In the optical film, it is preferable to provide an alignment film between the support and the optically anisotropic film. An aspect in which the above-mentioned support also serves as the alignment film may be adopted.

The alignment film generally contains a polymer as a main component thereof. The polymer material for the alignment film is described in many publications, and many commercially available products are available.

The polymer material used in the present invention is preferably a polyvinyl alcohol, a polyimide, or a derivative thereof. In particular, a modified or non-modified polyvinyl alcohol is preferable.

Examples of the alignment film that can be used in the present invention include the alignment films described in line 24 on page 43 to line 8 on page 49 of WO01/088574A; the modified polyvinyl alcohols described in paragraphs [0071] to [0095] of JP3907735B; and the liquid crystal alignment films formed by a liquid crystal alignment agent, described in JP2012-155308A.

In the present invention, for the reason that it is possible to prevent deterioration in the surface condition by not coming into contact with the surface of the alignment film during the formation of the alignment film, it is also preferable to use a photo-alignment film as the alignment film.

The photo-alignment film is not particularly limited, and polymer materials such as a polyamide compound and a polyimide compound, described in paragraphs [0024] to [0043] of WO2005/096041A; liquid crystal alignment films formed by a liquid crystal alignment agent having a photo-aligned group with a cinnamic acid structure, described in JP2012-155308A; a trade name LPP-JP265CP manufactured by Rolic Technologies Ltd.; or the like can be used.

The thickness of the alignment film is not particularly limited, and from the viewpoint of forming an optically anisotropic layer having a uniform film thickness by alleviating the surface unevenness that may be present on the support, the thickness of the alignment film is preferably 0.01 to 10 μm, more preferably 0.01 to 1 μm, and still more preferably 0.01 to 0.5 μm.

The optical film also preferably contains an ultraviolet (UV) absorber, taking an effect of external light (particularly ultraviolet rays) into consideration.

The ultraviolet absorber may be contained in an optically anisotropic film, or may be contained in a member other than the optically anisotropic film. Suitable examples of the member other than the optically anisotropic film include a support.

Any of known ultraviolet absorbers in the related art, which is capable of exhibiting ultraviolet absorptivity, can be used as the ultraviolet absorber. Among such ultraviolet absorbers, it is preferable to use a benzotriazole-based ultraviolet absorber or a hydroxyphenyltriazine-based ultraviolet absorber, from the viewpoint of achieving a high ultraviolet absorptivity and obtaining an ultraviolet absorbing ability (ultraviolet-shielding ability) for use in an image display device.

In addition, in order to broaden the absorption width of ultraviolet rays, two or more types of ultraviolet absorbers having different maximum absorption wavelengths can be used in combination.

Specific examples of the ultraviolet absorber include the compounds described in paragraphs [0258] and [0259] of JP2012-018395A and the compounds described in paragraphs [0055] to [0105] of JP2007-072163A.

In addition, for example, Tinuvin 400, Tinuvin 405, Tinuvin 460, Tinuvin 477, Tinuvin 479, and Tinuvin 1577 (all manufactured by BASF SE) can be used as a commercially available product of the ultraviolet absorber.

[Polarizing plate]

The optically anisotropic film formed of the composition according to the embodiment of the present invention is also preferably used in a polarizing plate.

Examples of the polarizing plate include a polarizing plate having the above-mentioned optical film and a polarizer.

The polarizing plate can be suitably used as a circular polarization plate, an optical compensation film of an IPS type or FFS type liquid crystal display device, or the like by adjusting the combination of the type and alignment state of the liquid crystal compound in the optically anisotropic layer, the configuration of the optical film, and the angle between the absorption axis of the polarizer and the in-plane slow axis of the optically anisotropic layer, and the like.

[Polarizer]

The polarizer is not particularly limited as long as it is a member having a function of converting light into specific linearly polarized light, and an absorption type polarizer, a reflection type polarizer, and a coating type polarizer, which are known in the related art, can be used.
Examples of the absorption type polarizer include an iodine-based polarizer, a dye-based polarizer using a dichroic dye, and a polyene-based polarizer. The iodine-based polarizer and the dye-based polarizer include a coating type polarizer and a stretching type polarizer, any of which can be applied. A polarizer produced by adsorbing iodine or a dichroic dye onto a polyvinyl alcohol and stretching the resulting material is preferable.
Examples of the coating type polarizer include a polarizer containing a cured product of a liquid crystal compound and a dichroic coloring agent.
Examples of the reflection type polarizer include a polarizer in which thin films having different birefringence are laminated, a wire grid type polarizer, and a polarizer in which a cholesteric liquid crystal having a selective reflection range is combined with a 1/4 wavelength plate.
The thickness of the polarizer is not particularly limited and is preferably 3 to 60 $\mu$m, more preferably 3 to 30 $\mu$m, and still more preferably 3 to 10 $\mu$m.
In the polarizing plate, an adhesion layer may be disposed between the liquid crystal cured layer in the optical film and the polarizer. The adhesion layer may be, for example, an adhesion layer that may be included in the optical film.

[Image display device]

The composition according to the embodiment of the present invention is also preferably used in an image display device.
The image display device may be, for example, an image display device having the above-mentioned optical film or polarizing plate.
The display element used in the image display device is not particularly limited, and examples thereof include a liquid crystal cell, an organic electroluminescence (hereinafter, referred to as "organic EL") display panel, and a plasma display panel, among which a liquid crystal cell or an organic EL display panel is preferable.
The liquid crystal display device which is an example of the image display device is a liquid crystal display device having the above-mentioned polarizing plate and a liquid crystal cell.
Of the polarizing plates provided on both sides of the liquid crystal cell, it is preferable to use the above-mentioned polarizing plate as a polarizing plate on the front side, and it is more preferable to use the above-mentioned polarizing plate as polarizing plates on the front and rear sides.
The liquid crystal cell used in the liquid crystal display device is preferably in a vertical alignment (VA) mode, an optically compensated bend (OCB) mode, an in-plane-switching (IPS) mode, a fringe-field-switching (FFS) mode, or a twisted nematic (TN) mode, but is not limited thereto.
Examples of the organic EL display device which is an example of the image display device include an aspect in which a polarizer, a $\lambda$/4 plate consisting of the above-mentioned liquid crystal cured layer, and an organic EL display panel are provided in this order from the viewing side.
In addition, the organic EL display panel is a display panel configured using an organic EL element which has an organic light emitting layer (organic electroluminescence layer) sandwiched between electrodes (between a cathode and an anode). The configuration of the organic EL display panel is not particularly limited, and a known configuration may be adopted.

[Compound]

The present invention also includes the invention of the compound A and the compound B.

Examples

Hereinafter, the present invention will be described in more detail with reference to Examples.
The materials, the amounts and proportions of the materials used, the details of treatments, the procedure of treatments, and the like shown in Examples given below can be appropriately modified without departing from the scope and spirit of the present invention. Accordingly, the scope of the present invention should not be construed as being limited to Examples given below.
The abbreviations used in the following description are as follows.

DMF: N,N-dimethylformamide

THF: tetrahydrofuran
EDC1: 1-(3-dimethylaminopropyl)-3-ethylcarbodiimide hydrochloride
DMAP: 4-dimethylaminopyridine
DMAc: N,N-dimethylacetamide

[Silicon-containing compound]

In Examples, compounds A-1 to A-30, B-1 to B-9, and C-1 to C-7 shown below were used as the silicon-containing compound. The compounds A-1 to A-30 correspond to the compound A, B-1 to B-9 correspond to the compound B, and the compounds C-1 to C-7 are comparative compounds.

In the following, Mw represents a molecular weight of a compound, and Si-Me/Mw represents a value obtained by dividing the total number of methyl groups bonded to silicon atoms by the molecular weight of the compound.

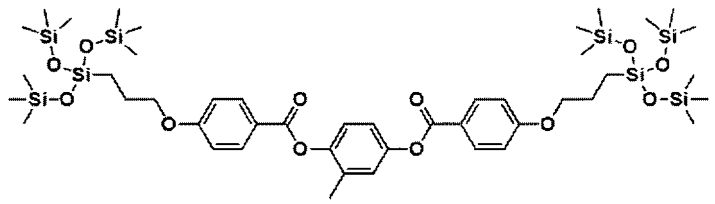

**A-1**
**Mw=1037.8**
**Si-Me/Mw=0.0173**

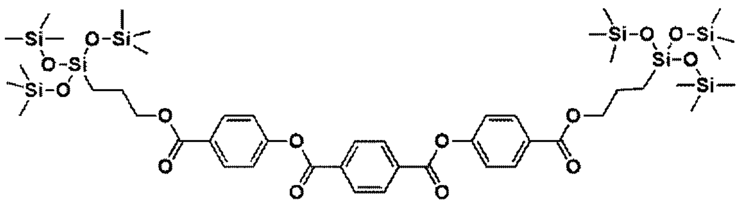

**A-2**
**Mw=1079.8**
**Si-Me/Mw=0.0167**

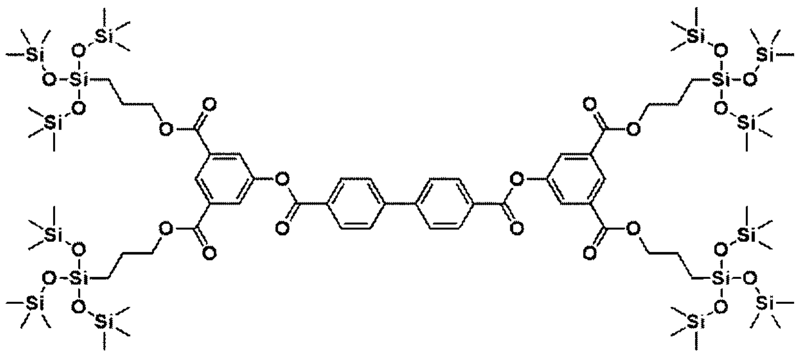

**A-3**
**Mw=1917.36**
**Si-Me/Mw=0.0188**

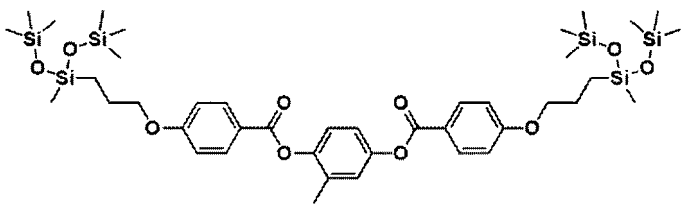

**A-4**
**Mw=889.5**
**Si-Me/Mw=0.0157**

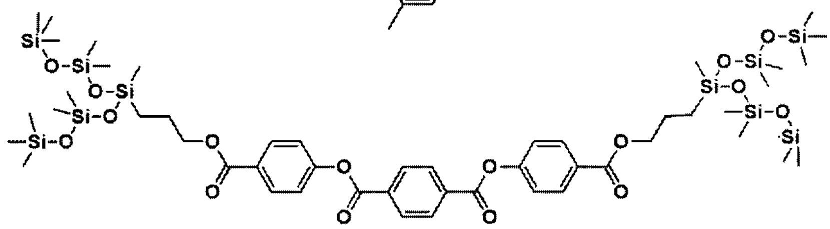

**A-5**
**Mw=1228.1**
**Si-Me/Mw=0.0179**

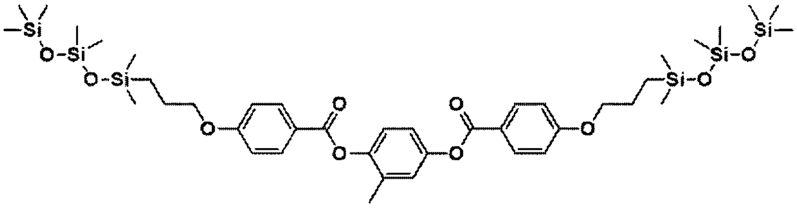

**A-6**
**Mw=889.5**
**Si-Me/Mw=0.0157**

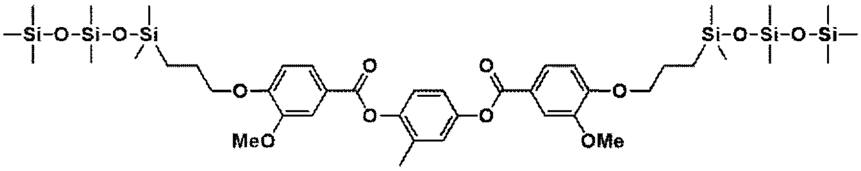

**A-7**
**Mw=949.55**
**Si-Me/Mw=0.0147**

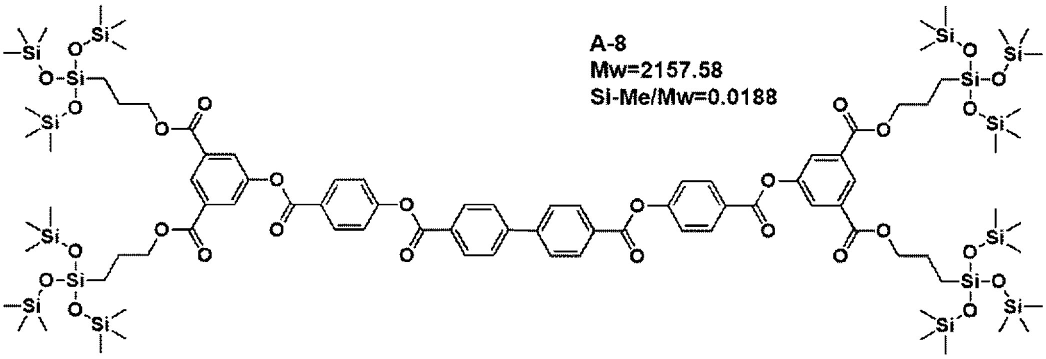

**A-8**
**Mw=2157.58**
**Si-Me/Mw=0.0188**

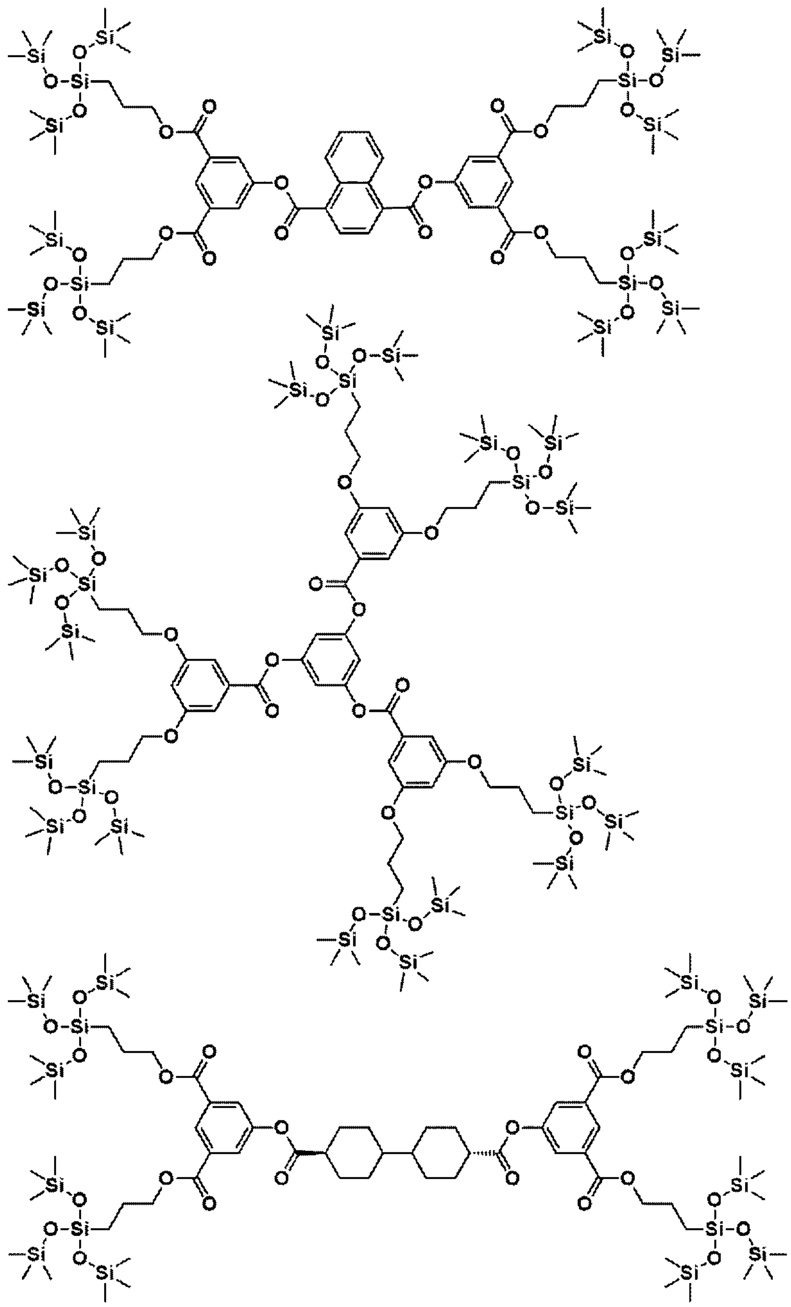

**A-9**
**Mw=1891.32**
**Si-Me/Mw=0.0190**

**A-10**
**Mw=2554.78**
**Si-Me/Mw=0.0211**

**A-11**
**Mw=1929.46**
**Si-Me/Mw=0.0187**

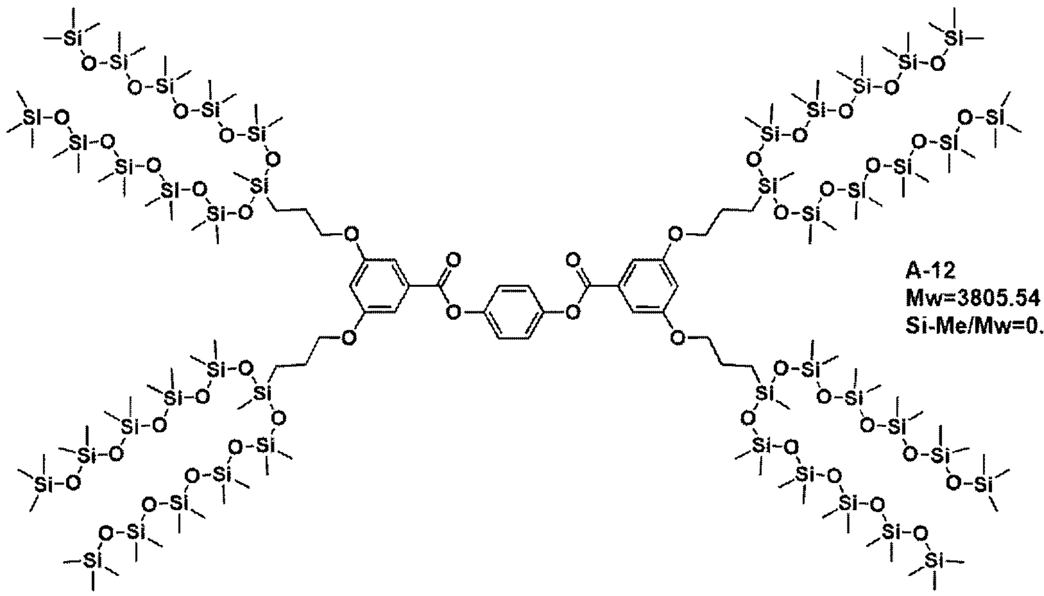

**A-12**
**Mw=3805.54**
**Si-Me/Mw=0.024**

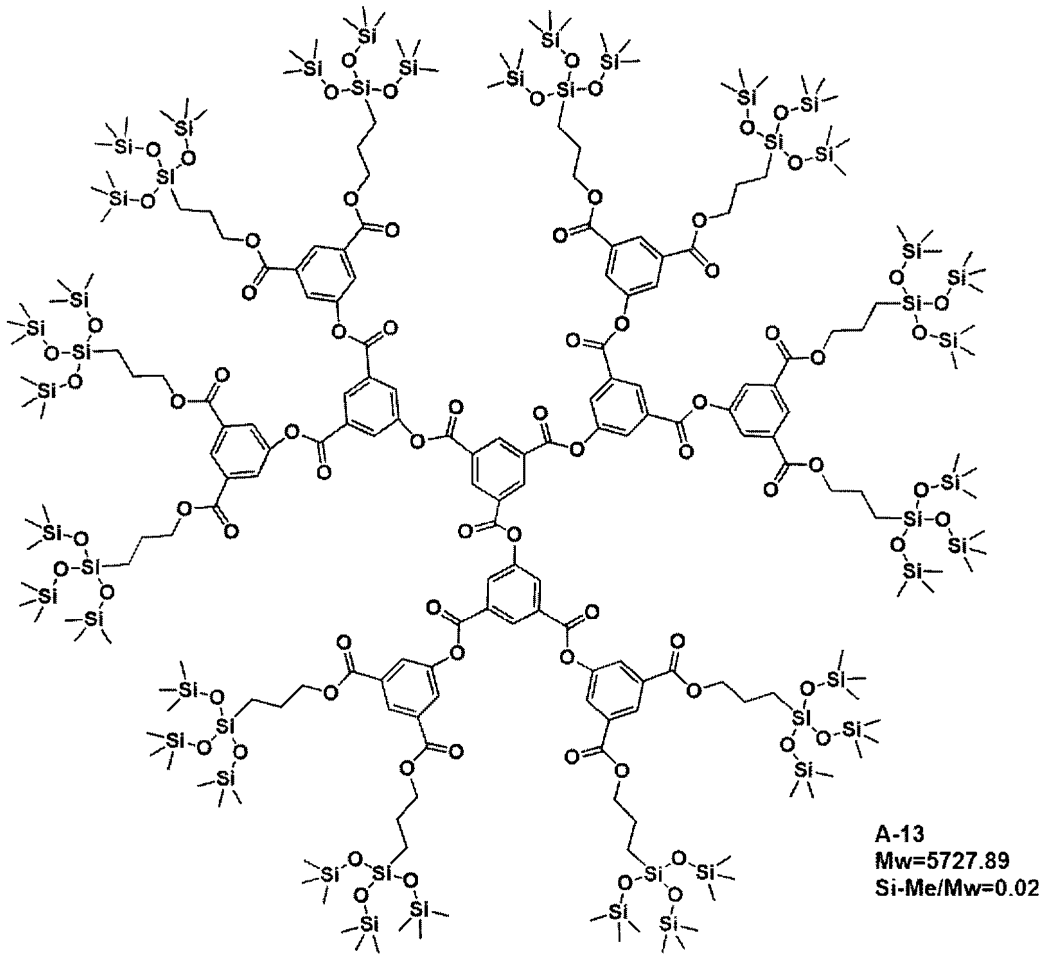

**A-13**
**Mw=5727.89**
**Si-Me/Mw=0.02**

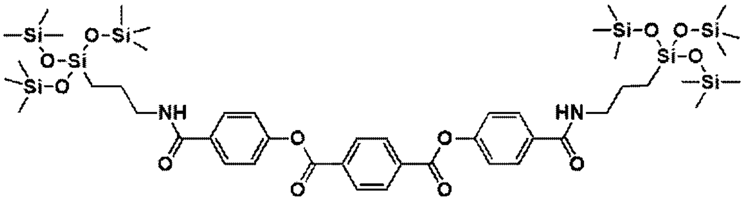

**A-14**
**Mw=1077.83**
**Si-Me/Mw=0.0167**

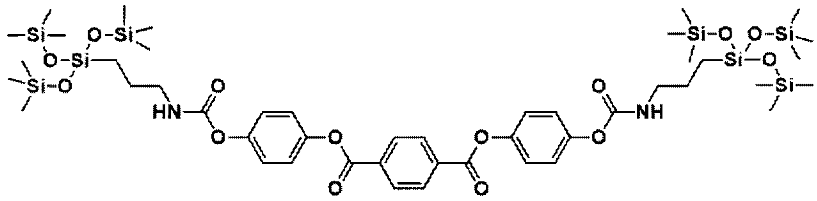

**A-15**
**Mw=1109.83**
**Si-Me/Mw=0.0171**

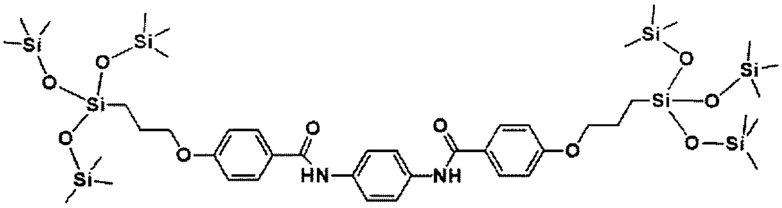

**A-16**
**Mw=1021.81**
**Si-Me/Mw=0.0176**

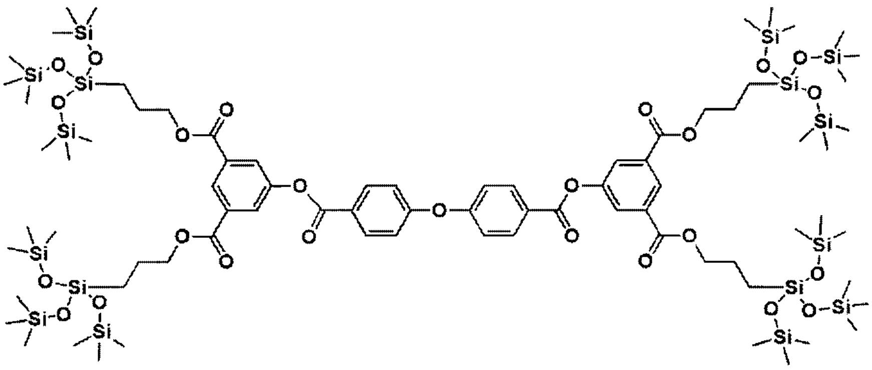

**A-17**
**Mw=1933.36**
**Si-Me/Mw=0.0186**

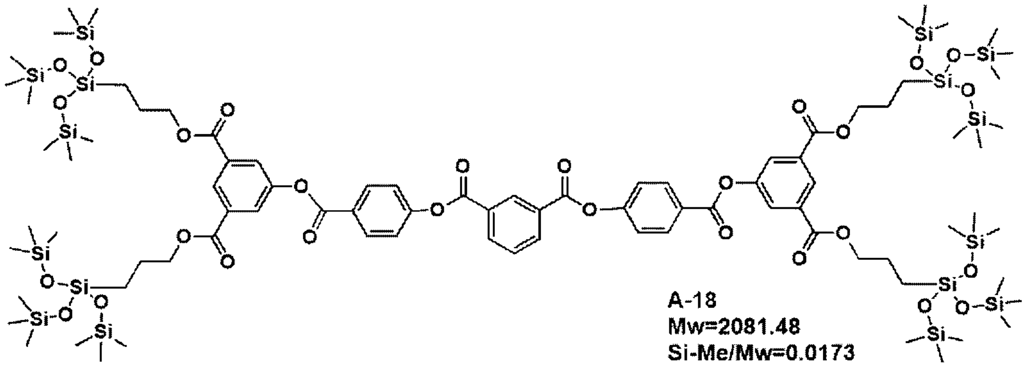

**A-18**
**Mw=2081.48**
**Si-Me/Mw=0.0173**

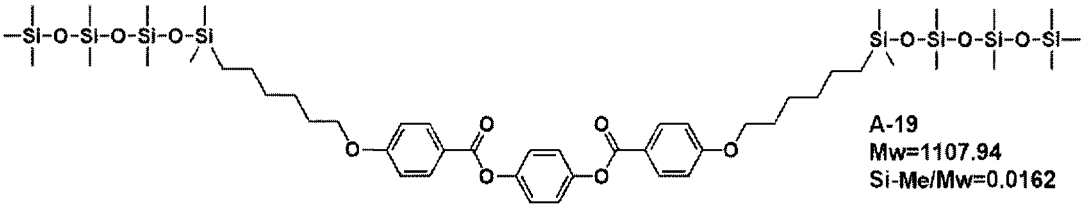

**A-19**
**Mw=1107.94**
**Si-Me/Mw=0.0162**

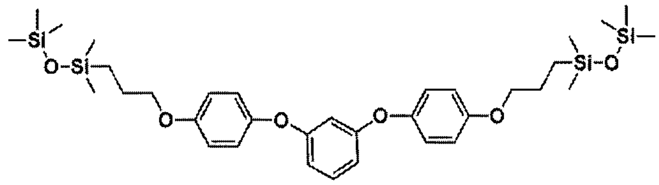

A-20
Mw=671.14
Si-Me/Mw=0.0149

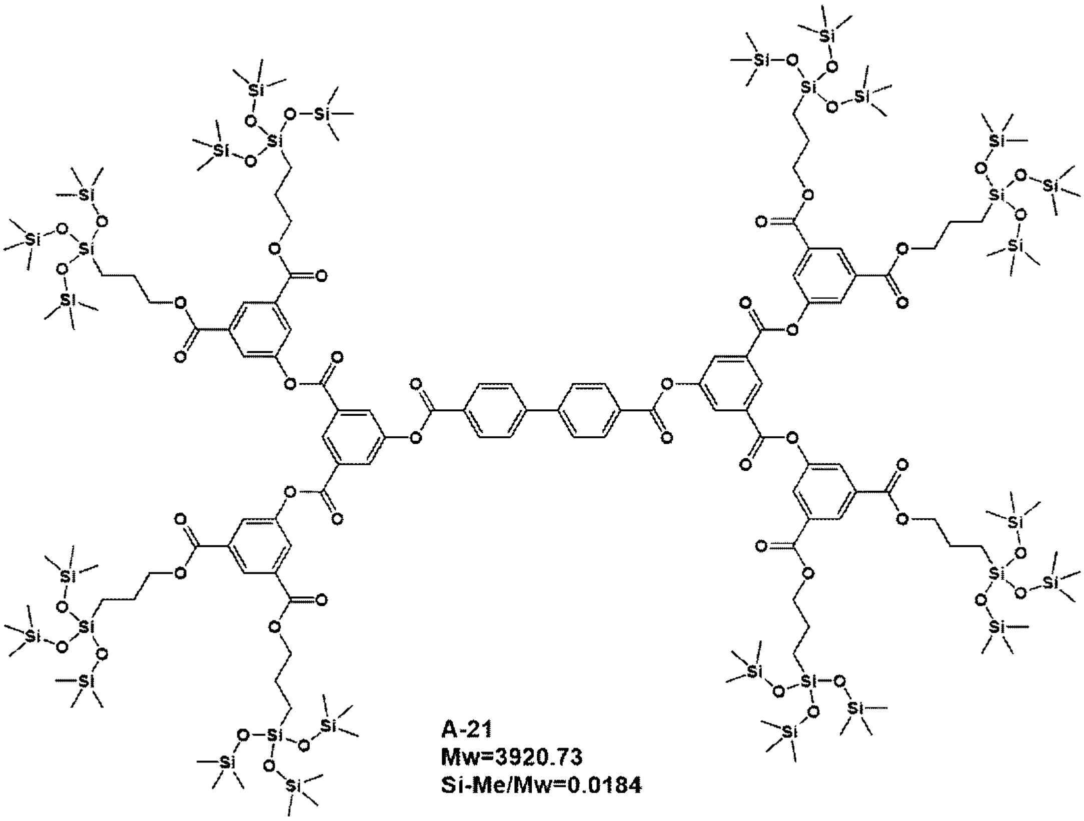

A-21
Mw=3920.73
Si-Me/Mw=0.0184

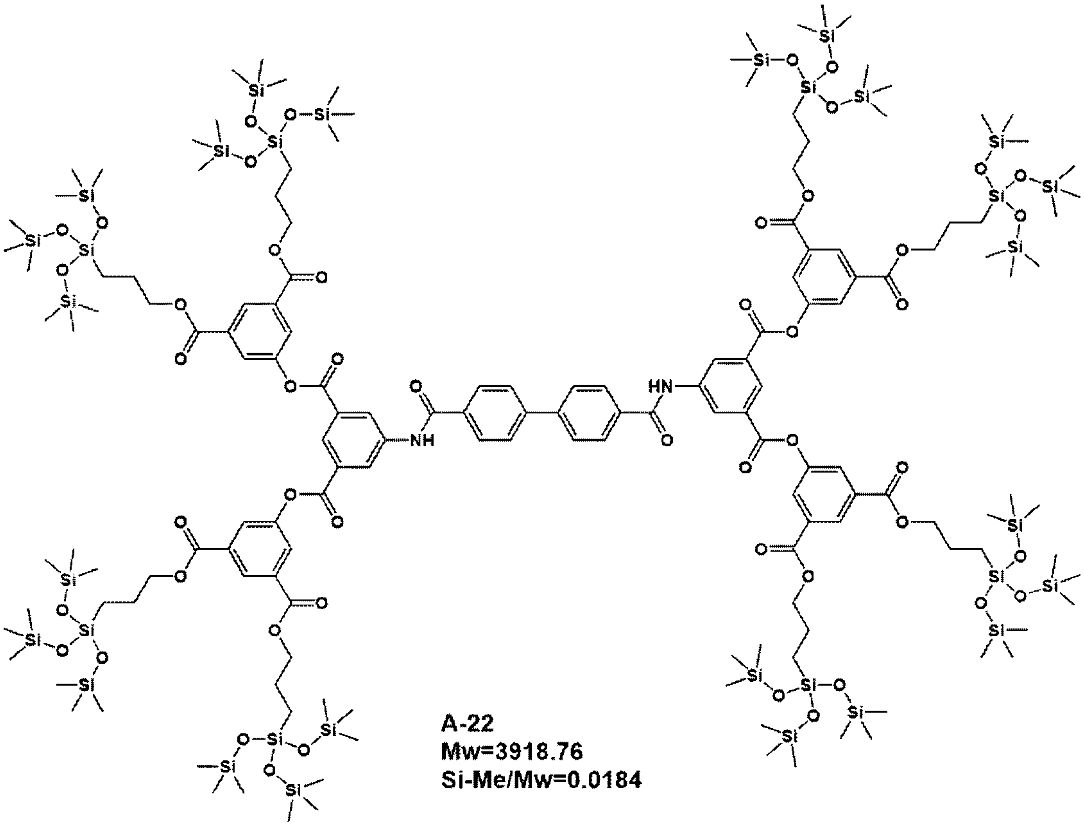

**A-22**
**Mw=3918.76**
**Si-Me/Mw=0.0184**

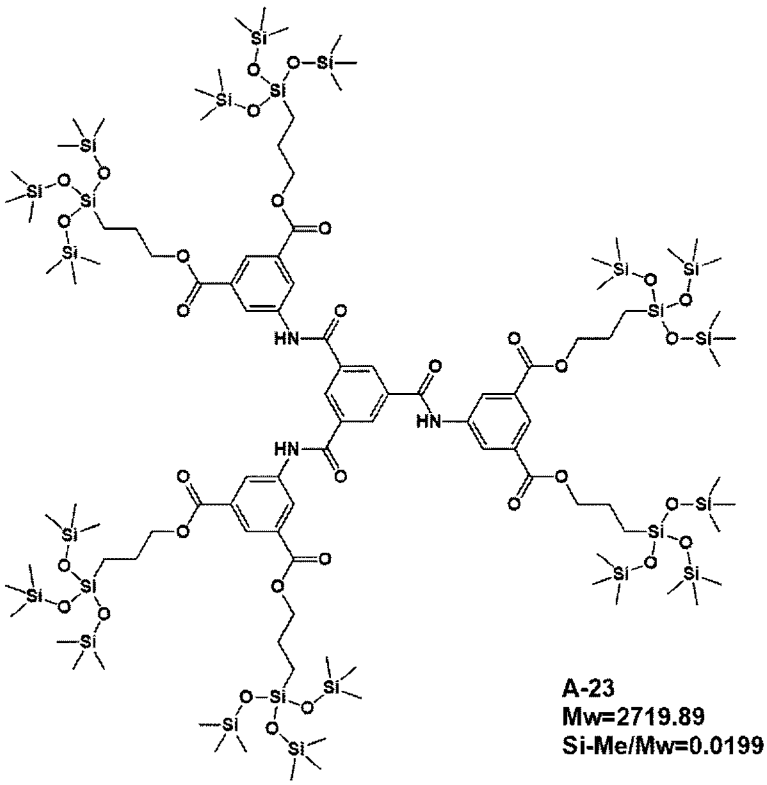

**A-23**
**Mw=2719.89**
**Si-Me/Mw=0.0199**

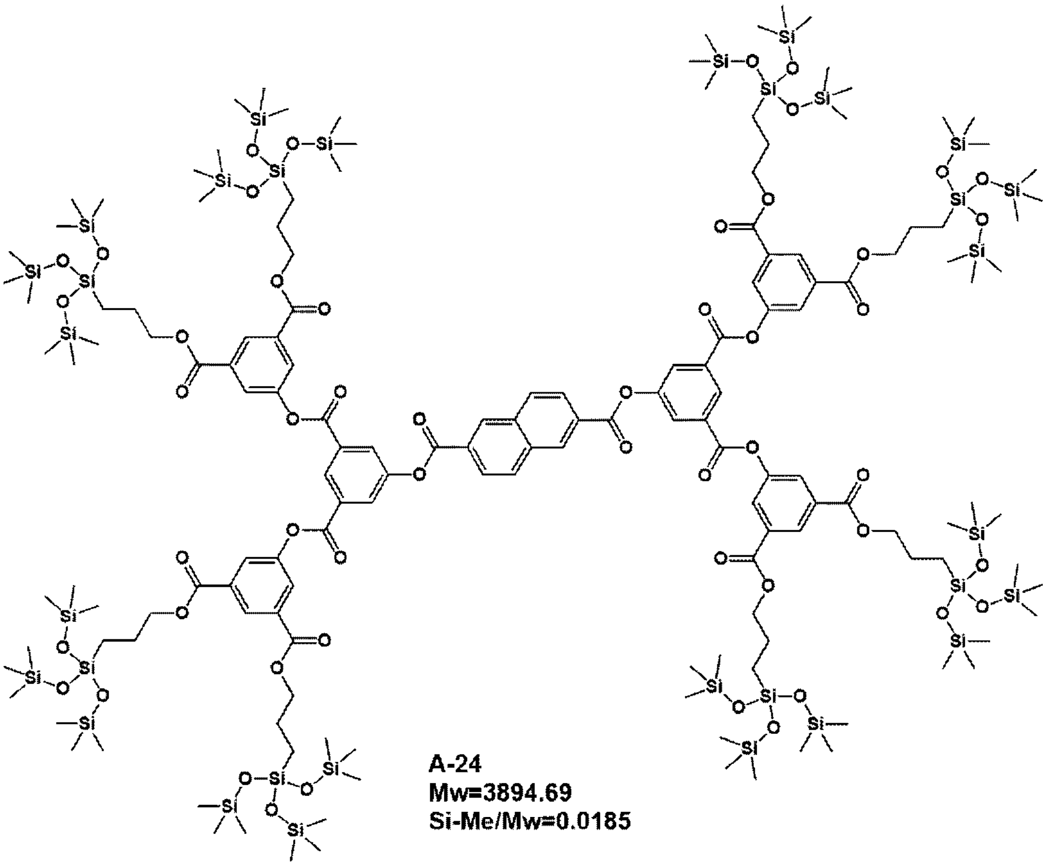

**A-24**
**Mw=3894.69**
**Si-Me/Mw=0.0185**

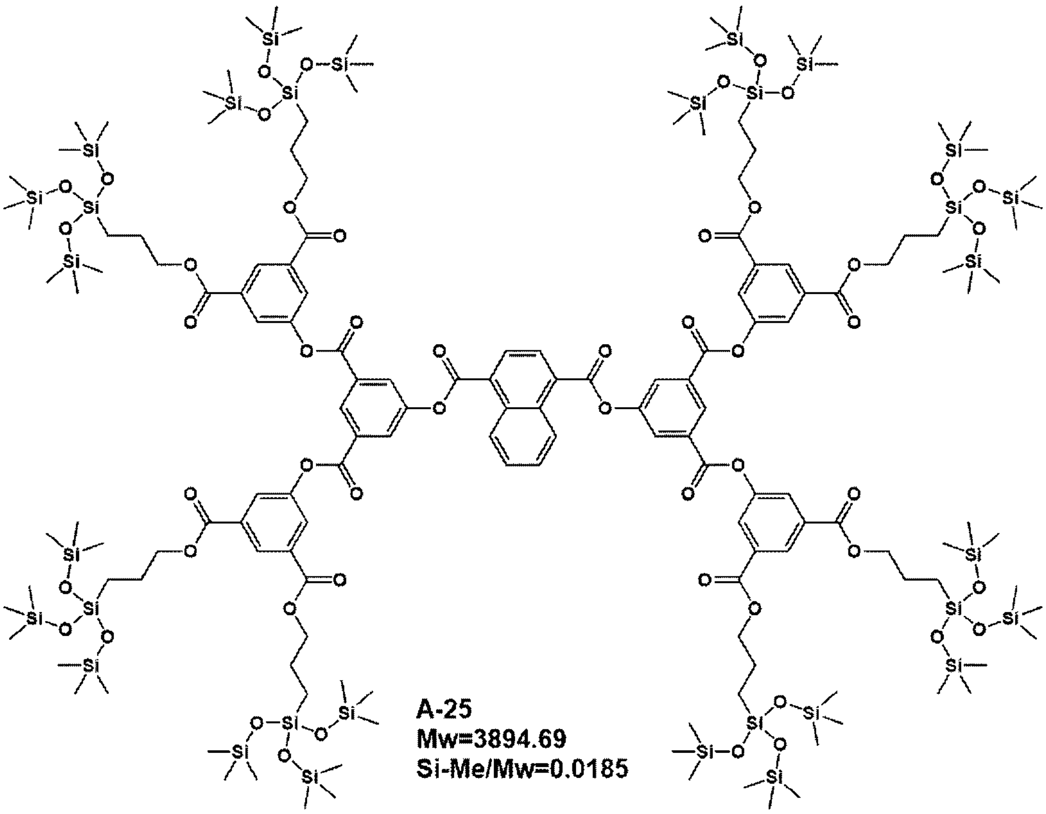

**A-25**
**Mw=3894.69**
**Si-Me/Mw=0.0185**

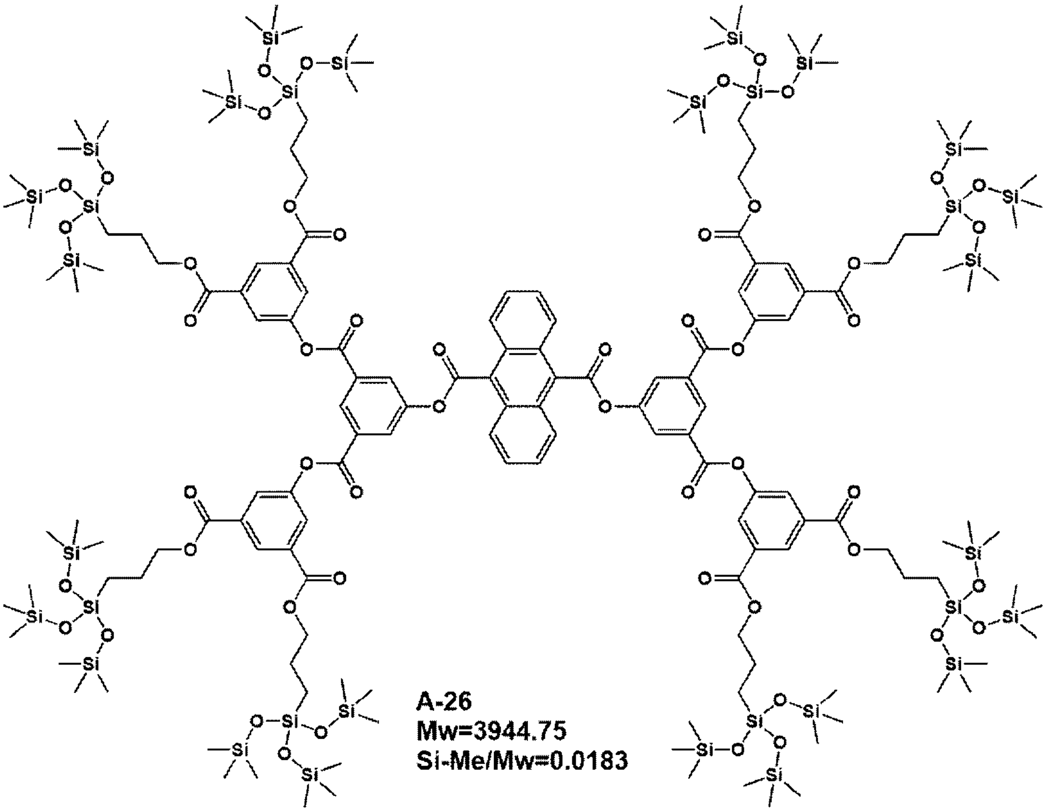

**A-26**
**Mw=3944.75**
**Si-Me/Mw=0.0183**

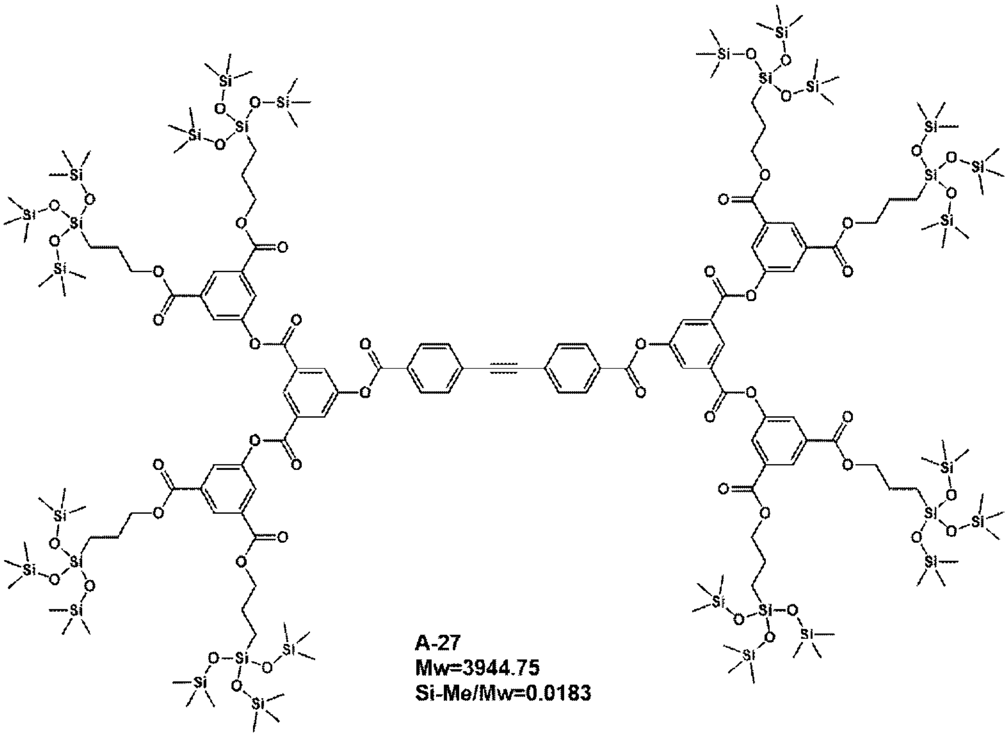

**A-27**
**Mw=3944.75**
**Si-Me/Mw=0.0183**

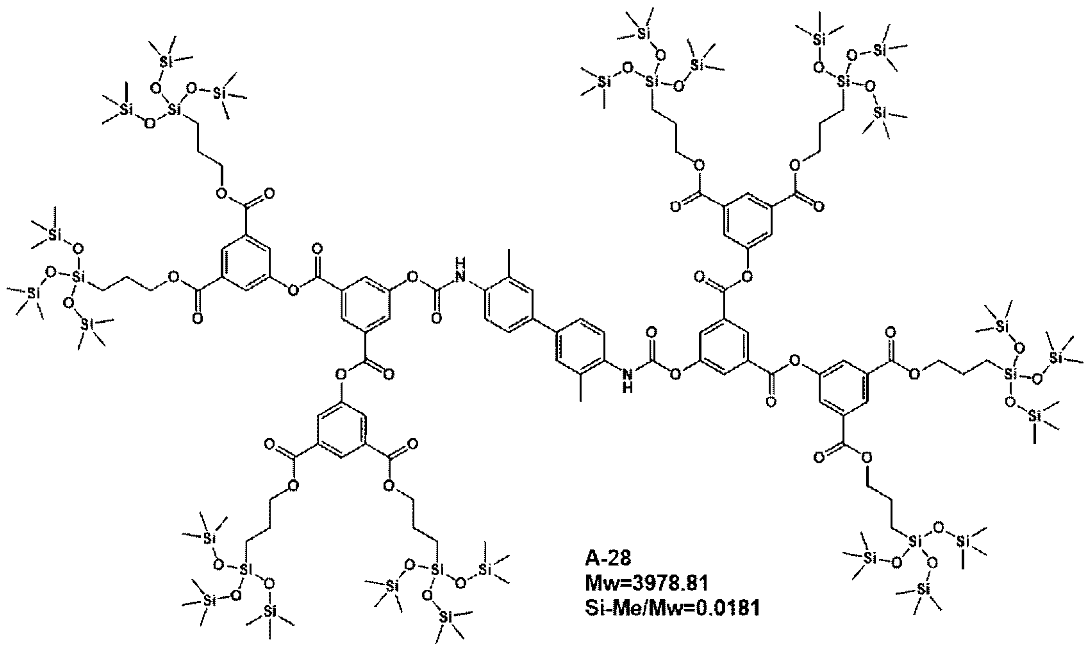

**A-28**
**Mw=3978.81**
**Si-Me/Mw=0.0181**

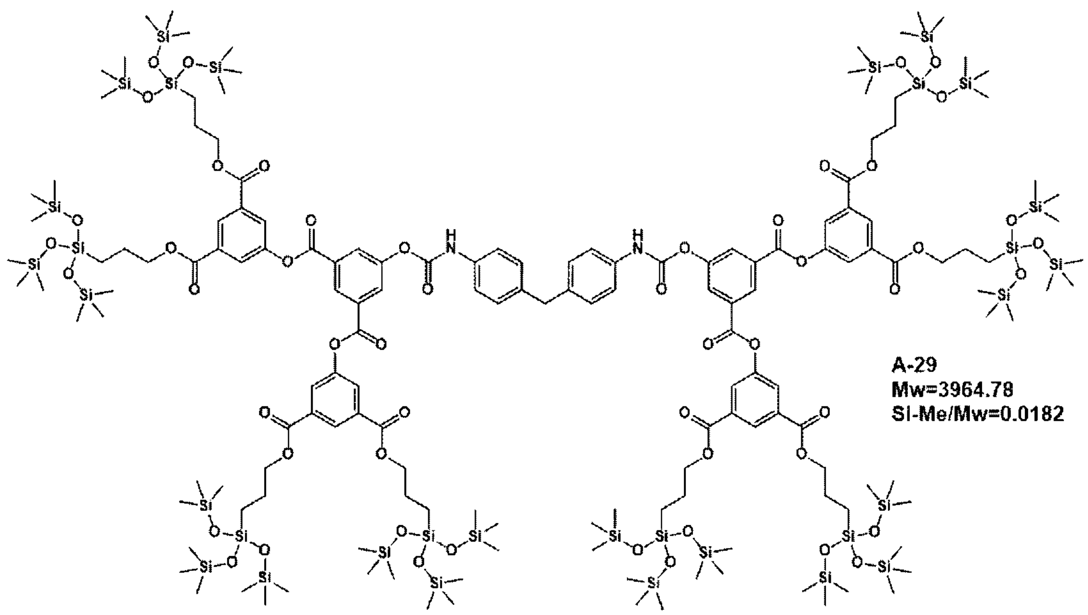

**A-29**
**Mw=3964.78**
**Si-Me/Mw=0.0182**

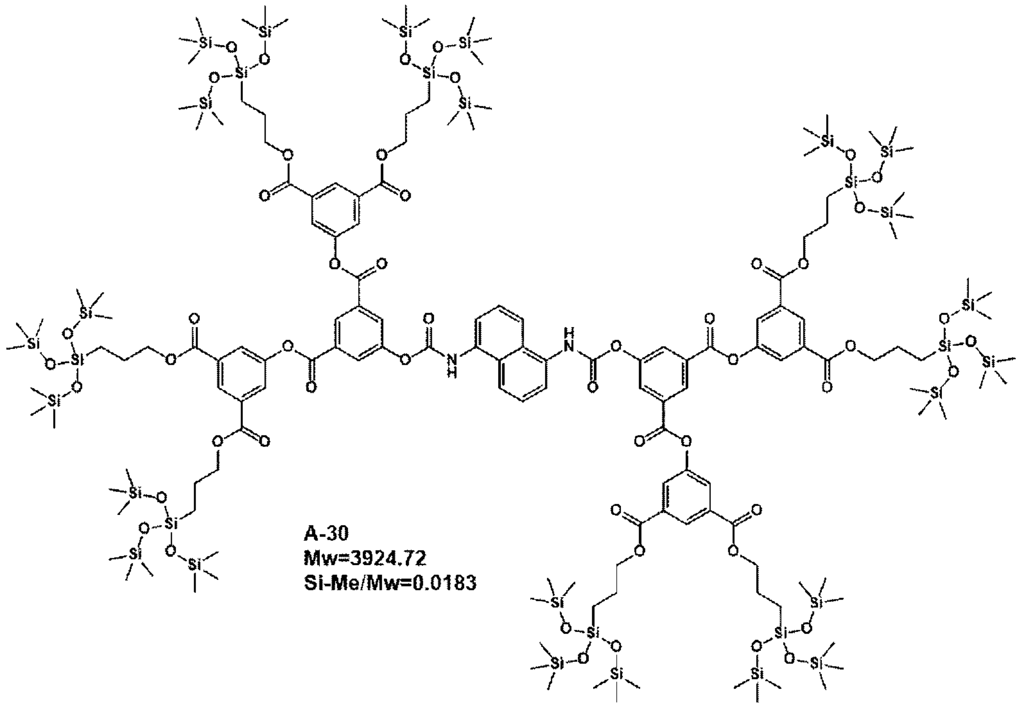

**A-30**
**Mw=3924.72**
**Si-Me/Mw=0.0183**

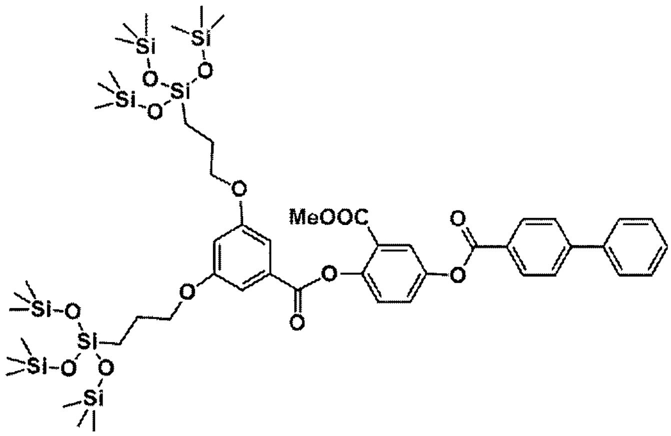

**B-1**
**Mw=1157.91**
**Si-Me/Mw=0.0155**

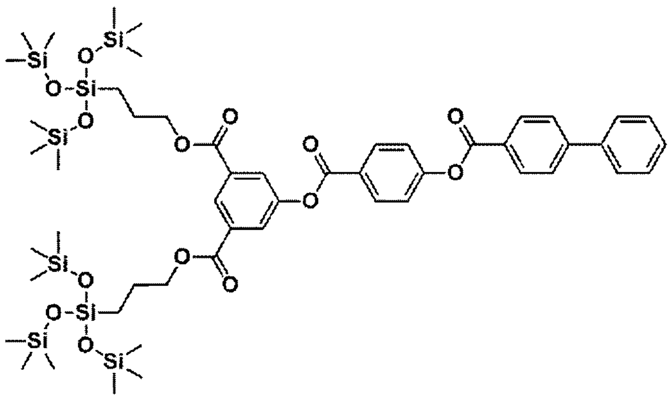

**B-2**
**Mw=1155.89**
**Si-Me/Mw=0.0156**

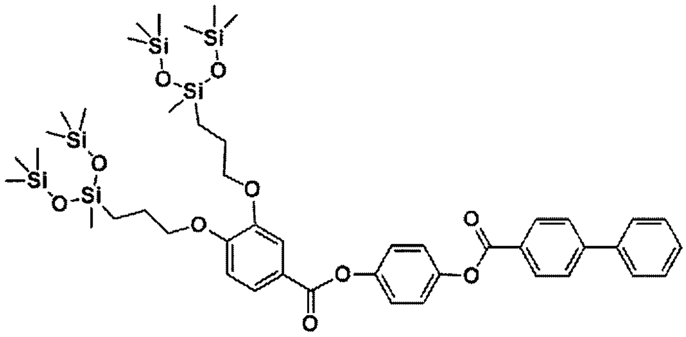

B-3
Mw=951.57
Si-Me/Mw=0.0147

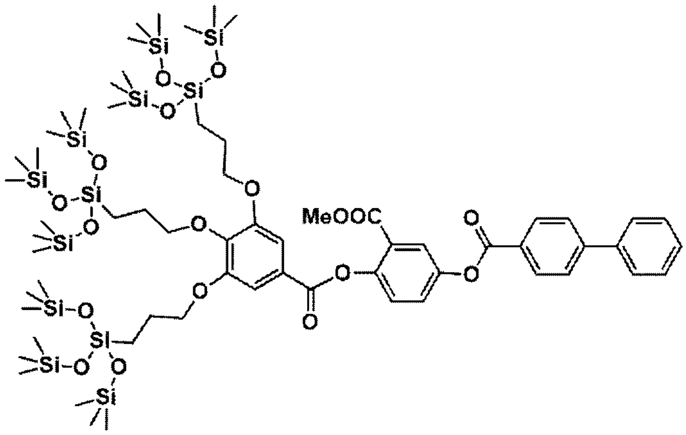

B-4
Mw=1510.63
Si-Me/Mw=0.0179

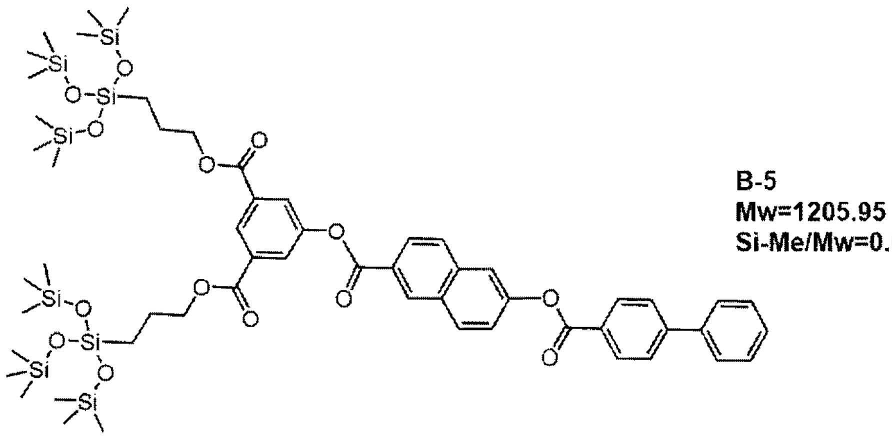

B-5
Mw=1205.95
Si-Me/Mw=0.0149

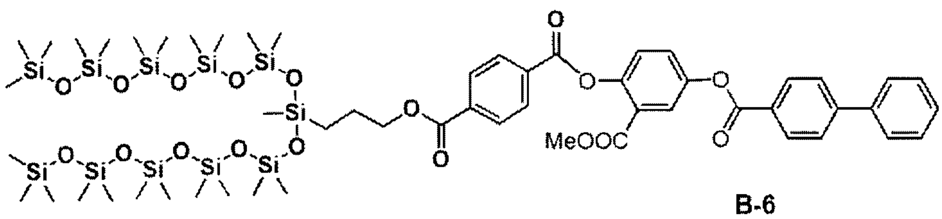

B-6
Mw=1352.27
Si-Me/Mw=0.017

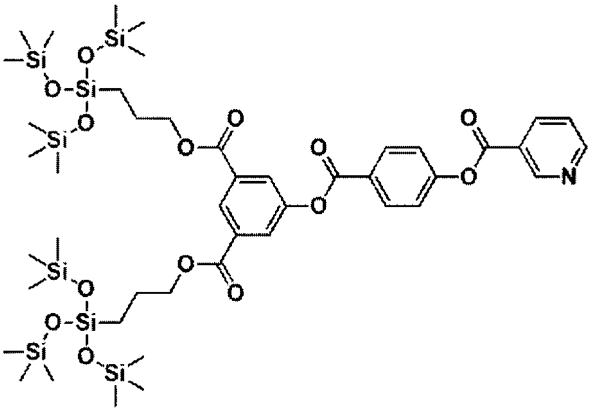

B-7
Mw=1080.78
Si-Me/Mw=0.0167

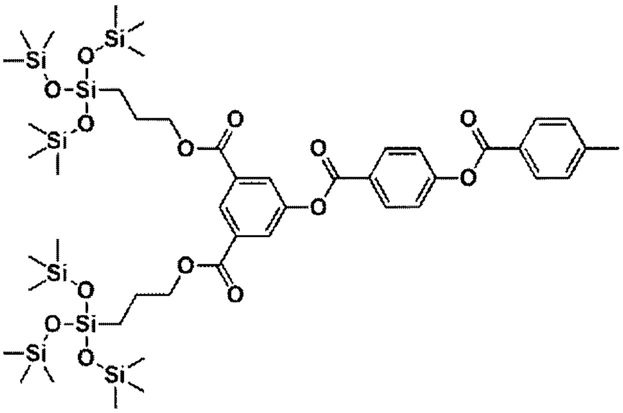

B-8
Mw=1093.82
Si-Me/Mw=0.0165

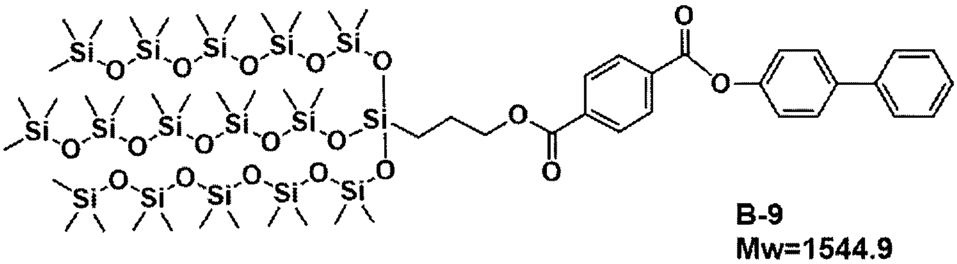

**B-9**
**Mw=1544.9**
**Si-Me/Mw=0.0214**

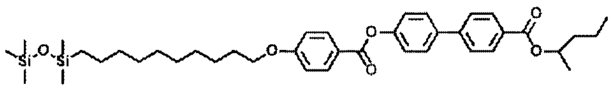

C-1
Mw=691.07
Si-Me/Mw=0.0072

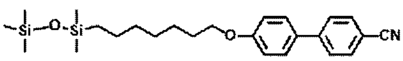

C-2
Mw=439.75
Si-Me/Mw=0.0114

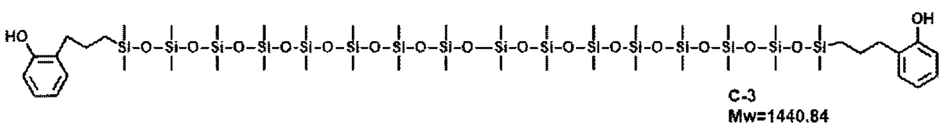

C-3
Mw=1440.84
Si-Me/Mw=0.0222

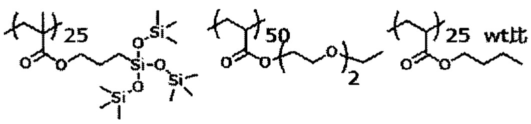

wt比

C-4
Mw=60000
Si-Me/Mw=0.0098

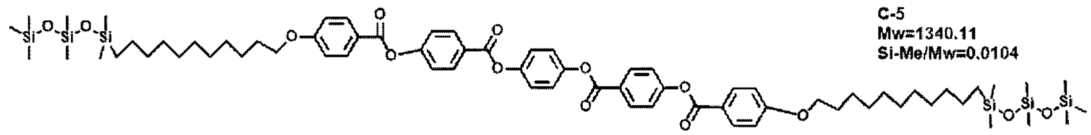

C-5
Mw=1340.11
Si-Me/Mw=0.0104

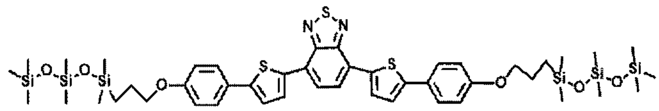

C-6
Mw=1009.75
Si-Me/Mw=0.0139

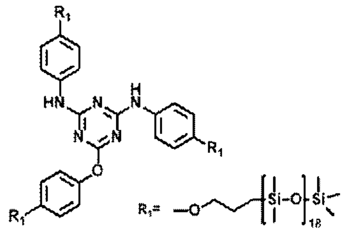

C-7
Mw=4750.5
Si-Me/Mw=0.0246

[Synthesis Examples]

[Synthesis of compound A-1]

The compound A-1 was synthesized according to the following procedure.

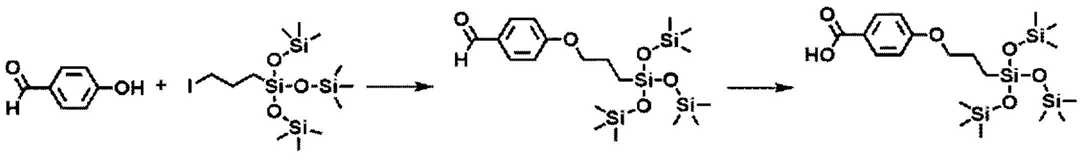

1a 1b 1c

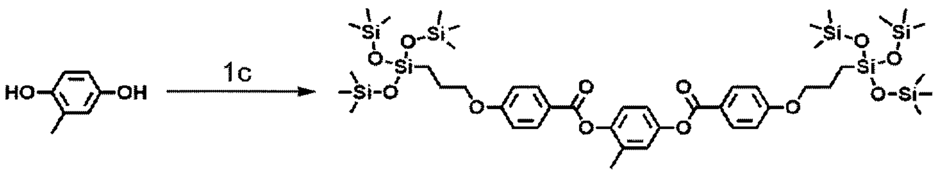


A-1

<Synthesis of compound 1b>

A compound 1a (8.6 mmol) was added to a solution of p-hydroxybenzaldehyde (8.2 mmol) and cesium carbonate (12.3 mmol) dissolved in DMF (50 mL), followed by stirring at room temperature for 6 hours. After stirring, ethyl acetate, a hydrochloric acid solution, and saline were added to the obtained reaction solution which was then subjected to a liquid separation treatment, the solvent was distilled off, and purification was carried out by silica gel column chromatography (hexane/ethyl acetate = 20/1) to obtain a compound 1b (yield: 70%).

<Synthesis of compound 1c>

A solution A of $NaH_2PO_4$ dihydrate (2.2 mmol) and tetrabutylammonium hydrogen sulfate (0.08 mmol) dissolved in water (2.2 mL) was prepared. Next, a solution B of the compound 1b (7.8 mmol) dissolved in ethyl acetate (6 mL) and THF (5 mL) was prepared, and the solution A was added dropwise to the solution B. Hydrogen peroxide (1.3 mmol) was further added to the obtained mixture, followed by addition of an aqueous solution (2.5 mL) of $NaClO_2$ (9.4 mmol), and then stirring at 40°C for 1 hour. After stirring, the reaction was quenched with an aqueous solution of sodium sulfite, ethyl acetate and a hydrochloric acid solution were added thereto to carry out a liquid separation treatment, and the solvent was distilled off to obtain a compound 1c (yield: 95%).

<Synthesis of compound A-1>

Methylhydroquinone (1.0 mmol) and the compound 1c (2.2 mmol) were dissolved in dichloromethane (10 mL), and EDCl (3.0 mmol) and DMAP (0.1 mmol) were further added thereto under cooling with water. The obtained reaction solution was stirred at room temperature for 4 hours, and then water was added thereto to carry out a liquid separation treatment. The residue was purified by silica gel column chromatography (hexane/ethyl acetate = 20/1) to obtain a compound A-1 (yield: 80%).

The MALDI-MS measurement results of the obtained compound A-1 are shown below.

m/z: 1036.38 (100.0%), 1037.38 (89.7%), 1038.38 (56.4%), 1039.38 (28.2%), 1038.39 (12.6%), 1040.38 (10.6%), 1039.39 (8.2%), 1041.38 (4.1%), 1040.37 (3.1%), 1040.39 (2.8%), 1042.38 (1.3%), 1041.39 (1.2%), 1041.37 (1.0%)

[Synthesis of compound A-2]

The compound A-2 was synthesized according to the following procedure.

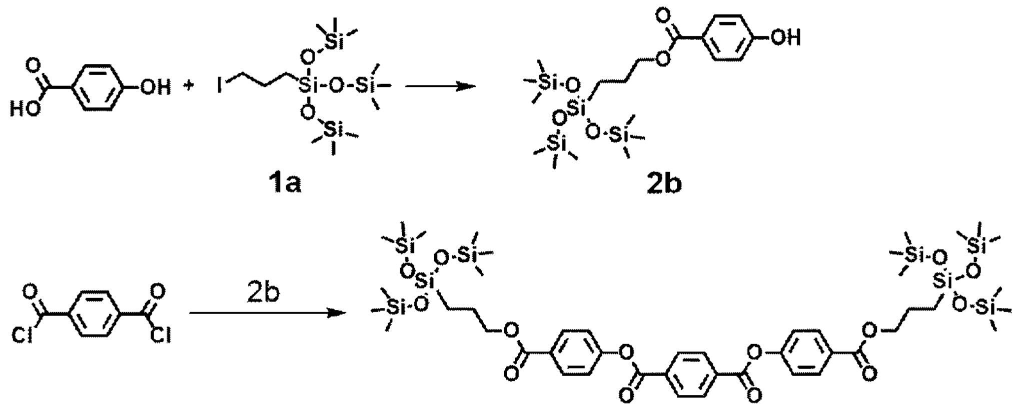


1a 2b

A-2

<Synthesis of compound 2b>

Under a nitrogen atmosphere, p-hydroxybenzoic acid (17.9 mmol) and the compound 1a (26.8 mmol) were dissolved in cyclopentanone (40 mL) and DMAc (40 mL), the temperature was raised to 100°C, and then N,N-diisopropylethylamine (35.7 mmol) was added thereto. The obtained reaction solution was heated and stirred at 100°C for 5 hours. The solvent was distilled off, and the residue was purified by silica gel column chromatography (hexane/ethyl acetate) to obtain a compound 2b.

<Synthesis of compound A-2>

Terephthalic acid dichloride (8.0 mmol) and the compound 6b (17.9 mmol) were dissolved in cyclopentanone (20 mL), and N,N-diisopropylethylamine (20.1 mmol) and N-methylimidazole (1.6 mmol) were added thereto under cooling with water. The obtained reaction solution was stirred at room temperature for 1 hour and then quenched with methanol and H2O, and the precipitated solid was collected and purified by silica gel column chromatography (hexane/ethyl acetate) to obtain a compound A42 (yield: 70%).

The MALDI-MS measurement results of the obtained compound A-2 are shown below.

m/z: 1078.35 (100.0%), 1079.36 (51.2%), 1079.35 (40.6%), 1080.36 (36.5%), 1080.35 (34.0%), 1081.35 (23.6%), 1081.36 (13.8%), 1082.35 (9.4%), 1082.36 (7.3%), 1083.35 (3.4%), 1083.36 (2.9%), 1084.35 (1.4%)

[Synthesis of compound A-3]

The compound A-3 was synthesized according to the following procedure.

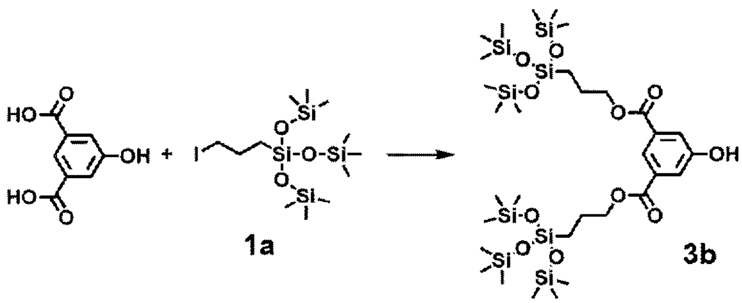

1a

3b

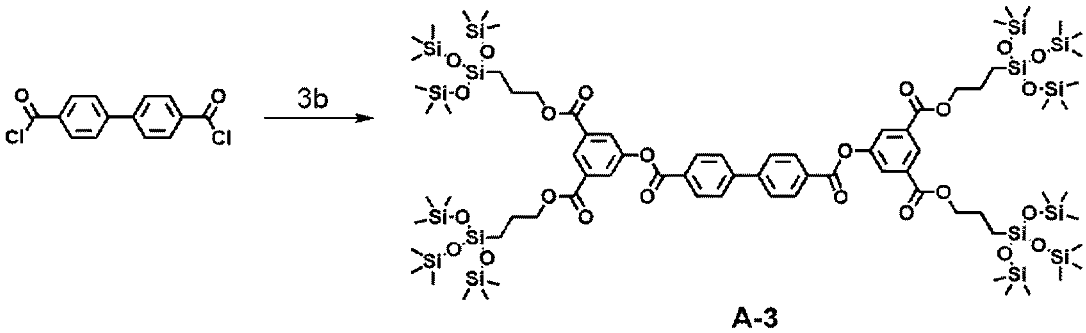


A-3

<Synthesis of compound 3b>

Under a nitrogen atmosphere, 5-hydroxyisophthalic acid (4.47 mmol) and the compound 1a (13.4 mmol) were dissolved in cyclopentanone (20 mL) and DMAc (20 mL), the temperature was raised to 100°C, and then N,N-diisopropylethylamine (17.9 mmol) was added thereto. The obtained reaction solution was heated and stirred at 100°C for 5 hours. The solvent was distilled off, and the residue was purified by silica gel column chromatography (hexane/ethyl acetate) to obtain a compound 3b.

<Synthesis of compound A-3>

4,4'-biphenyldicarbonyl chloride (2.01 mmol) and the compound 3b (4.47 mmol) were dissolved in cyclopentanone (10 mL), and N,N-diisopropylethylamine (5.0 mmol) and N-methylimidazole (0.4 mmol) were added thereto under cooling with water. The obtained reaction solution was stirred at room temperature for 1 hour and then quenched with methanol and H2O, and the precipitated solid was collected and purified by silica gel column chromatography (hexane/ethyl acetate) to obtain a compound A-3 (yield: 70%).

The MALDI-MS measurement results of the obtained compound A-3 are shown below.

m/z: 1915.65 (100.0%), 1916.65 (92.4%), 1917.65 (73.1%), 1914.65 (60.4%), 1918.65 (48.6%), 1917.66 (30.0%), 1919.65 (27.4%), 1916.66 (26.8%), 1918.66 (17.3%), 1920.65 (14.1%), 1919.66 (11.7%), 1918.64 (8.1%), 1921.65 (7.7%), 1920.66 (6.8%), 1919.64 (5.8%), 1920.64 (3.2%), 1921.66 (2.7%), 1922.65 (2.7%), 1915.66 (1.6%), 1921.64 (1.2%), 1922.66 (1.2%), 1922.64 (1.2%), 1923.65 (1.0%)

[Synthesis of compound A-4]

The compound A-4 was synthesized according to the following procedure.

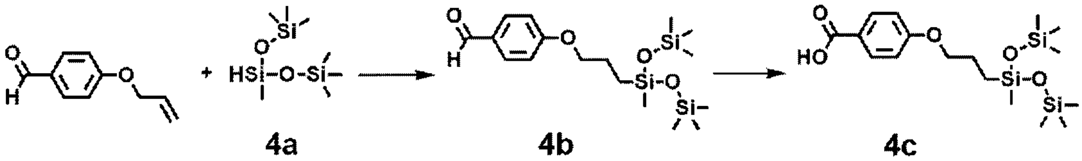

4a 4b 4c

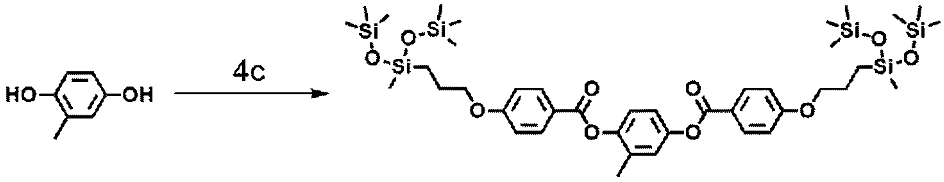


A-4

<Synthesis of compound 4b>

Under a nitrogen atmosphere, p-allyloxybenzaldehyde (18.5 mmol) and a compound 2a (18.5 mmol) were dissolved in THF (3 mL), and a Karstedt's catalyst (2% Pt xylene solution, 30 $\mu$L) was further added thereto under cooling with water. The obtained reaction solution was stirred at room temperature for 2 hours, the solvent was distilled off, and the residue was purified by silica gel column chromatography (hexane/ethyl acetate = 9/1) to obtain a compound 4b (yield: 70%).

<Synthesis of compound 4c>

The compound 4c was obtained in the same manner as in the above-mentioned section <Synthesis of compound 1c>.

<Synthesis of compound A-4>

The compound A-4 was obtained in the same manner as in the above-mentioned section <Synthesis of compound A-1>.

The MALDI-MS measurement results of the obtained compound A-4 are shown below.

m/z: 888.34 (100.0%), 889.35 (45.5%), 889.34 (30.5%), 890.35 (26.0%), 890.34 (24.0%), 891.34 (14.3%), 891.35 (7.9%), 892.34 (5.0%), 892.35 (3.5%), 893.34 (1.5%), 893.35 (1.2%)

[Synthesis of compound A-5]

The compound A-5 was synthesized according to the following procedure.

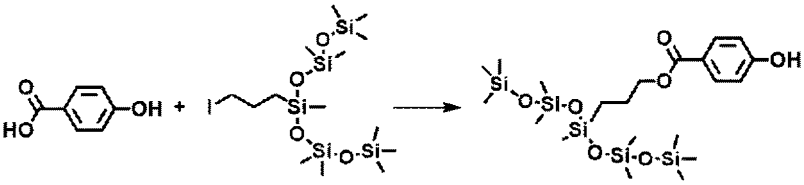

5a 5b

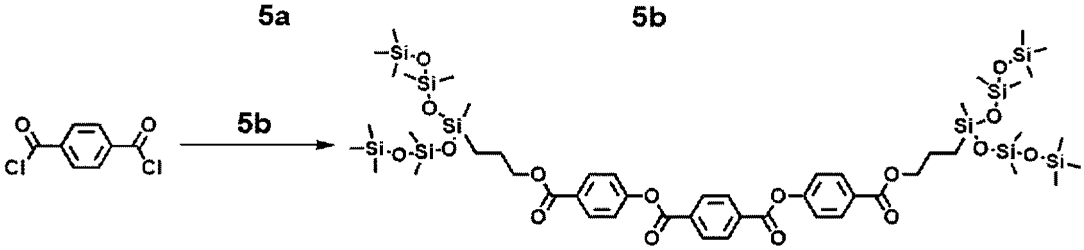


A-5

The compound A-5 was synthesized in the same manner as in the above-mentioned section [Synthesis of compound A-2], except that the compound 1a was changed to a compound 5a.

The MALDI-MS measurement results of the obtained compound A-5 are shown below.

m/z: 1226.39 (100.0%), 1227.40 (55.7%), 1227.39 (50.8%), 1228.40 (46.8%), 1228.39 (45.1%), 1229.39 (41.4%), 1230.39 (18.8%), 1229.40 (14.3%), 1230.40 (10.1%), 1231.39 (7.5%), 1231.40 (5.0%), 1232.39 (2.8%), 1232.40 (1.2%), 1233.39 (1.0%)

[Synthesis of compound A-6]

The compound A-6 was synthesized according to the following procedure.

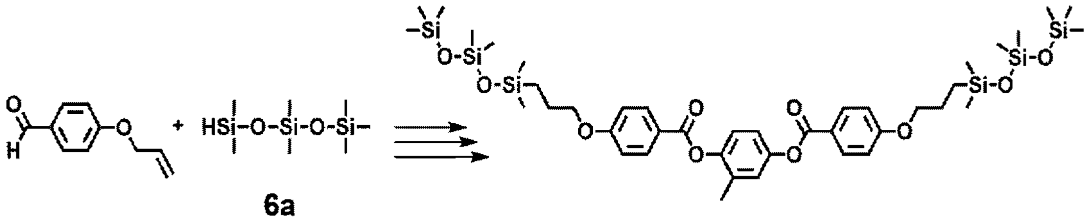

6a

A-6

The compound A-6 was synthesized in the same manner as in the above-mentioned section [Synthesis of compound A-4], except that the compound 4a was changed to a compound 6a.

The MALDI-MS measurement results of the obtained compound A-6 are shown below.

m/z: 888.34 (100.0%), 889.35 (45.5%), 889.34 (30.5%), 890.35 (26.0%), 890.34 (24.0%), 891.34 (14.3%), 891.35 (7.9%), 892.34 (5.0%), 892.35 (3.5%), 893.34 (1.5%), 893.35 (1.2%)

[Synthesis of compound A-7]

The compound A-7 was synthesized according to the following procedure.

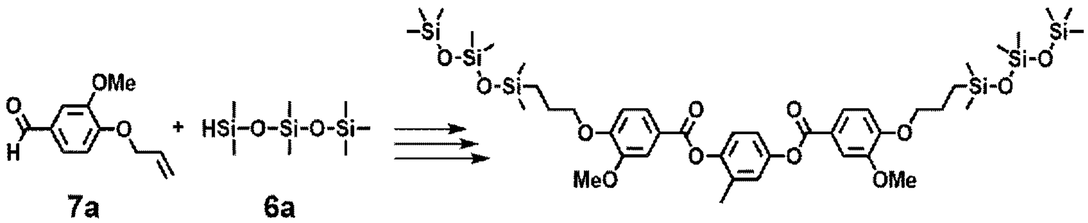

7a 6a

A-7

The compound A-7 was synthesized in the same manner as in the above-mentioned section [Synthesis of compound A-6], except that the aldehyde as a raw material component was changed to a compound 7a.

The MALDI-MS measurement results of the obtained compound A-7 are shown below.

m/z: 948.36 (100.0%), 949.37 (47.8%), 949.36 (30.5%), 950.37 (28.2%), 950.36 (24.0%), 951.36 (14.8%), 951.37 (9.0%), 952.36 (4.6%), 952.37 (4.6%), 953.36 (1.5%), 953.37 (1.4%)

[Synthesis of compound A-8]

The compound A-8 was synthesized according to the following procedure.

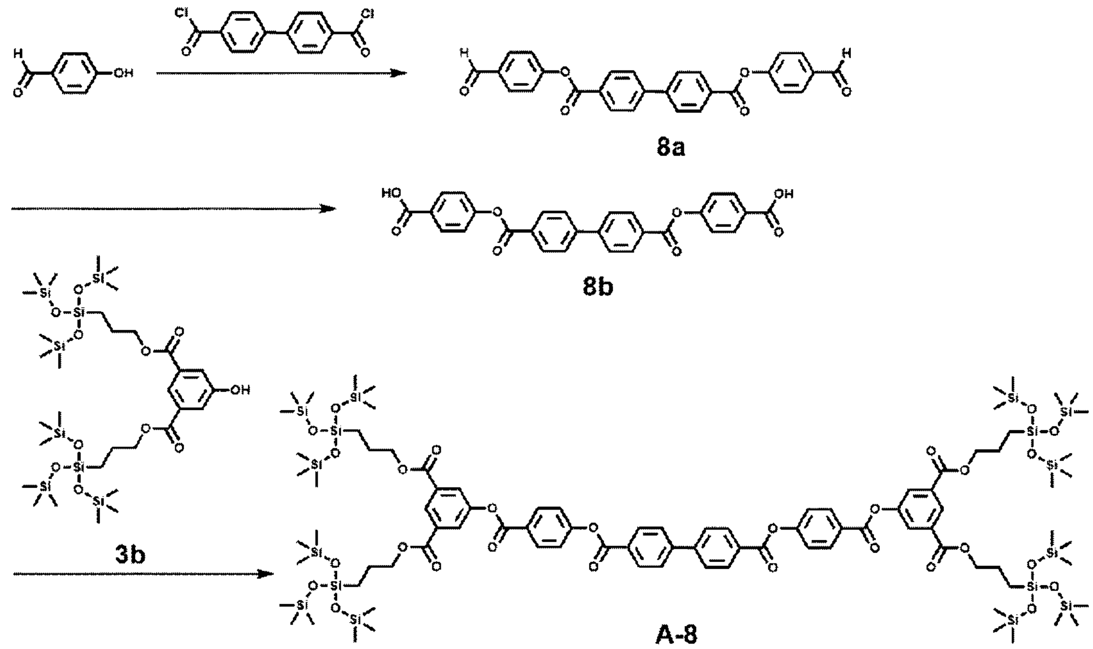


8a

8b

3b

A-8

A compound 8a was synthesized under general esterification conditions, and a compound 8b was synthesized by the same oxidation reaction as in the above-mentioned section <Synthesis of compound 1c>. The compound A-8 was synthesized in the same manner as in the above-mentioned section [Synthesis of compound A-1], except that the raw materials were changed as described above.

The MALDI-MS measurement results of the obtained compound A-8 are shown below.

m/z: 2156.70 (100.0%), 2155.70 (72.7%), 2157.69 (72.5%), 2157.70 (72.3%), 2154.69 (71.1%), 2156.69 (60.0%), 2155.69 (57.7%), 2158.70 (53.2%), 2158.69 (52.1%), 2159.70 (34.5%), 2159.69 (31.0%), 2160.69 (17.8%), 2160.70 (17.4%), 2161.69 (9.1%), 2161.70 (8.2%), 2159.71 (4.1%), 2162.69 (4.1%), 2158.71 (3.7%), 2162.70 (3.6%), 2160.71 (2.4%), 2163.69 (1.6%), 2160.68 (1.5%), 2163.70 (1.3%), 2161.71 (1.3%), 2161.68 (1.0%)

[Synthesis of compound A-9]

The compound A-9 was synthesized according to the following procedure.

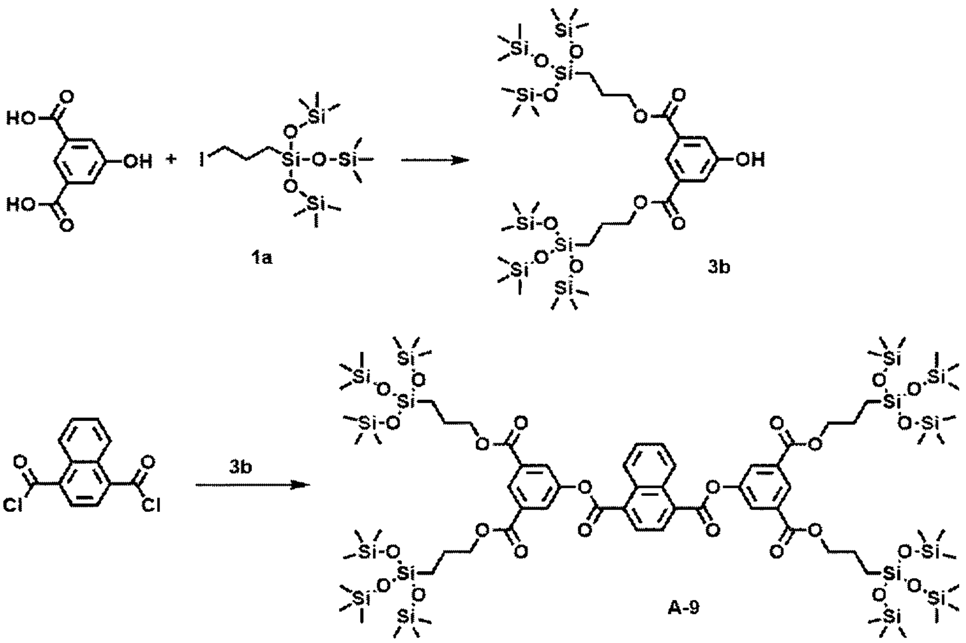


1a

3b

A-9

The compound A-9 was synthesized in the same manner as in the above-mentioned section [Synthesis of

compound A-3], except that 4,4'-biphenyldicarbonyl chloride was changed to 1,4-naphthalenedicarbonyl dichloride.

The MALDI-MS measurement results of the obtained compound A-9 are shown below.

m/z: 1889.64 (100.0%), 1891.64 (65.4%), 1890.64 (65.0%), 1888.64 (60.2%), 1890.63 (50.9%), 1892.64 (47.2%), 1891.63 (29.0%), 1893.63 (21.7%), 1893.64 (19.5%), 1892.63 (17.6%), 1894.64 (11.5%), 1894.63 (10.2%), 1892.65 (7.0%), 1891.65 (5.9%), 1895.64 (5.7%), 1895.63 (4.5%), 1893.65 (2.7%), 1896.64 (2.5%), 1896.63 (2.0%), 1894.65 (1.9%), 1895.65 (1.1%)

[Synthesis of compound A-10]

The compound A-10 was synthesized according to the following procedure.

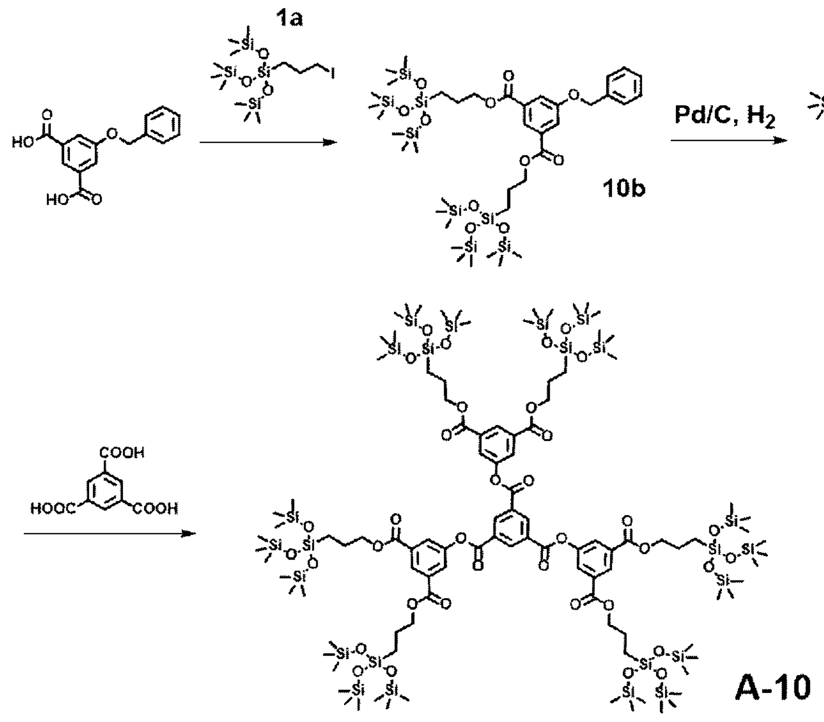


1a

10b

3b

A-10

<Synthesis of compound 10b>

To 250 mL of 1-methyl-2-pyrrolidone were added 5-(benzyloxy)isophthalic acid (2.90 g), potassium carbonate (4.42 g), and the compound 1a (10.89 g), followed by stirring at 55°C for 2 hours. The reaction solution was cooled to room temperature, ethyl acetate (300 mL) and a 1 N hydrochloric acid solution (150 mL) were added thereto, followed by stirring, and then the organic layer was separated. The organic layer was washed twice with 10% saline (100 mL) and dried over anhydrous sodium sulfate. The drying agent was filtered off and the organic layer was concentrated to obtain a crude product as a brown oil. The obtained crude product was purified by silica gel chromatography (hexane/ethyl acetate = 95/5) to obtain 6.7 g of a compound 10b as a colorless oil.

<Synthesis of compound 3b>

The compound 10b (6.00 g) was dissolved in THF (30 mL) and the atmosphere was purged with nitrogen. After 10% palladium carbon (1.35 g) was added thereto, and the atmosphere was purged with nitrogen, followed by stirring at room temperature for 1 hour. The reaction solution was filtered through Celite, and the filtrate was concentrated under reduced pressure to obtain 5.2 g of a compound 3b as a colorless oil.

<Synthesis of compound A-10>

1,3,5-benzenetricarboxylic acid (50 mg) was mixed with the compound 3b (672 mg), 1-ethyl-3-(3-dimethylaminopropyl)carbodiimide hydrochloride (408 mg), N,N-dimethylaminopyridine (9 mg), 1-methylimidazole (60 mg), and dichloromethane (1 mL), followed by stirring at room temperature for 1 hour. The reaction solution was purified by silica gel column chromatography (hexane/ethyl acetate = 95/5) to obtain 440 mg of a compound A-10 as a colorless oil.

The MALDI-MS measurement results of the obtained compound A-10 are shown below.

m/z: 2721.91 (100.0%), 2720.91 (95.2%), 2722.91 (87.7%), 2719.91 (79.3%), 2723.91 (64.5%), 2724.91 (42.5%), 2718.91 (33.2%), 2721.90 (31.1%), 2722.90 (30.0%), 2723.90 (29.9%), 2720.90 (26.6%), 2725.91 (24.8%), 2724.90 (24.2%), 2725.90 (17.7%), 2722.92 (15.4%), 2726.91 (14.0%), 2723.92 (12.9%), 2726.90 (10.0%), 2721.92 (9.9%), 2724.92 (9.5%), 2727.91 (6.9%), 2725.92 (6.0%), 2727.90 (5.6%), 2726.92 (3.5%), 2728.91 (3.3%), 2728.90 (2.8%), 2727.92 (1.7%), 2729.90 (1.3%), 2729.91 (1.3%).

[Synthesis of compound A-11]

The compound A-11 was synthesized according to the following procedure.

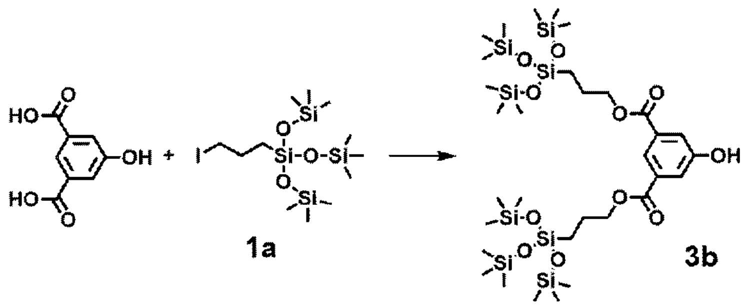

1a

3b

3b

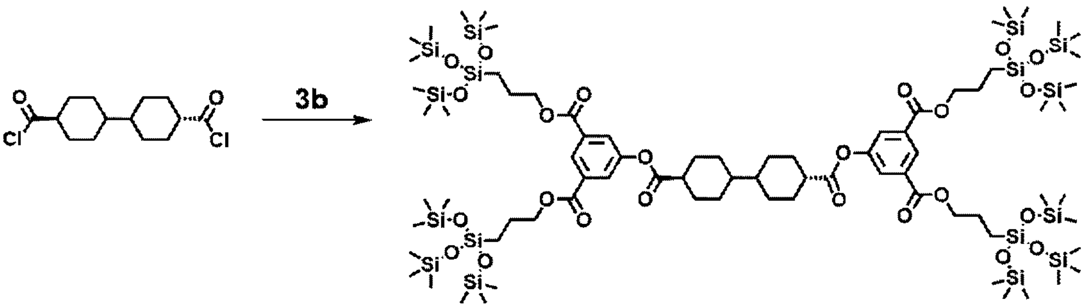

A-11

The compound A-11 was obtained in the same manner as in the above-mentioned section [Synthesis of compound A-3], except that 4,4'-biphenyldicarbonyl chloride was changed to trans-[1,1'-bi(cyclohexane)]-4,4'-dicarbonyl dichloride.

The MALDI-MS measurement results of the obtained compound A-11 are shown below.

m/z: 1928.75 (100.0%), 1929.75 (99.2%), 1926.75 (88.4%), 1927.75 (77.0%), 1928.74 (74.7%), 1927.74 (71.8%), 1930.74 (56.2%), 1930.75 (48.3%), 1929.74 (42.5%), 1931.74 (32.3%), 1931.75 (30.4%), 1932.75 (17.7%), 1932.74 (15.4%), 1933.75 (9.6%), 1929.76 (9.5%), 1933.74 (6.8%), 1930.76 (4.3%), 1931.76 (4.0%), 1934.74 (3.5%), 1932.76 (3.0%), 1934.75 (2.9%), 1935.74 (1.4%), 1935.75 (1.1%), 1933.76 (1.0%)

[Synthesis of compound A-12]

The compound A-12 was synthesized according to the following procedure.

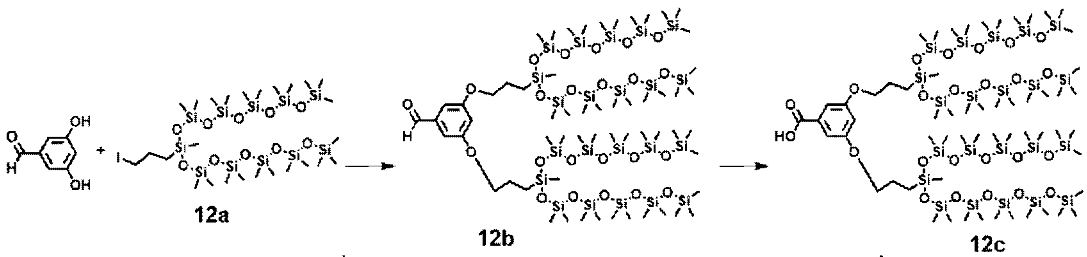

12a

12b

12c

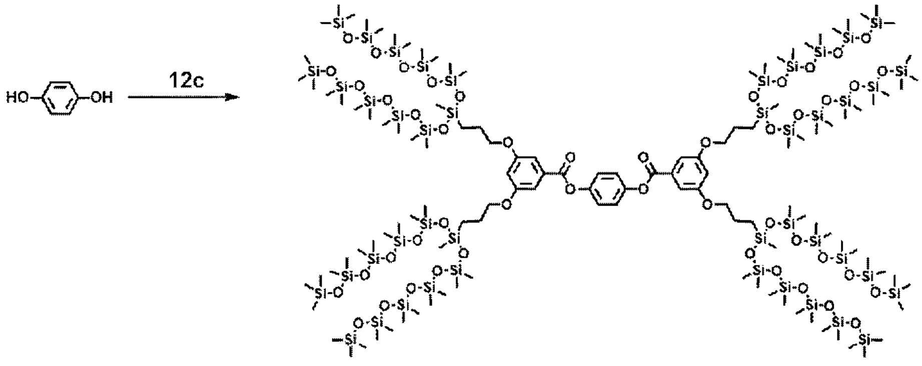


A-12

The compound A-12 was obtained in the same manner as in the above-mentioned section [Synthesis of compound A-1], except that the compound 1a was changed to a compound 12a and the methylhydroquinone was changed to hydroquinone.

The MALDI-MS measurement results of the obtained compound A-12 are shown below.

m/z: 3804.17 (100.0%), 3803.17 (94.7%), 3805.17 (90.1%), 3802.17 (82.9%), 3806.16 (74.3%), 3805.16 (62.9%), 3801.17 (57.8%), 3806.17 (57.3%), 3804.16 (57.3%), 3807.16 (54.4%), 3803.16 (48.2%), 3807.17 (38.1%), 3808.16 (37.5%), 3800.17 (32.0%), 3802.16 (28.8%), 3808.17 (21.4%), 3809.16 (21.3%), 3801.16 (13.2%), 3810.16 (11.6%), 3804.18 (10.5%), 3799.17 (9.0%), 3803.18 (8.8%), 3809.17 (8.4%), 3805.18 (7.8%), 3802.18 (3.5%), 3811.16 (2.3%), 3808.15 (2.1%), 3809.15 (1.4%)

[Synthesis of compound A-13]

The compound A-13 was synthesized according to the following procedure.

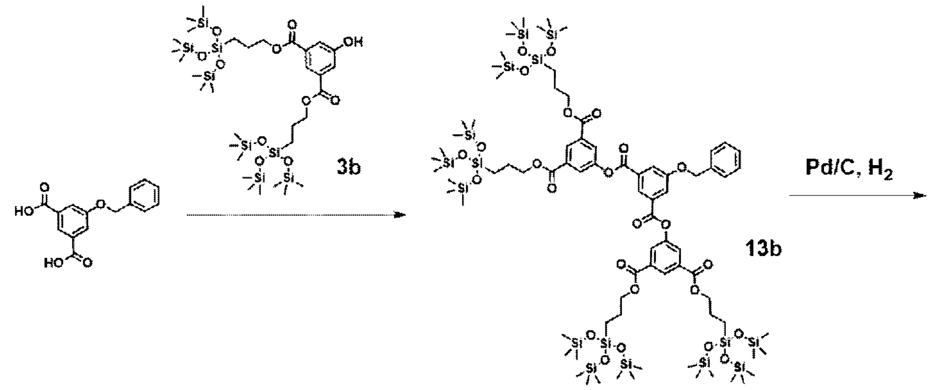


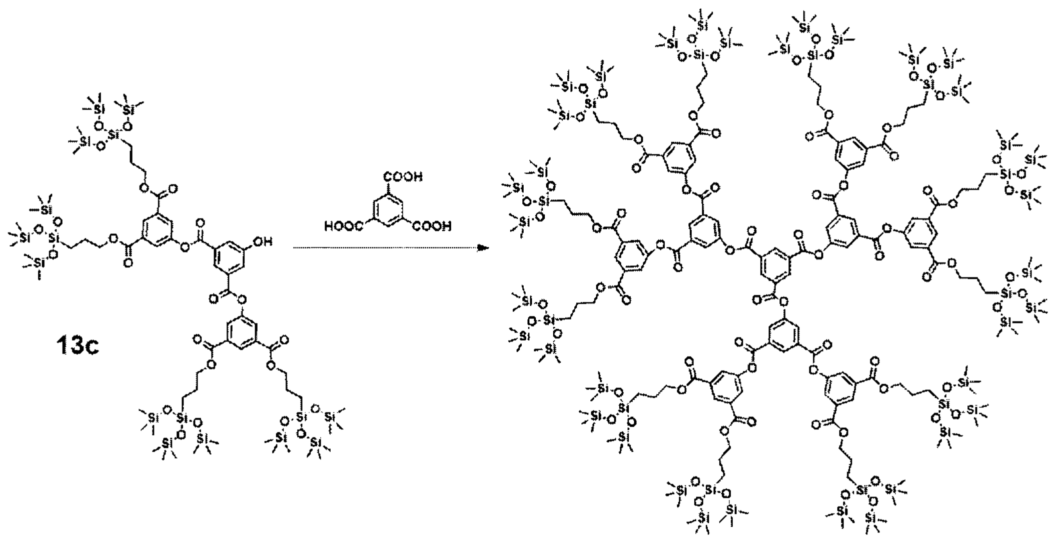


A-13

<Synthesis of compound 13b>

1.8 g of a compound 13b as a colorless oil was obtained in the same manner as in the above-mentioned section <Synthesis of compound 10b>, except that the raw materials were changed to the compound 3b and 5-(benzyloxy) isophthalic acid.

<Synthesis of compound 13c>

1.7 g of a compound 13c as a colorless oil was obtained in the same manner as in the above-mentioned section <Synthesis of compound 3b> in [Synthesis of compound A-10], except that the raw material was changed to the compound 13b.

<Synthesis of compound A-13>

300 mg of a compound A-13 as a colorless oil was obtained in the same manner as in the compound A-10, except that the raw materials were changed to the compound 13c and 1,3,5-benzenetricarboxylic acid.

The MALDI-MS measurement results of the obtained compound A-13 are shown below.

m/z: 5727.83 (100.0%), 5725.83 (99.7%), 5726.83 (94.5%), 5724.83 (92.7%), 5723.83 (66.5%), 5728.83 (62.7%), 5726.84 (61.6%), 5725.84 (57.2%), 5722.83 (44.7%), 5723.84 (43.3%), 5729.83 (42.1%), 5724.84 (39.7%), 5727.84 (34.7%), 5728.84 (27.7%), 5721.83 (26.8%), 5722.84 (26.0%), 5730.83 (24.8%), 5729.84 (17.4%), 5728.82 (17.0%), 5724.82 (15.3%), 5720.83 (12.2%), 5726.82 (11.9%), 5725.82 (11.6%), 5727.82 (11.5%), 5731.83 (9.8%), 5729.82 (9.5%), 5730.84 (9.3%), 5721.84 (7.7%), 5730.82 (5.7%), 5731.82 (4.9%), 5726.85 (3.7%), 5725.85 (3.5%), 5719.83 (2.6%), 5723.82 (2.4%), 5724.85 (1.7%), 5732.83 (1.3%), 5727.85 (1.1%).

[Synthesis of compound A-14]

The compound A-14 was synthesized according to the following procedure.

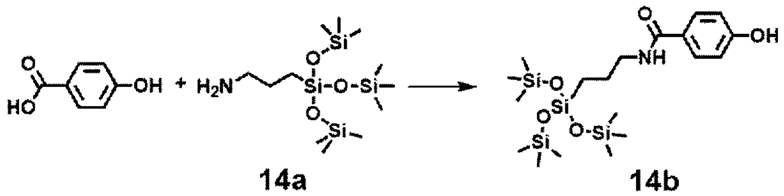

14a 14b

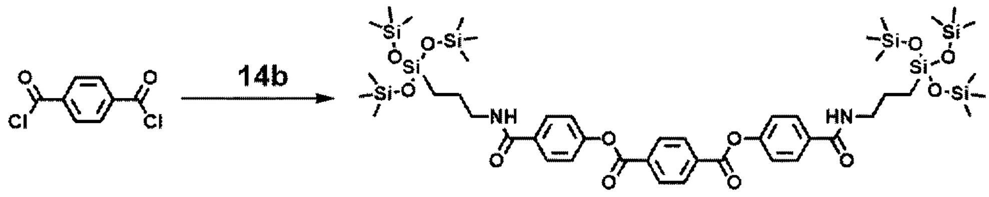


A-14

A compound 14b was synthesized under general amidation conditions. Next, the compound A-14 was synthesized in the same manner as in the above-mentioned section [Synthesis of compound A-2], using the compound 14b and terephthalic acid chloride.

The MALDI-MS measurement results of the obtained compound A-14 are shown below.

m/z: 1076.39 (100.0%), 1077.39 (91.8%), 1078.39 (43.2%), 1078.38 (27.1%), 1079.39 (25.6%), 1080.39 (11.0%), 1079.38 (9.8%), 1080.38 (4.8%), 1081.39 (3.4%), 1081.38 (2.7%), 1079.40 (2.3%), 1080.40 (1.5%), 1082.39 (1.1%)

[Synthesis of compound A-15]

The compound A-15 was synthesized according to the following procedure.

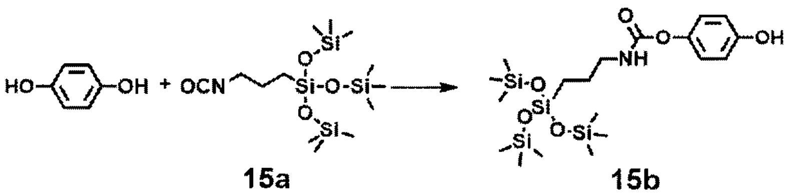

15a 15b

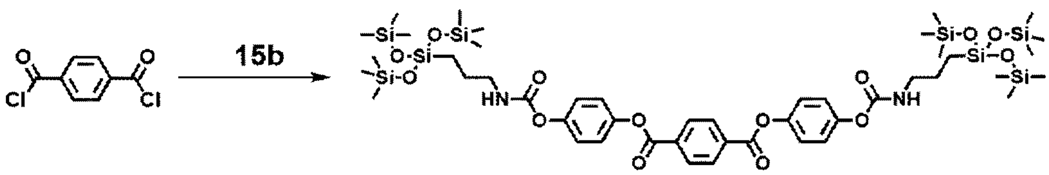


A-15

A compound 15b was synthesized under general urethanization conditions. Next, the compound A-15 was synthesized in the same manner as in the above-mentioned section [Synthesis of compound A-2], using the compound 15b and terephthalic acid chloride.

The MALDI-MS measurement results of the obtained compound A-15 are shown below.

m/z: 1108.38 (100.0%), 1109.38 (91.8%), 1110.38 (43.6%), 1110.37 (27.1%), 1111.38 (26.0%), 1112.38 (11.3%), 1111.37 (9.8%), 1112.37 (4.8%), 1113.38 (3.5%), 1113.37 (2.7%), 1111.39 (2.3%), 1112.39 (1.5%), 1114.38 (1.2%)

[Synthesis of compound A-16]

The compound A-16 was synthesized using 1,4-phenylenediamine and the compound 1c under general amidation conditions. The MALDI-MS measurement results of the obtained compound A-16 are shown below.

m/z: 1020.40 (100.0%), 1021.40 (89.5%), 1022.40 (40.7%), 1022.39 (27.1%), 1023.40 (24.0%), 1024.40 (10.1%), 1023.39 (9.8%), 1024.39 (4.8%), 1025.40 (3.0%), 1025.39 (2.7%), 1023.41 (2.0%), 1024.41 (1.2%), 1026.40 (1.0%)

[Synthesis of compound A-17]

The compound A-17 was obtained in the same manner as in the above-mentioned section [Synthesis of A-3], except that 4,4'-biphenyldicarbonyl chloride was changed to 4,4'-oxydibenzoyl chloride. The MALDI-MS measurement results of the obtained compound A-17 are shown below.

m/z: 1931.65 (100.0%), 1932.65 (84.8%), 1933.65 (66.1%), 1930.65 (59.4%), 1934.65 (48.4%), 1932.64 (31.8%), 1933.64 (28.6%), 1935.65 (25.9%), 1934.64 (17.3%), 1935.64 (14.5%), 1936.65 (13.5%), 1936.64 (8.7%), 1934.66 (7.6%), 1933.66 (7.0%), 1937.65 (6.0%), 1935.66 (4.7%), 1937.64 (4.5%), 1938.65 (2.5%), 1936.66 (2.2%), 1938.64 (2.0%), 1937.66 (1.3%)

[Synthesis of compound A-18]

The compound A-18 was synthesized in the same manner as in the above-mentioned section [Synthesis of compound A-8], except that 4,4'-biphenyldicarbonyl chloride was changed to isophthaloyl chloride. The MALDI-MS measurement results of the obtained compound A-18 are shown below.

m/z: 2080.67 (100.0%), 2081.66 (98.7%), 2078.66 (77.5%), 2079.67 (74.3%), 2080.66 (65.5%), 2079.66 (63.0%), 2082.66 (60.6%), 2081.67 (48.3%), 2082.67 (45.7%), 2083.66 (33.5%), 2083.67 (31.9%), 2084.66 (23.1%), 2084.67 (12.0%), 2085.66 (9.7%), 2085.67 (6.7%), 2086.66 (4.2%), 2083.68 (3.2%), 2086.67 (3.2%), 2082.68 (2.6%), 2084.65 (1.6%), 2087.66 (1.6%), 2085.65 (1.6%), 2084.68 (1.3%), 2087.67 (1.2%)

[Synthesis of compound A-19]

The compound A-19 was synthesized according to the following procedure.

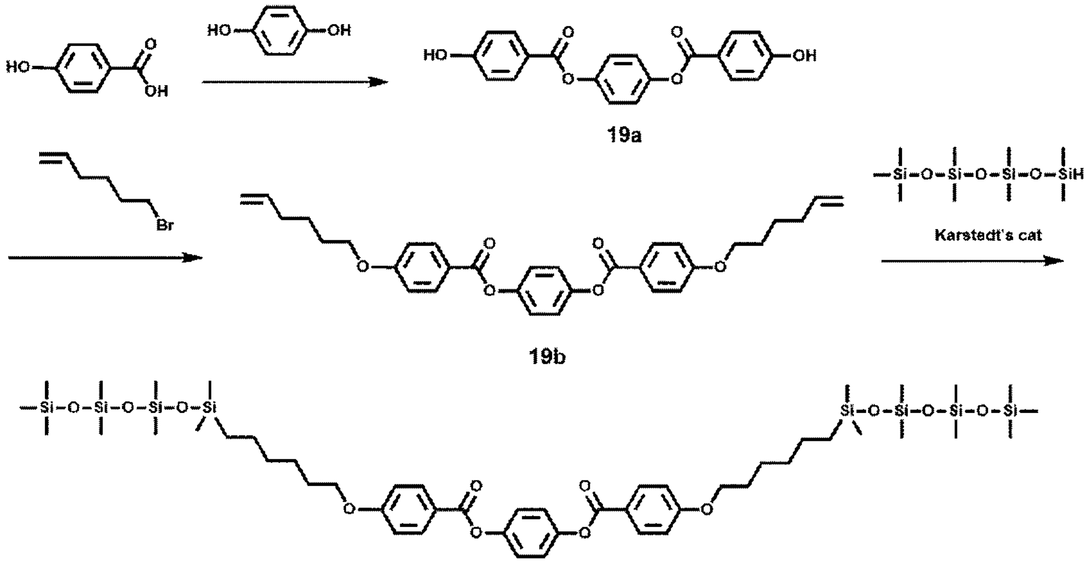


19a

19b

A-19

A compound 19a was synthesized from 4-hydroxybenzoic acid and hydroquinone under general esterification conditions. Next, a compound 19b was synthesized using the compound 19a and 6-bromo-1-hexene with reference to the conditions described in JP2013-209631A. Next, the compound A-19 was synthesized from the compound 19b and the above silane compound by a hydrosilylation reaction using a Karstedt's catalyst. The MALDI-MS measurement results of the obtained compound A-19 are shown below.

m/z: 1106.46 (100.0%), 1107.46 (96.2%), 1108.46 (59.0%), 1109.46 (36.0%), 1108.47 (15.1%), 1110.46 (11.5%), 1111.46 (4.7%), 1110.45 (4.6%), 1109.47 (4.4%), 1110.47 (2.6%), 1112.46 (1.6%), 1111.47 (1.4%), 1111.45 (1.1%)

[Synthesis of compound A-20]

The compound A-20 was synthesized according to the following procedure.

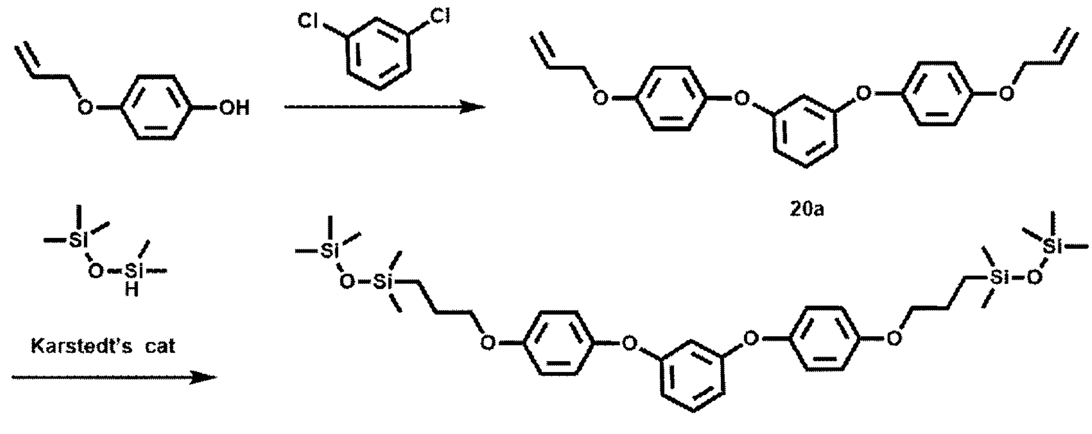


20a

A-20

A compound 20a was synthesized using 4-(2-propenyloxy)phenol and 1,3-dichlorobenzene with reference to the conditions described in RSC Advances (2016), 6, P33249-33258. Next, the compound A-20 was synthesized from the compound 20a and the above silane compound by a hydrosilylation reaction using a Karstedt's catalyst. The MALDI-MS measurement results of the obtained compound A-20 are shown below.

m/z: 670.30 (100.0%), 671.30 (57.3%), 672.30 (23.7%), 673.30 (8.0%), 672.31 (7.0%), 673.31 (2.7%), 674.30 (2.0%)

[Synthesis of compound A-21]

The compound A-21 was synthesized according to the following procedure.

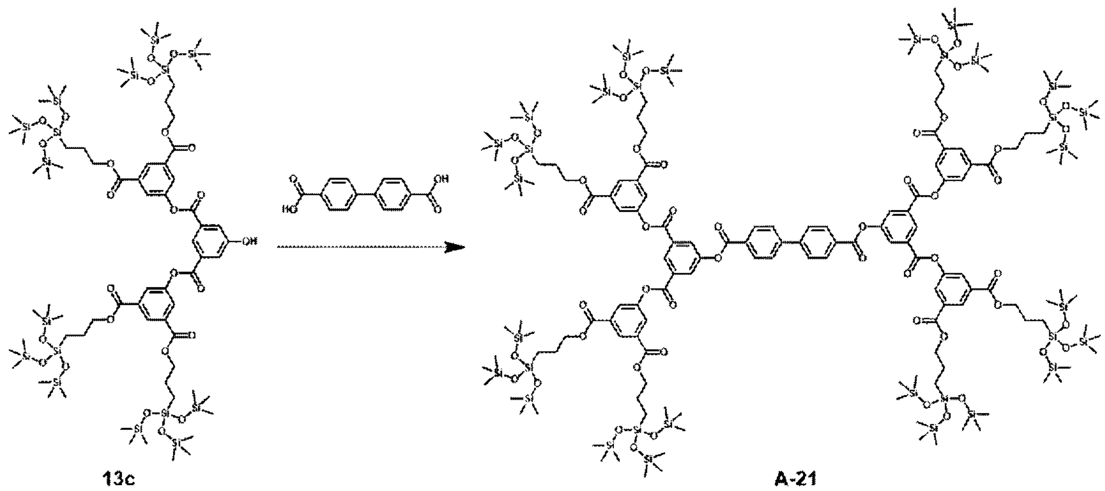

13c

A-21

The compound A-21 was synthesized in the same manner as in the compound A-13, except that the raw material was changed to 4,4'-biphenyldicarboxylic acid.

The MALDI-MS measurement results of the obtained compound A-21 are shown below.

m/z: 3919.27 (100.0%), 3918.27 (93.4%), 3920.27 (93.0%), 3921.27 (77.0%), 3917.27 (71.6%), 3922.27 (54.6%), 3916.27 (42.2%), 3923.27 (34.8%), 3920.26 (30.8%), 3921.26 (30.3%), 3922.26 (27.2%), 3919.26 (26.3%), 3920.28 (25.6%), 3919.28 (23.0%), 3921.28 (22.7%), 3918.26 (21.4%), 3924.27 (17.9%), 3923.26 (16.7%), 3922.28 (14.9%), 3917.26 (13.6%), 3915.27 (12.7%), 3918.28 (10.3%), 3924.26 (9.6%), 3923.28 (6.6%), 3925.27 (6.5%), 3925.26 (4.3%), 3924.28 (1.7%)

[Synthesis of compound A-22]

The compound A-22 was synthesized according to the following procedure.

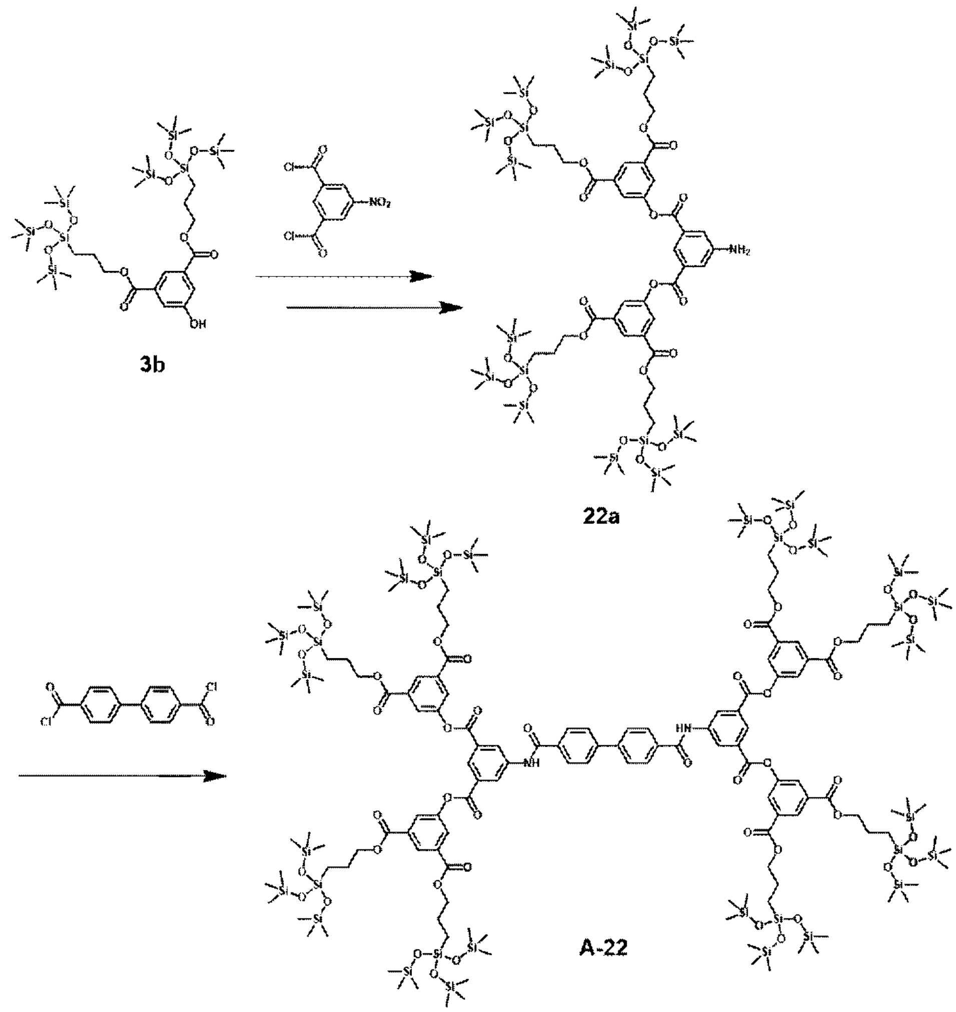

3b

22a

A-22

A compound 22a was synthesized from the compound 3b and 5-nitroisophthaloyl dichloride with reference to the method described in Chemistry - A European Journal (2008), 14(12), 3544. Next, the synthesized compound 22a was reacted with 4,4'-biphenyldicarbonyl chloride under general amidation conditions to obtain the compound A-22.

The MALDI-MS measurement results of the obtained compound A-22 are shown below.

m/z: 3917.30 (100.0%), 3919.30 (94.5%), 3918.30 (92.0%), 3916.30 (91.8%), 3915.30 (67.2%), 3920.30 (54.1%), 3914.30 (42.7%), 3918.31 (38.4%), 3921.30 (35.0%), 3917.31 (26.8%), 3919.31 (24.0%), 3917.29 (23.6%), 3920.29 (23.2%), 3916.29 (21.6%), 3920.31 (19.5%), 3922.30 (19.5%), 3915.31 (19.0%), 3918.29 (18.7%), 3921.29 (13.0%), 3916.31 (12.9%), 3913.30 (12.8%), 3919.29 (12.0%), 3921.31 (10.4%), 3923.30 (6.5%), 3922.31 (5.0%), 3922.29 (5.0%), 3923.29 (4.4%), 3918.32 (1.4%)

[Synthesis of compound A-23]

The compound A-23 was synthesized according to the following procedure.

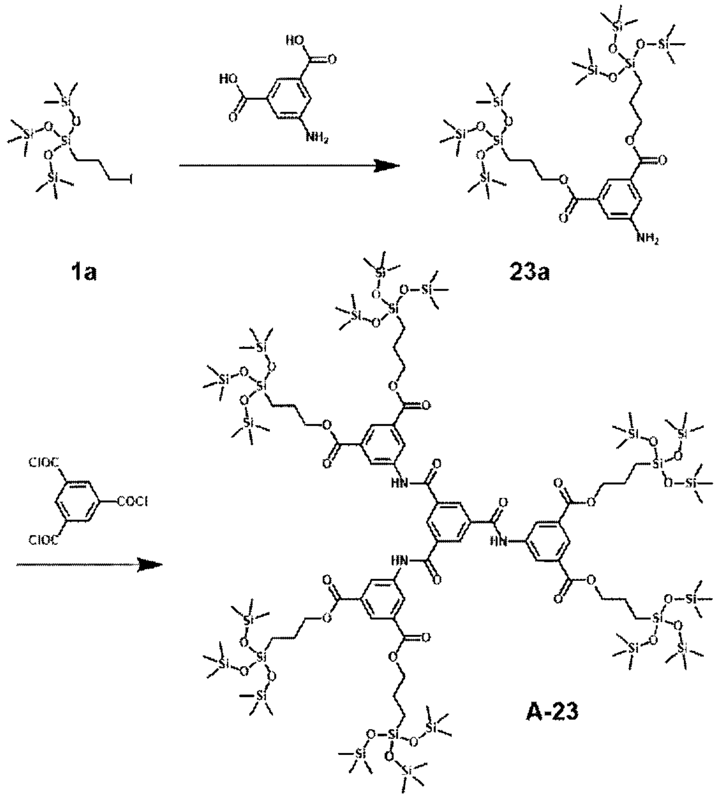

1a

23a

A-23

A compound 23a was synthesized in the same manner as in the compound 3b, except that the raw material was changed to 5-aminoisophthalic acid. Next, the synthesized compound 23a was reacted with trimesoyl chloride by a general amidation method to obtain the compound A-23.

The MALDI-MS measurement results of the obtained compound A-23 are shown below.

m/z: 2717.96 (100.0%), 2718.95 (98.7%), 2718.96 (96.5%), 2719.95 (92.1%), 2719.96 (86.9%), 2720.96 (72.0%), 2720.95 (70.9%), 2717.95 (70.8%), 2716.95 (56.5%), 2716.96 (53.8%), 2721.95 (51.9%), 2715.95 (45.9%), 2721.96 (45.0%), 2722.95 (32.2%), 2722.96 (27.0%), 2723.95 (18.1%), 2723.96 (15.1%), 2724.95 (10.6%), 2724.96 (7.2%), 2720.97 (6.5%), 2719.97 (6.4%), 2721.97 (5.6%), 2725.95 (4.6%), 2722.97 (4.3%), 2722.94 (3.8%), 2721.94 (3.7%), 2725.96 (3.2%), 2723.97 (2.9%), 2723.94 (2.6%), 2726.95 (1.9%), 2726.96 (1.4%), 2724.94 (1.3%), 2725.94 (1.2%), 2724.97 (1.2%), 2718.97 (1.1%)

[Synthesis of compound A-24]

The compound A-24 was synthesized according to the following procedure.

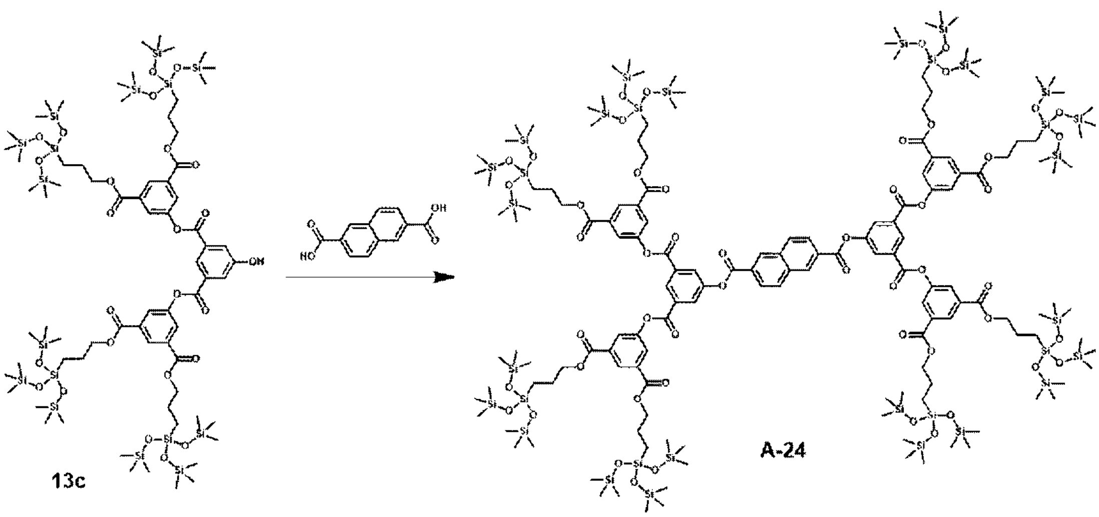

13c

A-24

The compound A-24 was synthesized in the same manner as in the compound A-13, except that the raw material was changed to 2,6-naphthalenedicarboxylic acid.

The MALDI-MS measurement results of the obtained compound A-24 are shown below.

m/z: 3893.25 (100.0%), 3894.25 (92.1%), 3892.25 (89.9%), 3895.25 (78.5%), 3891.25 (71.0%), 3896.25 (57.1%), 3894.26 (54.4%), 3893.26 (53.6%), 3895.26 (47.9%), 3890.25 (46.2%), 3892.26 (45.8%), 3897.25 (36.8%), 3896.26 (34.1%), 3891.26 (21.7%), 3898.25 (20.2%), 3897.26 (17.6%), 3889.25 (13.9%), 3894.24 (11.8%), 3895.24 (11.0%), 3896.24 (10.5%), 3899.25 (8.1%), 3893.24 (7.8%), 3897.24 (7.6%), 3898.26 (6.6%), 3898.24 (4.2%), 3894.27 (2.5%), 3895.27 (2.5%), 3899.24 (1.6%), 3899.26 (1.6%), 3896.27 (1.6%), 3900.25 (1.2%)

[Synthesis of compound A-25]

The compound A-25 was synthesized according to the following procedure.

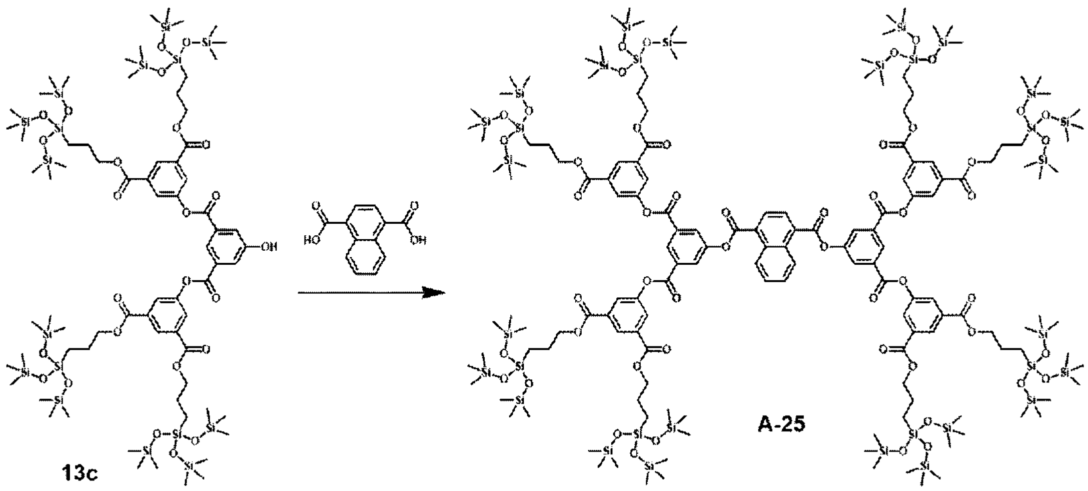

The compound A-25 was synthesized in the same manner as in the compound A-13, except that the raw material was changed to 1,4-naphthalenedicarboxylic acid.

The MALDI-MS measurement results of the obtained compound A-25 are shown below.

m/z: 3893.25 (100.0%), 3894.25 (92.1%), 3892.25 (89.9%), 3895.25 (78.5%), 3891.25 (71.0%), 3896.25 (57.1%), 3894.26 (54.4%), 3893.26 (53.6%), 3895.26 (47.9%), 3890.25 (46.2%), 3892.26 (45.8%), 3897.25 (36.8%), 3896.26 (34.1%), 3891.26 (21.7%), 3898.25 (20.2%), 3897.26 (17.6%), 3889.25 (13.9%), 3894.24 (11.8%), 3895.24 (11.0%), 3896.24 (10.5%), 3899.25 (8.1%), 3893.24 (7.8%), 3897.24 (7.6%), 3898.26 (6.6%), 3898.24 (4.2%), 3894.27 (2.5%), 3895.27 (2.5%), 3899.24 (1.6%), 3899.26 (1.6%), 3896.27 (1.6%), 3900.25 (1.2%)

[Synthesis of compound A-26]

The compound A-26 was synthesized according to the following procedure.

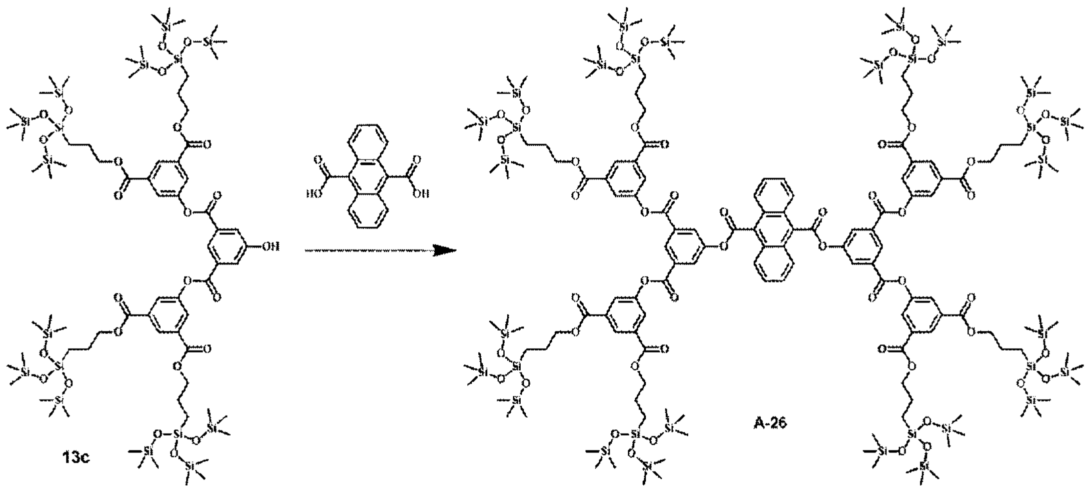

The compound A-26 was synthesized in the same manner as in the compound A-13, except that the raw material was changed to anthracene-9,10-dicarboxylic acid.

The MALDI-MS measurement results of the obtained compound A-26 are shown below.

m/z: 3943.27 (100.0%), 3944.27 (93.3%), 3942.27 (93.2%), 3945.27 (77.6%), 3941.27 (71.3%), 3946.27 (55.2%), 3940.27 (41.8%), 3947.27 (35.3%), 3944.26 (30.4%), 3945.26 (30.0%), 3946.26 (27.0%), 3944.28 (26.3%), 3943.26 (25.8%), 3943.28 (23.5%), 3945.28 (23.4%), 3942.26 (21.0%), 3948.27 (18.3%), 3947.26 (16.7%), 3946.28 (15.7%), 3941.26 (13.4%), 3939.27 (12.5%), 3942.28 (10.5%), 3948.26 (9.7%), 3947.28 (7.2%), 3949.27 (6.8%), 3949.26 (4.2%), 3948.28 (1.8%)

[Synthesis of compound A-27]

The compound A-27 was synthesized according to the following procedure.

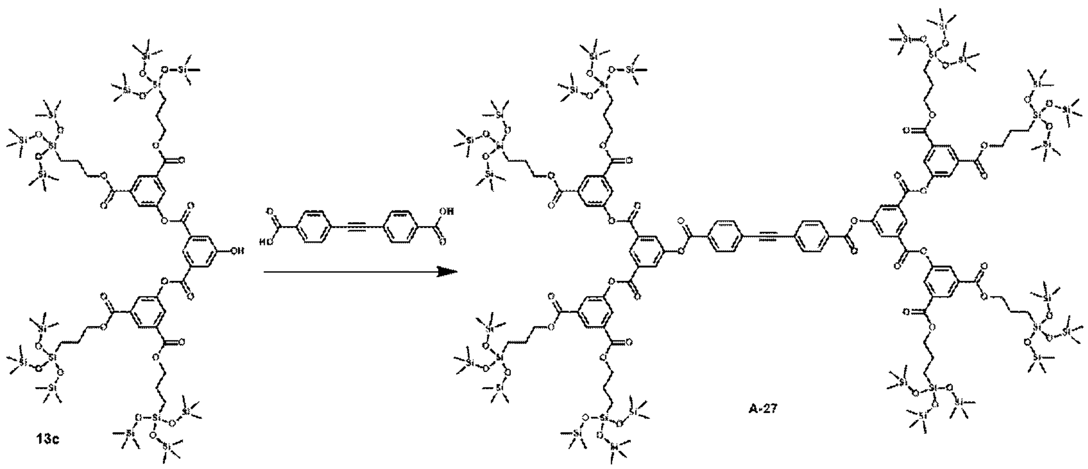

The compound A-27 was synthesized in the same manner as in the compound A-13, except that the raw material was changed to 4,4'-(ethyne-1,2-diyl)dibenzoic acid.

The MALDI-MS measurement results of the obtained compound A-27 are shown below.

m/z: 3943.27 (100.0%), 3944.27 (93.3%), 3942.27 (93.2%), 3945.27 (77.6%), 3941.27 (71.3%), 3946.27 (55.2%), 3940.27 (41.8%), 3947.27 (35.3%), 3944.26 (30.4%), 3945.26 (30.0%), 3946.26 (27.0%), 3944.28 (26.3%), 3943.26 (25.8%), 3943.28 (23.5%), 3945.28 (23.4%), 3942.26 (21.0%), 3948.27 (18.3%), 3947.26 (16.7%), 3946.28 (15.7%), 3941.26 (13.4%), 3939.27 (12.5%), 3942.28 (10.5%), 3948.26 (9.7%), 3947.28 (7.2%), 3949.27 (6.8%), 3949.26 (4.2%), 3948.28 (1.8%)

[Synthesis of compound A-28]

The compound A-28 was synthesized according to the following procedure.

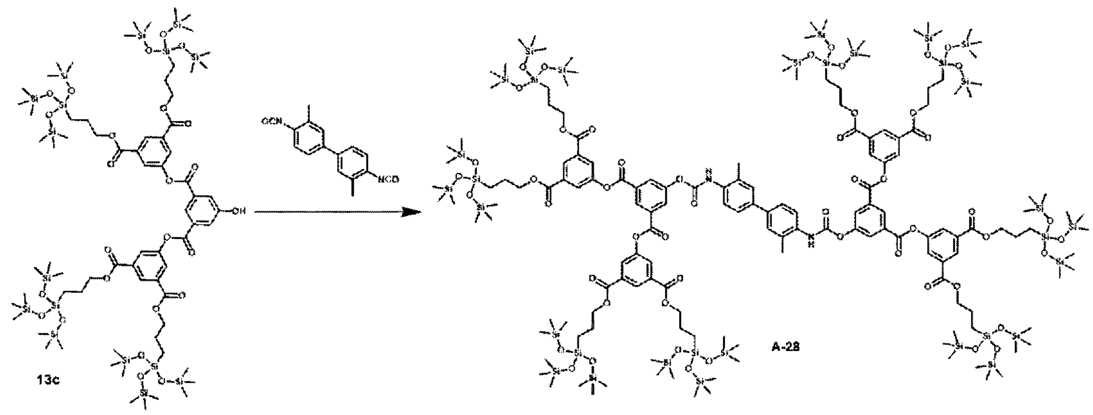

The compound 13c was reacted with 4,4'-diisocyanato-2,2'-dimethylbiphenyl under the conditions of a general urethanization method to obtain a compound A-28.

The MALDI-MS measurement results of the obtained compound A-28 are shown below.

m/z: 3978.32 (100.0%), 3977.32 (92.5%), 3976.32 (82.7%), 3979.32 (76.0%), 3975.32 (66.6%), 3980.32 (54.7%), 3977.33 (51.6%), 3976.33 (43.7%), 3979.33 (42.3%), 3974.32 (42.3%), 3978.33 (39.5%), 3981.32 (35.3%), 3980.33 (32.6%), 3982.32 (19.8%), 3975.33 (19.2%), 3981.33 (17.6%), 3973.32 (12.6%), 3979.31 (11.8%), 3978.31 (10.6%), 3980.31 (9.5%), 3983.32 (7.9%), 3977.31 (7.0%), 3981.31 (6.9%), 3982.33 (5.3%), 3982.31 (4.9%), 3979.34 (2.6%), 3980.34 (1.9%), 3983.33 (1.8%), 3978.34 (1.4%), 3983.31 (1.3%), 3984.32 (1.2%)

[Synthesis of compound A-29]

The compound A-29 was synthesized according to the following procedure.

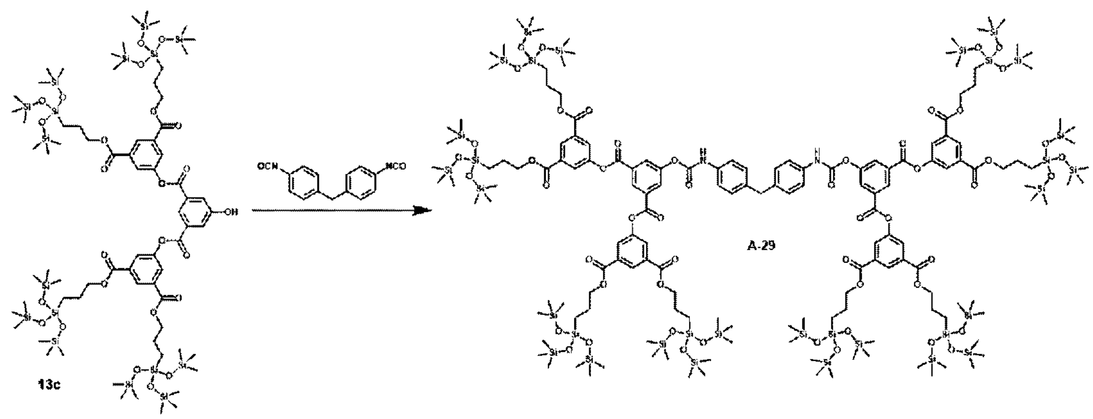

The compound 13c was reacted with 4,4'-methylenediphenyl diisocyanate under the conditions of a general urethanization method to obtain a compound A-29.

The MALDI-MS measurement results of the obtained compound A-29 are shown below.

m/z: 3963.31 (100.0%), 3964.31 (98.0%), 3962.31 (88.0%), 3965.31 (81.8%), 3963.30 (75.8%), 3964.30 (71.8%), 3961.31 (67.1%), 3962.30 (63.7%), 3965.30 (62.6%), 3966.31 (57.5%), 3966.30 (48.9%), 3961.30 (36.0%), 3967.31 (34.1%), 3967.30 (34.0%), 3960.31 (26.2%), 3960.30 (24.8%), 3968.30 (19.7%), 3968.31 (15.8%), 3959.30 (15.2%), 3964.32 (11.6%), 3965.32 (11.4%), 3966.32 (8.4%), 3969.30 (7.6%), 3963.32 (5.3%), 3969.31 (4.9%), 3966.29 (2.9%), 3965.29 (2.8%), 3970.30 (1.7%), 3967.32 (1.6%), 3967.29 (1.3%)

[Synthesis of compound A-30]

The compound A-30 was synthesized according to the following procedure.

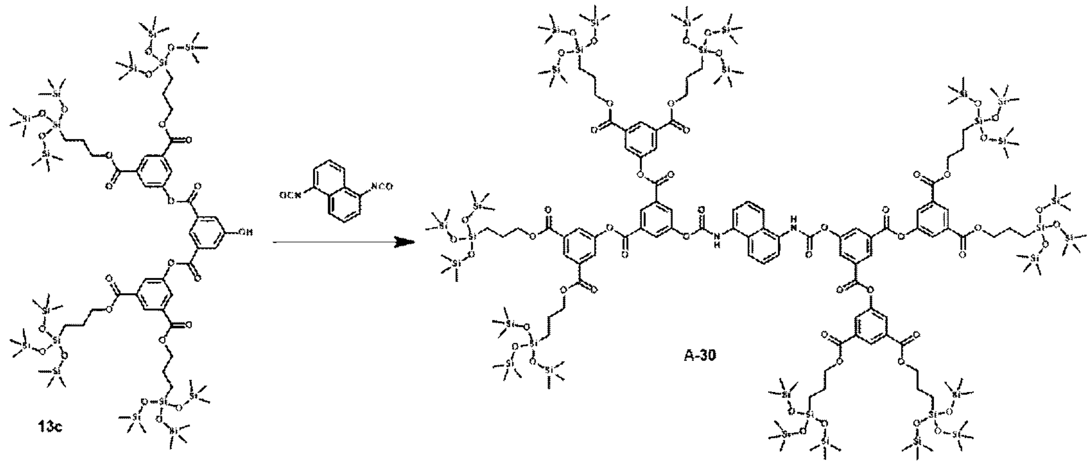

13c

A-30

The compound 13c was reacted with 1,5-diisocyanatonaphthalene under the conditions of a general urethanization method to synthesize a compound A-30.

The MALDI-MS measurement results of the obtained compound A-30 are shown below.

m/z: 3923.27 (100.0%), 3924.28 (94.7%), 3922.28 (91.8%), 3923.28 (84.5%), 3924.27 (83.1%), 3925.28 (82.6%), 3921.28 (70.5%), 3922.27 (68.1%), 3925.27 (67.6%), 3926.27 (66.8%), 3926.28 (47.5%), 3927.27 (39.6%), 3921.27 (38.8%), 3927.28 (30.4%), 3920.28 (27.7%), 3920.27 (26.7%), 3928.27 (20.7%), 3919.27 (16.4%), 3928.28 (15.4%), 3924.29 (11.5%), 3925.29 (11.2%), 3929.27 (8.0%), 3923.29 (5.2%), 3929.28 (4.6%), 3926.29 (4.0%), 3926.26 (3.2%), 3925.26 (3.0%), 3927.26 (1.8%), 3930.27 (1.7%)

[Synthesis of compound B-1]

The compound B-1 was synthesized according to the following procedure.

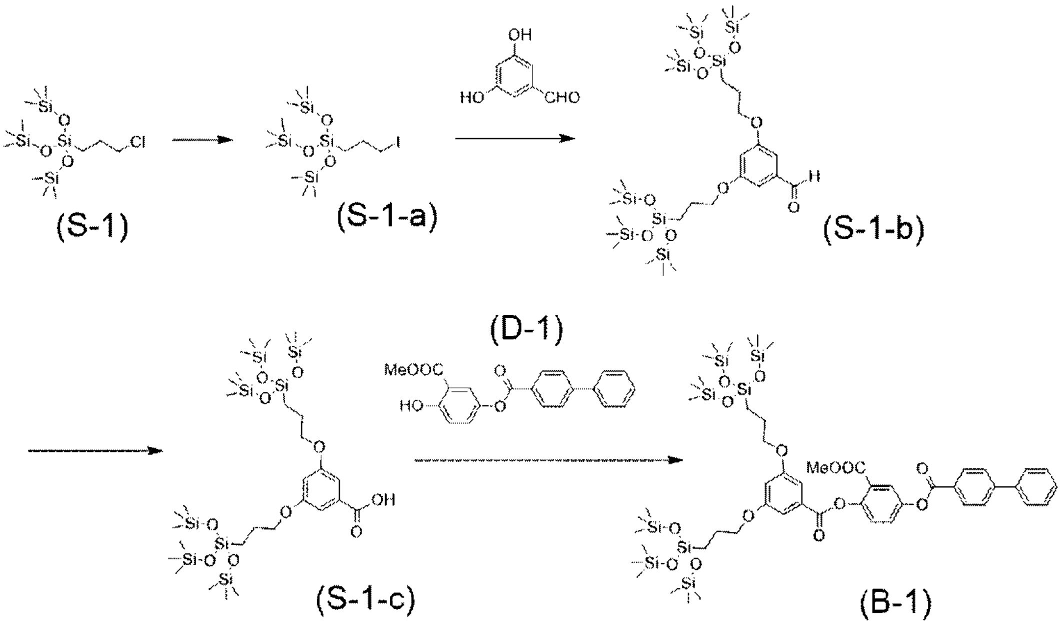

(S-1) (S-1-a) (S-1-b)

(D-1)

(S-1-c) (B-1)

<Synthesis of compound (S-1-a)>

50.0 g of a compound (S-1) and 201.0 g of sodium iodide were added to 600 mL of acetone, followed by heating and stirring at 60°C for 12 hours. After stirring, 1000 mL of hexane and 600 mL of water were added to the obtained reaction solution to carry out a liquid separation treatment, and the aqueous layer was removed. The organic layer was then dried over anhydrous magnesium sulfate. After drying, the anhydrous magnesium sulfate was filtered off, and the filtrate was concentrated to obtain 54.8 g of a compound (S-1-a) as a colorless oil.

<Synthesis of compound (S-1-b)>

To 270 mL of DMF were added 4.2 g of 3,5-dihydroxybenzaldehyde, 29.6 g of the compound (S-1-a), and 29.7 g of cesium carbonate, followed by stirring at room temperature for 3 hours. After stirring, 500 mL of ethyl acetate was added to the obtained reaction solution and the insoluble matter was filtered off. Next, the filtrate was washed with a 1 N hydrochloric acid solution and 10% saline, and then dried over anhydrous magnesium sulfate. After drying, the anhydrous magnesium sulfate was filtered off, and the filtrate was concentrated to obtain a crude product as a pale brown oil. The crude product was purified by silica gel column chromatography (gradient from hexane alone to hexane/ethyl acetate = 93/7) to obtain 8.6 g of a compound (S-1-b) as a colorless oil.

<Synthesis of compound (S-1-c)>

To 50 mL of ethyl acetate were added 8.6 g of the compound (S-1-b), 0.5 g of sodium dihydrogen phosphate, and 36 mg of tetrabutylammonium hydrogen sulfate. 1.4 mL of hydrogen peroxide and an aqueous solution of sodium chlorite (obtained by dissolving 1.4 g of sodium chlorite in 3.5 mL of water) were sequentially added dropwise thereto, followed by stirring at 40°C for 1 hour. After stirring, the aqueous layer was removed from the reaction solution, and the organic layer was washed with a 5% aqueous solution of sodium sulfite and 10% saline and then dried over anhydrous sodium sulfate. After drying, the anhydrous sodium sulfate was filtered off, and then the filtrate was concentrated to obtain 8.0 g of a compound (S-1-c) as a white solid.

<Synthesis of compound (D-1)>

Under a nitrogen stream, 6.0 g of 4-phenylbenzoyl chloride, 30.5 g of methyl gentisate, and 68 mL of butyl acetate were placed in a 200 mL three-neck flask, and the temperature was raised to 110°C to completely dissolve the contents. 108 μL of methanesulfonic acid was added to the contents of the three-neck flask, and the mixture was allowed to react at 110°C for 2 hours. After the reaction, the liquid temperature was lowered to 50°C or lower, and after cooling, 120 mL of methanol was added thereto, and the liquid temperature was lowered to 20°C to precipitate a solid. The precipitated solid was collected by filtration, washed with 100 mL of methanol, and then air-dried overnight to obtain 5.7 g of a compound (D-1) as a white solid (yield: 62%).

<Synthesis of compound B-1>

0.26 g of the compound (D-1), 0.65 g of the compound (S-1-c), and 9 mg of 4-dimethylaminopyridine were dissolved in 4 mL of dichloromethane, and 0.43 g of 1-(3-dimethylaminopropyl)-3-ethylcarbodiimide hydrochloride and 60 μL of 1-methylimidazole were added thereto, followed by stirring at room temperature for 1 hour. After stirring, the reaction solution was purified by silica gel column chromatography (gradient from hexane alone to hexane/ethyl acetate = 95/5) to obtain 0.81 g of a compound B-1 as a white solid.

The MALDI-MS measurement results of the obtained compound B-1 are shown below.

m/z: 1156.40 (100.0%), 1157.40 (96.9%), 1158.40 (56.8%), 1159.40 (29.8%), 1158.41 (19.8%), 1159.41 (12.6%), 1160.40 (11.5%), 1160.41 (8.3%), 1161.40 (4.6%), 1161.41 (2.2%), 1157.41 (1.5%), 1162.40 (1.5%), 1161.39 (1.0%)

[Synthesis of compound B-2]

The compound B-2 was synthesized according to the following procedure.

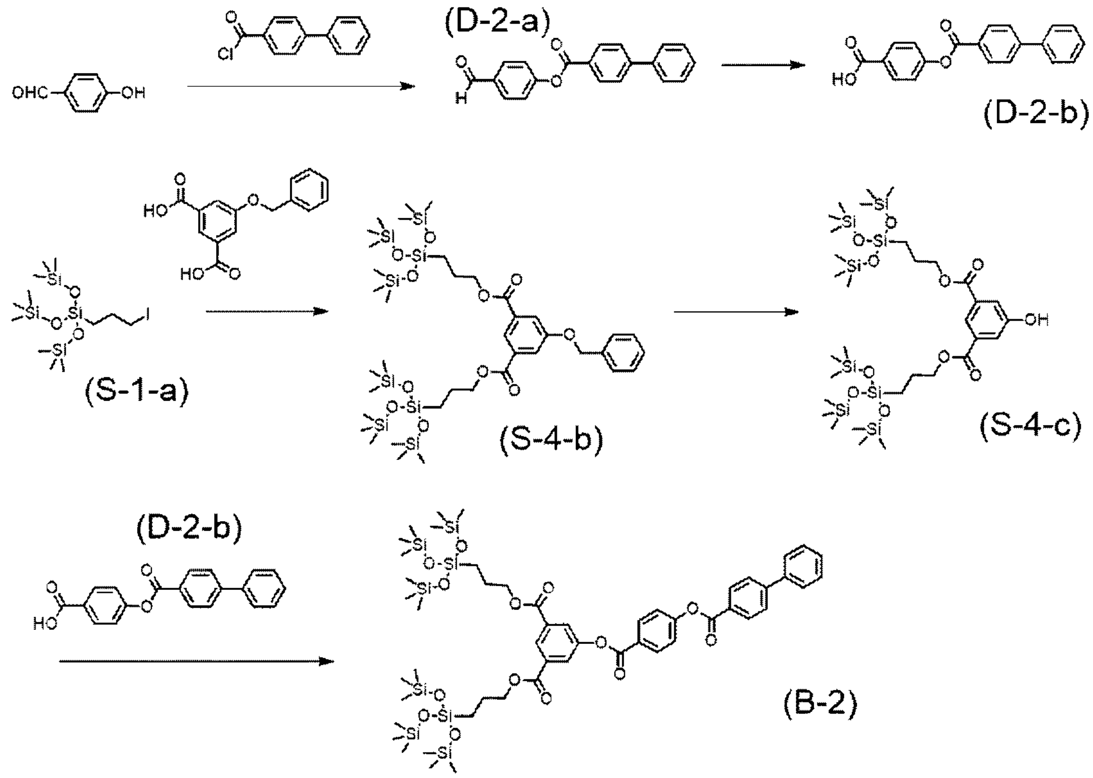

(D-2-a) (D-2-b) (S-1-a) (S-4-b) (S-4-c) (D-2-b) (B-2)

<Synthesis of compound (D-2-a)>

2.96 g of 4-hydroxybenzaldehyde and 5.00 g of 4-phenylbenzoyl chloride were dissolved in 50 mL of tetrahydrofuran, followed by cooling to 5°C. 0.18 mL of 1-methylimidazole and 4.32 mL of N,N-diisopropylamine were added dropwise thereto, followed by stirring at 5°C or lower for 2 hours. 100 mL of methanol was added to the reaction solution, followed by stirring for 5 minutes, and the precipitated solid was collected by filtration and washed with methanol. The obtained solid was dried under reduced pressure to obtain 3.28 g of a compound (D-2-a) as a white solid.

<Synthesis of compound (D-2-b)>

The compound (D-2-b) was obtained with a yield of 91% in the same manner as in the above-mentioned section <Synthesis of compound (S-1-c)>.

<Synthesis of compound (S-4-b)>

To 250 mL of 1-methyl-2-pyrrolidone were added 2.90 g of 5-(benzyloxy)isophthalic acid, 4.42 g of potassium carbonate, and 10.89 g of the compound (S-1-a), followed by stirring at 55°C for 2 hours. The reaction solution was cooled to room temperature, 300 mL of ethyl acetate and 150 mL of a 1 N hydrochloric acid solution were added thereto, followed by stirring, and then the organic layer was separated. The organic layer was washed twice with 100 mL of 10% saline and dried over anhydrous sodium sulfate. The drying agent was filtered off and the organic layer was concentrated to obtain a crude product as a brown oil. The obtained crude product was purified by silica gel chromatography (hexane/ethyl acetate = 95/5) to obtain 6.7 g of a compound (S-4-b) as a colorless oil.

<Synthesis of compound (S-4-c)>

6.00 g of the compound (S-4-b) was dissolved in 30 mL of tetrahydrofuran, and the atmosphere was purged with nitrogen. After 1.35 g of 10% palladium carbon was added thereto, and the atmosphere was purged with nitrogen, followed by stirring at room temperature for 1 hour. The reaction solution was filtered through Celite, and the filtrate was concentrated under reduced pressure to obtain 5.2 g of a compound (S-4-c) as a colorless oil.

<Synthesis of compound B-2>

The compound B-2 was obtained with a yield of 76% in the same manner as in the above-mentioned section <Synthesis of compound B-1>.

The MALDI-MS measurement results of the obtained compound B-2 are shown below.

m/z: 1154.39 (100.0%), 1155.39 (98.3%), 1156.39 (49.4%), 1157.39 (28.8%), 1156.38 (26.8%), 1158.39 (13.2%), 1157.38 (10.3%), 1158.38 (4.6%), 1159.39 (4.2%), 1157.40 (3.3%), 1159.38 (2.9%), 1158.40 (2.1%), 1160.39 (1.4%), 1160.38 (1.0%)

[Synthesis of compound B-3]

The compound B-3 was obtained with a yield of 61% in the same manner as in the above-mentioned section [Synthesis of compound B-1], except that, in the above-mentioned section <Synthesis of compound (D-1)>, methyl gentisate was changed to benzoquinone, and 3,5-dihydroxybenzaldehyde was changed to 3,4-dihydroxybenzaldehyde.

The MALDI-MS measurement results of the obtained compound B-3 are shown below.

m/z: 950.36 (100.0%), 951.36 (81.4%), 952.36 (41.5%), 953.36 (16.8%), 952.37 (12.7%), 954.36 (6.3%), 953.35 (5.1%), 953.37 (3.3%), 954.35 (2.2%), 955.36 (2.1%), 954.37 (1.5%)

[Synthesis of compound B-4]

The compound B-4 was synthesized according to the following procedure.

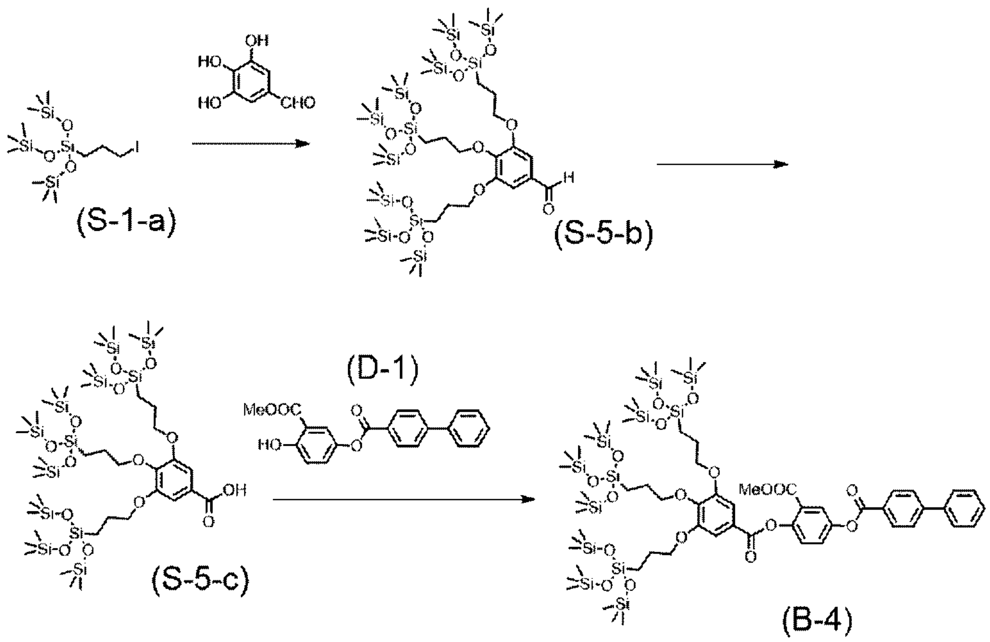

(S-1-a)
(S-5-b)
(D-1)
(S-5-c)
(B-4)

<Synthesis of compound (S-5-b)>

The compound (S-5-b) was obtained with a yield of 52% in the same manner as in the above-mentioned section <Synthesis of compound (S-1-b)>, except that the raw materials were changed as described above.

<Synthesis of compound (S-5-c)>

The compound (S-5-c) was obtained with a yield of 94% in the same manner as in the above-mentioned section <Synthesis of compound (S-1-c)>, except that the raw materials were changed as described above.

<Synthesis of compound B-4>

The compound B-4 was obtained with a yield of 72% in the same manner as in the above-mentioned section <Synthesis of compound B-1>, except that the raw materials were changed as described above.

The MALDI-MS measurement results of the obtained compound B-4 are shown below.
m/z: 1509.54 (100.0%), 1510.54 (79.1%), 1508.54 (76.4%), 1511.54 (52.2%), 1512.54 (27.4%), 1510.55 (19.7%), 1511.55 (18.0%), 1513.54 (13.5%), 1512.55 (8.9%), 1514.54 (5.9%), 1512.53 (5.7%), 1513.55 (4.1%), 1513.53 (3.5%), 1514.55 (2.1%), 1515.54 (2.1%), 1514.53 (1.4%), 1509.55 (1.0%)

[Synthesis of compound B-5]

The compound B-5 was obtained with a yield of 69% in the same manner as in the above-mentioned section [Synthesis of compound B-2], except that 4-hydroxybenzaldehyde was changed to 6-hydroxynaphthaldehyde.
The MALDI-MS measurement results of the obtained compound B-5 are shown below.
m/z: 1205.40 (100.0%), 1204.40 (98.8%), 1206.40 (57.9%), 1207.40 (30.9%), 1206.41 (22.2%), 1207.41 (14.3%), 1208.40 (11.8%), 1208.41 (9.7%), 1209.40 (4.9%), 1209.41 (2.5%), 1210.40 (1.6%), 1205.41 (1.5%), 1210.41 (1.0%)

[Synthesis of compound B-6]

The compound B-6 was synthesized according to the following procedure.

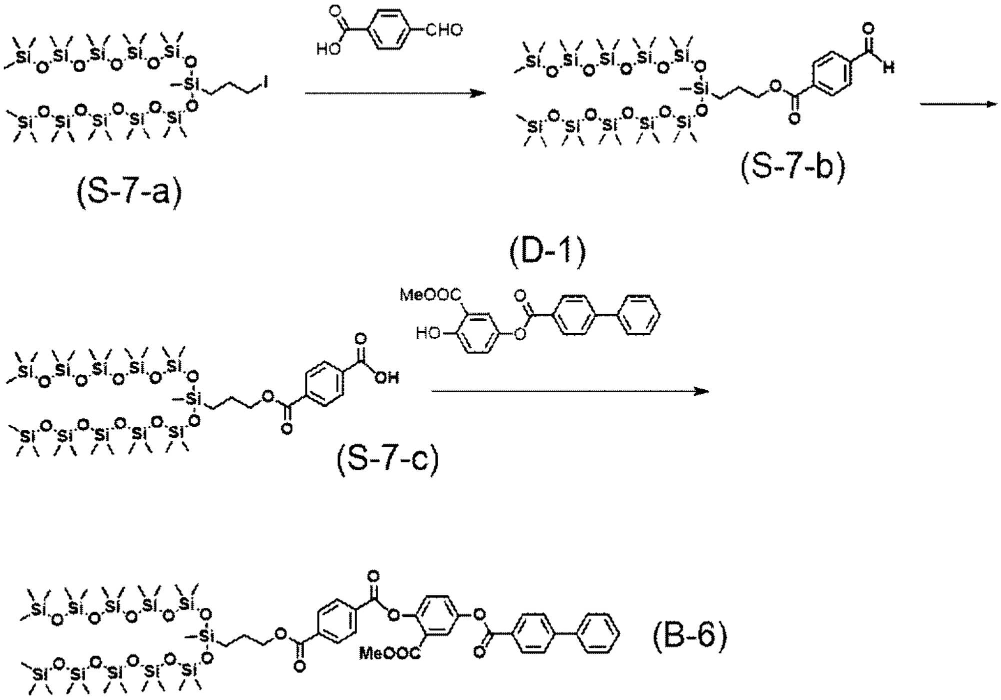

(S-7-a) (S-7-b) (D-1) (S-7-c) (B-6)

<Synthesis of compound (S-7-b)>

The compound (S-7-b) was obtained with a yield of 89% in the same manner as in the above-mentioned section <Synthesis of compound (S-4-b)>, except that the raw materials were changed as described above.

<Synthesis of compound (S-7-c)>

The compound (S-7-c) was obtained with a yield of 92% in the same manner as in the above-mentioned section <Synthesis of compound (S-1-c)>, except that the raw materials were changed as described above.

<Synthesis of compound B-6>

The compound B-6 was obtained with a yield of 70% in the same manner as in the above-mentioned section [Synthesis of compound B-1], except that the raw materials were changed as described above.
The MALDI-MS measurement results of the obtained compound B-6 are shown below.
m/z: 1351.39 (100.0%), 1350.39 (86.2%), 1352.39 (76.1%), 1353.39 (46.5%), 1354.39 (22.1%), 1352.40

(16.4%), 1353.40 (14.1%), 1355.39 (10.4%), 1354.40 (6.4%), 1354.38 (5.3%), 1356.39 (4.2%), 1355.40 (3.1%), 1355.38 (2.4%), 1356.40 (1.4%), 1357.39 (1.4%), 1356.38 (1.0%)

[Synthesis of compound B-7]

The compound B-7 was obtained with a yield of 69% in the same manner as in the above-mentioned section [Synthesis of compound B-2], except that 4-phenylbenzoyl chloride was changed to pyridine-3-carbonyl chloride hydrochloride.
The MALDI-MS measurement results of the obtained compound B-7 are shown below.
m/z: 1079.35 (100.0%), 1080.35 (90.2%), 1081.35 (57.2%), 1082.35 (28.5%), 1081.36 (12.6%), 1083.35 (10.9%), 1082.36 (8.5%), 1084.35 (4.3%), 1083.34 (3.2%), 1083.36 (3.0%), 1085.35 (1.4%), 1084.36 (1.2%), 1084.34 (1.0%)

[Synthesis of compound B-8]

The compound B-8 was obtained with a yield of 71% in the same manner as in the above-mentioned section [Synthesis of compound B-2], except that 4-phenylbenzoyl chloride was changed to p-toluyl chloride. The MALDI-MS measurement results of the obtained compound B-8 are shown below.
m/z: 1092.37 (100.0%), 1093.37 (92.0%), 1094.37 (57.7%), 1095.37 (29.1%), 1094.38 (13.8%), 1096.37 (11.3%), 1095.38 (9.2%), 1097.37 (4.5%), 1096.38 (3.3%), 1096.36 (3.1%), 1098.37 (1.4%), 1097.38 (1.4%), 1097.36 (1.0%)

[Synthesis of compound B-9]

The compound B-9 was synthesized according to the following procedure.

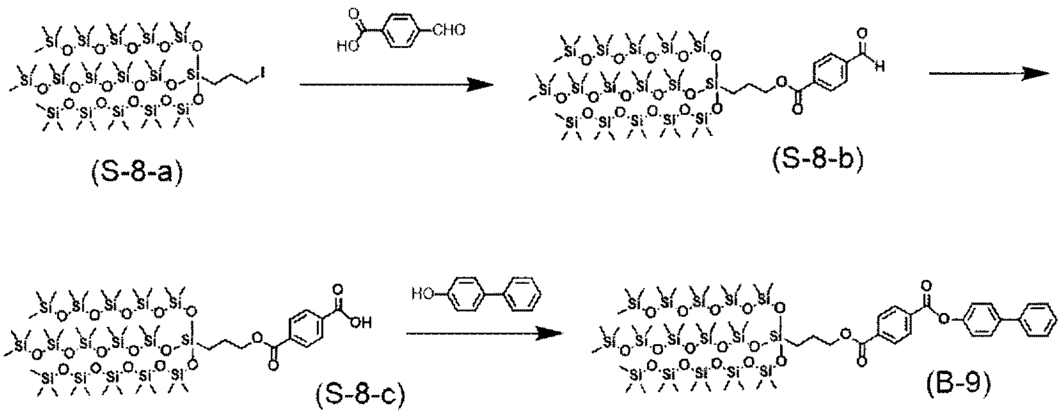

(S-8-a) (S-8-b) (S-8-c) (B-9)

<Synthesis of compound (S-8-b)>

The compound (S-8-b) was obtained with a yield of 83% in the same manner as in the above-mentioned section <Synthesis of compound (S-4-b)>, except that the raw materials were changed as described above.

<Synthesis of compound (S-8-c)>

The compound (S-8-c) was obtained with a yield of 90% in the same manner as in the above-mentioned section <Synthesis of compound (S-1-c)>, except that the raw materials were changed as described above.

<Synthesis of compound B-9>

The compound B-9 was obtained with a yield of 78% in the same manner as in the above-mentioned section [Synthesis of compound B-6], except that the raw materials were changed as described above.
The MALDI-MS measurement results of the obtained compound B-9 are shown below.
m/z: 1543.46 (100.0%), 1544.46 (72.1%), 1542.46 (69.5%), 1545.46 (54.5%), 1544.45 (37.2%), 1546.46 (36.6%), 1545.45 (28.3%), 1546.45 (19.4%), 1547.46 (17.6%), 1547.45 (14.5%), 1548.46 (8.1%), 1548.45 (8.0%),

1545.47 (4.9%), 1549.46 (3.7%), 1549.45 (3.7%), 1546.47 (3.4%), 1547.47 (2.0%), 1550.45 (1.6%), 1550.46 (1.3%), 1548.47 (1.2%)

[Formation of optically anisotropic film]

[Production of photo-alignment film]

A glass substrate was prepared as a support. A coating liquid for forming a photo-alignment film was applied onto the support using a spin coater at 2500 rpm for 30 seconds. Next, the support onto which the coating liquid for forming a photo-alignment film was applied was dried on a hot plate at 60°C for 60 seconds to form a dried film on the support.

| Coating liquid for forming photo-alignment film | |
|---|---|
| Material for photo alignment shown below | 1.00 parts by mass |
| Water | 16.00 parts by mass |
| Butoxyethanol | 42.00 parts by mass |
| Propylene glycol monomethyl ether | 42.00 parts by mass |

Material for photo alignment

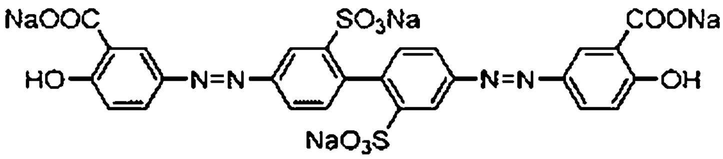

The above-mentioned dried film was irradiated with linearly polarized UV light at 10 mW/cm$^2$ for 30 seconds using a 365 nm LED-UV irradiation device through a wire grid polarizing plate to form a photo-alignment film.

[Example 1]

A coating liquid 1 for forming an optically anisotropic layer having the following composition was prepared. In Example 1, the silicon-containing compound described in Table 1 which will be given later is the compound A-1.

| Coating liquid 1 for forming optically anisotropic layer | |
|---|---|
| · Polymerizable liquid crystal compound 1 shown below | 80.00 parts by mass |
| · Omnirad 819 (available from IGM Resins B.V.) | 3.00 parts by mass |
| · Silicon-containing compound shown in Table 1 | 0.10 parts by mass |
| · 2-Butanone | amount that results in a concentration of solid contents of 30% by mass |

Polymerizable liquid crystal compound 1 (mixture)

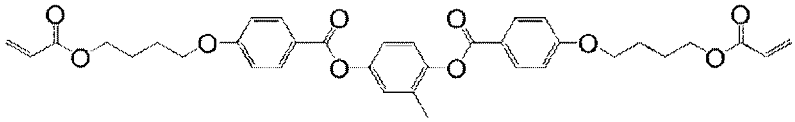

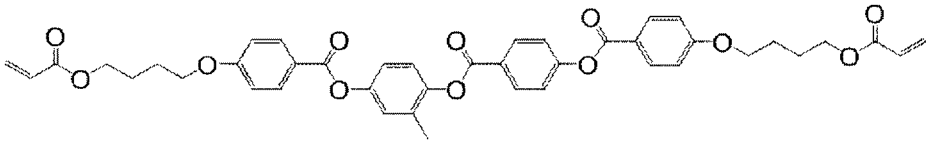

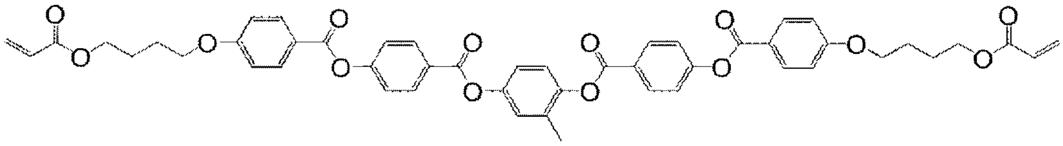

50 μL of the coating liquid 1 for forming an optically anisotropic layer was weighed using a micropipette and was added dropwise onto the prepared photo-alignment film, followed by spin coating at a rotation speed of 1500 rpm. Next, the obtained coating film was subjected to a heating treatment at 80°C for 1 minute, and then irradiation with UV light at 10 $mW/cm^2$ for 30 seconds using a 365 nm LED-UV irradiation device in a nitrogen atmosphere, thereby forming an optically anisotropic layer 1A.

[Examples 2 to 20 and Examples 32 to 41]

An optically anisotropic film was formed in the same manner as in Example 1, except that the silicon-containing compound in the coating liquid 1 for forming an optically anisotropic layer was changed to the compound shown in Table 1 and Table 2.

[Example 21]

A coating liquid 3 for forming an optically anisotropic layer having the following composition was prepared.

| Coating liquid 3 for forming optically anisotropic layer | |
|---|---|
| · Polymerizable disk-like liquid crystal compound M4 shown below | 80 parts by mass |
| · Polymerizable disk-like liquid crystal compound M5 shown below | 20 parts by mass |
| · Omnirad 819 (available from IGM Resins B.V.) | 3 parts by mass |
| · Silicon-containing compound shown in Table 1 | 0.50 parts by mass |
| · Methyl ethyl ketone (MEK) | amount that results in a concentration of solid contents of 33% by mass |

Polymerizable disk-like liquid crystal compound M4

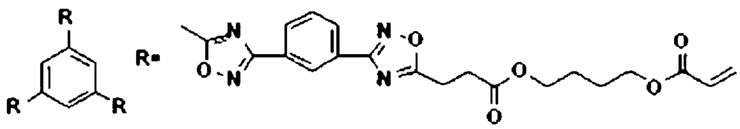

Polymerizable disk-like liquid crystal compound M5

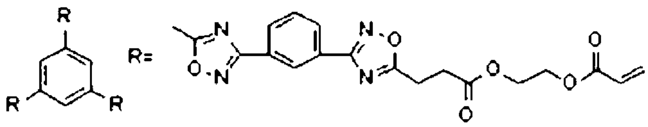

50 μL of the coating liquid 3 for forming an optically anisotropic layer was weighed using a micropipette, and was added dropwise onto a glass provided with an alignment film (PVA-103), followed by spin coating to form a coating film. The obtained coating film was subjected to a heating treatment at 110°C for 2 minutes and further subjected to a cooling treatment for 1 minute. Next, the coating film after the cooling treatment was irradiated with ultraviolet rays (ultraviolet intensity: 500 mJ/cm2) in a nitrogen atmosphere to cure the coating film, thereby obtaining an optically anisotropic film 1B. The film thickness of the obtained optically anisotropic film was about 1.1 μm.

[Example 22]

An optically anisotropic film was formed in the same manner as in Example 21, except that the silicon-containing compound in the coating liquid 3 for forming an optically anisotropic layer was changed to the compound shown in Table 1.

[Example 23]

A coating liquid 2 for forming an optically anisotropic layer having the following composition was prepared.

| Coating liquid 2 for forming optically anisotropic layer | |
|---|---|
| · Polymerizable disk-like liquid crystal compound M4 shown above | 80 parts by mass |
| · Polymerizable disk-like liquid crystal compound M5 shown above | 20 parts by mass |
| · Alignment film interface alignment agent 1 shown above | 0.55 parts by mass |
| · Omnirad 819 (available from IGM Resins B.V.) | 3 parts by mass |
| · Silicon-containing compound shown in Table 1 | 0.10 parts by mass |
| · Methyl ethyl ketone (MEK) | amount that results in a concentration of solid contents of 33% by mass |

50 μL of the coating liquid 2 for forming an optically anisotropic layer was weighed using a micropipette and was added dropwise onto the prepared photo-alignment film, followed by spin coating at a rotation speed of 1500 rpm. Next, the obtained coating film was subjected to a heating treatment at 80°C for 1 minute, and then irradiation with UV light at 10 mW/$cm^2$ for 30 seconds using a 365 nm LED-UV irradiation device in a nitrogen atmosphere, thereby forming an optically anisotropic layer 2A.

[Examples 24 to 31]

An optically anisotropic film was formed in the same manner as in Example 23, except that the silicon-containing compound in the coating liquid 2 for forming an optically anisotropic layer was changed to the compound shown in Table 1.

[Comparative Examples 1 and 2]

An optically anisotropic film was formed in the same manner as in Example 24, except that the silicon-containing compound in the coating liquid 2 for forming an optically anisotropic layer was changed to the compound shown in Table 1.

[Comparative Examples 3 to 7]

An optically anisotropic film was formed in the same manner as in Example 1, except that the silicon-containing compound in the coating liquid 1 for forming an optically anisotropic layer was changed to the compound shown in Table 1.

[Evaluation]

The obtained optically anisotropic layer of each of Examples and Comparative Examples was observed under an

optical microscope, and evaluated for visible unevenness and alignment unevenness according to the following standards. In practice, it is preferable that the evaluation of the visible unevenness and the alignment unevenness is "B" or higher.

[Evaluation standards for visible unevenness]

"A": There is almost no visible unevenness.
"B": There is slight visible unevenness.
"C": There is visible unevenness.
"D": There is significant visible unevenness.

(Evaluation standards for alignment unevenness)

"A": There are almost no alignment defects.
"B": There are slight alignment defects.
"C": There are alignment defects.
"D": There are significant alignment defects.

[Results]

The type of the silicon-containing compound used for forming each optically anisotropic film, the type of the coating liquid for forming an optically anisotropic layer used for forming each optically anisotropic film, and the evaluation results are shown in the tables.

In the tables, the silicon-containing compound contained in the coating liquid for forming an optically anisotropic layer is the silicon-containing compound shown in the tables. For example, the coating liquid for forming an optically anisotropic layer used in Example 2 is a composition in which the silicon-containing compound in the above-mentioned coating liquid 1 for forming an optically anisotropic layer is the compound A-2, the coating liquid for forming an optically anisotropic layer used in Example 22 is a composition in which the silicon-containing compound in the above-mentioned coating liquid 2 for forming an optically anisotropic layer is the compound A-2, and the coating liquid for forming an optically anisotropic layer used in Example 24 is a composition in which the silicon-containing compound in the above-mentioned coating liquid 3 for forming an optically anisotropic layer is the compound B-2.

In the tables, the column of "Si-Me/Mw" indicates a value obtained by dividing the total number of methyl groups bonded to silicon atoms of the silicon-containing compound by the molecular weight of the compound.

[Table 1]

| | Silicon-containing compound | Si-Me/Mw | Molecular weight | Coating liquid for forming optically anisotropic layer | Visible unevenness | Alignment unevenness |
|---|---|---|---|---|---|---|
| Example 1 | A-1 | 0.0173 | 1037.8 | 1 | A | A |
| Example 2 | A-2 | 0.0167 | 1079.8 | 1 | A | A |
| Example 3 | A-3 | 0.0188 | 1917.36 | 1 | A | A |
| Example 4 | A-4 | 0.0157 | 889.5 | 1 | B | A |
| Example 5 | A-5 | 0.0179 | 1228.1 | 1 | A | A |
| Example 6 | A-6 | 0.0157 | 889.5 | 1 | B | A |
| Example 7 | A-7 | 0.0147 | 949.55 | 1 | B | A |
| Example 8 | A-8 | 0.0167 | 2157.58 | 1 | A | A |
| Example 9 | A-9 | 0.0190 | 1891.32 | 1 | A | A |

(continued)

| | Silicon-containing compound | Si-Me/Mw | Molecular weight | Coating liquid for forming optically anisotropic layer | Visible unevenness | Alignment unevenness |
|---|---|---|---|---|---|---|
| Example 10 | A-10 | 0.0211 | 2554.78 | 1 | A | A |
| Example 11 | A-11 | 0.0187 | 1929.46 | 1 | A | B |
| Example 12 | A-12 | 0.0240 | 3805.54 | 1 | A | A |
| Example 13 | A-13 | 0.0200 | 5727.89 | 1 | A | A |
| Example 14 | A-14 | 0.0167 | 1077.83 | 1 | A | B |
| Example 15 | A-15 | 0.0171 | 1109.83 | 1 | A | A |
| Example 16 | A-16 | 0.0176 | 1021.81 | 1 | A | B |
| Example 17 | A-17 | 0.0186 | 1933.38 | 1 | A | A |
| Example 18 | A-18 | 0.0173 | 2081.48 | 1 | A | B |
| Example 19 | A-19 | 0.0162 | 1107.94 | 1 | B | A |
| Example 20 | A-20 | 0.0149 | 671.14 | 1 | B | B |
| Example 21 | A-1 | 0.0173 | 1037.8 | 3 | A | A |
| Example 22 | A-2 | 0.0167 | 1079.8 | 3 | A | A |
| Example 23 | B-1 | 0.0155 | 1157.91 | 2 | A | A |
| Example 24 | B-2 | 0.0156 | 1155.89 | 2 | A | A |
| Example 25 | B-3 | 0.0147 | 951.57 | 2 | A | A |
| Example 26 | B-4 | 0.0179 | 1510.83 | 2 | A | B |
| Example 27 | B-5 | 0.0149 | 1205.95 | 2 | A | A |
| Example 28 | B-6 | 0.0170 | 1352.27 | 2 | A | A |
| Example 29 | B-7 | 0.0167 | 1080.78 | 2 | A | A |
| Example 30 | B-8 | 0.0165 | 1093.82 | 2 | A | A |
| Example 31 | B-9 | 0.0214 | 1544.9 | 2 | A | B |
| Comparative Example 1 | C-1 | 0.0072 | 691.09 | 2 | D | C |
| Comparative Example 2 | C-2 | 0.0113 | 439.75 | 2 | D | D |
| Comparative Example 3 | C-3 | 0.0222 | 1440.57 | 1 | D | C |
| Comparative Example 4 | C-4 | 0.0098 | 60000 | 1 | C | C |
| Comparative Example 5 | C-5 | 0.0104 | 1340.11 | 1 | D | C |
| Comparative Example 6 | C-6 | 0.0139 | 1009.75 | 1 | C | C |
| Comparative Example 7 | C-7 | 0.0246 | 4750.5 | 1 | C | C |

[Table 2]

| | Silicon-containing compound | Si-Me/Mw | Molecular weight | Coating liquid for forming optically anisotropic layer | Visible unevenness | Alignment unevenness |
|---|---|---|---|---|---|---|
| Example 32 | A-21 | 0.0184 | 3920.73 | 1 | A | A |
| Example 33 | A-22 | 0.0184 | 3918.76 | 1 | A | B |

(continued)

| | Silicon-containing compound | Si-Me/Mw | Molecular weight | Coating liquid for forming optically anisotropic layer | Visible unevenness | Alignment unevenness |
|---|---|---|---|---|---|---|
| Example 34 | A-23 | 0.0199 | 2719.89 | 1 | A | B |
| Example 35 | A-24 | 0.0185 | 3894.69 | 1 | A | A |
| Example 36 | A-25 | 0.0185 | 3894.69 | 1 | A | A |
| Example 37 | A-26 | 0.0183 | 3944.75 | 1 | A | A |
| Example 38 | A-27 | 0.0183 | 3944.75 | 1 | A | A |
| Example 39 | A-28 | 0.0181 | 3978.81 | 1 | A | A |
| Example 40 | A-29 | 0.0182 | 3964.78 | 1 | A | A |
| Example 41 | A-30 | 0.0183 | 3924.72 | 1 | A | A |

From the results shown in the above tables, it was confirmed that an optically anisotropic film in which the visible unevenness and the alignment unevenness were suppressed could be formed by the composition according to the embodiment of the present invention.

From the comparison of Examples 4, 6, 7, and 19 with other Examples, it was confirmed that the visible unevenness suppression performance is more excellent in a case where the silicon-containing group having a Si-O-Si structure in the compound A has a group represented by Formula (C-2) or a group represented by Formula (C-3).

From the comparison of Examples 1 to 20 and 32 to 41, it was confirmed that the visible unevenness suppression performance is more excellent in a case where the silicon-containing group having a Si-O-Si structure contains 5 or more silicon atoms.

From the comparison of Example 20 with Examples 1 to 19 and 32 to 41, it was confirmed that the effect of the present invention is more excellent in a case where the molecular weight of the compound A is 700 or more.

From the comparison of Examples 1 to 20 and 32 to 41, it was confirmed that the effect of the present invention is more excellent in a case where the value obtained by dividing the total number of methyl groups bonded to silicon atoms in the compound A by the molecular weight of the compound is 0.017 to 0.025.

From the comparison of Examples 26 and 31 with other Examples, it was confirmed that the alignment unevenness suppression performance is more excellent in a case where the number of groups represented by $-L^{b1}-X^{b1}$ that are substituted on the aromatic ring in the group represented by $B^{b1}$ is 2 or less and the number of groups represented by $-L^{b1}-X^{b1}$ in the group having two or more groups represented by $-L^{b1}-X^{b1}$ is 2.

From the comparison of Examples 14, 16, 33, and 34 with other Examples, it was confirmed that the alignment unevenness suppression performance is more excellent in a case where $Z^{a1}$ is -O-, -CO-, -CO-O-, or -NH-CO-O-.

## Claims

**1.** A composition comprising:

a silicon-containing compound selected from the group consisting of a compound A that satisfies Requirement (a1) to Requirement (a3) and a compound B that satisfies Requirement (b1) to Requirement (b4); and
a liquid crystal compound,
(a1) a value obtained by dividing a total number of methyl groups bonded to silicon atoms in a molecule by a molecular weight of the compound is 0.0140 or more,
(a2) the compound A is represented by Formula (A1),

Formula (A1) $A\text{-}(Z^{a1}\text{-}Y^{a1}\text{-}(X^{a1})_m)_n$

in Formula (A1), A represents an aromatic ring which may have a substituent, an aliphatic ring which may have a substituent, or a group represented by $A^1-L^A-A^2$, $A^1$ and $A^2$ each independently represent an aromatic ring which may have a substituent or an aliphatic ring which may have a substituent, and $L^A$ represents -C≡C- or $-CH_2-$, $Z^{a1}$'s each independently represent a chain-like alkylene group, -O-, -CO-, or a group formed by combining two or more selected from the group consisting of a chain-like alkylene group, -O-, -CO-, and $-NR^N-$, and $R^N$ represents a hydrogen atom or a substituent,

$Y^{a1}$'s each independently represent an aromatic ring which may have a substituent or an aliphatic ring which may have a substituent,
$X^{a1}$'s each independently represent a silicon-containing group having a Si-O-Si structure,
n represents an integer of 2 or more, and
m's each independently represent an integer of 1 or more,
(a3) the compound A has a molecular weight of 500 to 8000,
(b1) a value obtained by dividing a total number of methyl groups bonded to silicon atoms in a molecule by a molecular weight of the compound is 0.0140 or more,
(b2) the compound B has two or more groups represented by $-L^{b1}-X^{b1}$,
$L^{b1}$'s each independently represent an alkylene group which may have a heteroatom or -O-, and
$X^{b1}$ represents a monovalent group selected from the group consisting of groups represented by Formula (C-1) to Formula (C-3),

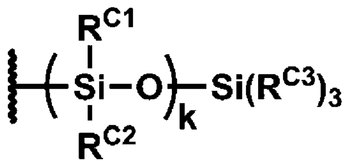
(C-1)

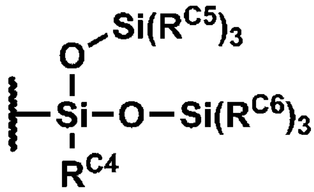
(C-2)

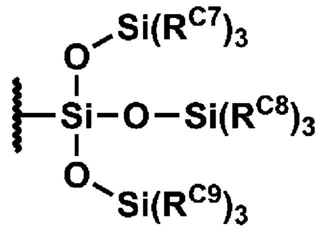
(C-3)

in Formula (C-1), $R^{C1}$ to $R^{C3}$ each independently represent an alkyl group having 1 to 10 carbon atoms, and k represents an integer of 2 to 20,
in Formula (C-2), $R^{C4}$ represents an alkyl group having 1 to 10 carbon atoms, and $R^{C5}$ and $R^{C6}$ each independently represent an alkyl group having 1 to 10 carbon atoms or a group represented by Formula (C-1X),
in Formula (C-3), $R^{C7}$ to $R^{C9}$ each independently represent an alkyl group having 1 to 10 carbon atoms or a group represented by Formula (C-1X),

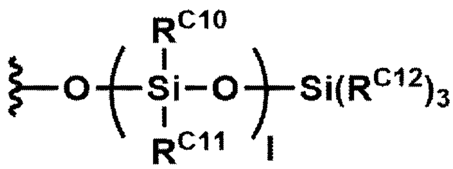
(C-1X)

in Formula (C-1X), $R^{C10}$ to $R^{C12}$ each independently represent an alkyl group having 1 to 10 carbon atoms, and 1 represents an integer of 0 to 20,
(b3) the compound B has a partial structure represented by $*-(Z^{b1}-Y^{b1})_s-W^{b1}$,
* represents a bonding position,
$Z^{b1}$'s each independently represent an alkylene group, -O-, -CO-, $-NR^N-$, or a group formed by combining these groups, and $R^N$ represents a hydrogen atom or a substituent,
$Y^{b1}$'s each independently represent an aromatic ring which may have a substituent or an aliphatic ring which may have a substituent,
$W^{b1}$ represents a hydrogen atom or a substituent which does not contain a silicon atom, and
s represents an integer of 1 or more,
(b4) the compound B has a molecular weight of 500 to 8000.

**2.** The composition according to claim 1,

wherein the compound A is a compound represented by Formula (A2) or a compound represented by Formula (A3),

Formula (A2) $A-(Z^{a1}-(Y^{a2}-Z^{a2})_r-Y^{a3}-(T^{a1})_{m1})_n$

Formula (A3) $A\text{-}(Z^{a1}\text{-}Y^{a1}\text{-}(Z^{a3}\text{-}B^{a1})_{m2})_n$

in Formula (A2) and Formula (A3), A, $Z^{a1}$, $Y^{a1}$, and n have the same definitions as A, $Z^{a1}$, $Y^{a1}$, and n in Formula (A1),
in Formula (A2), $Z^{a2}$'s each independently represent a chain-like alkylene group, -O-, -CO-, or a group formed by combining two or more selected from the group consisting of a chain-like alkylene group, -O-, -CO-, and -$NR^N$-, and $R^N$ represents a hydrogen atom or a substituent,
$Y^{a2}$ and $Y^{a3}$ each independently represent an aromatic ring which may have a substituent or an aliphatic ring which may have a substituent,
r's each independently represent an integer of 0 or more,
$T^{a1}$ represents a monovalent substituent T having a siloxane structure containing three or more silicon atoms, provided that, in the substituent T, a moiety bonded to a group represented by $Y^{a3}$ is -O-, -CO-, -$NR^N$-, -S-, or a group formed by combining these groups, and
m1 represents an integer of 1 or more,
in Formula (A3), $Z^{a3}$'s each independently represent a chain-like alkylene group, -O-, -CO-, or a group formed by combining two or more selected from the group consisting of a chain-like alkylene group, -O-, -CO-, and -$NR^N$-, and $R^N$ represents a hydrogen atom or a substituent,
$B^{a1}$ represents a monovalent aromatic ring group in which one or more monovalent substituents T each having a siloxane structure containing three or more silicon atoms are substituted, provided that, in the substituent T, a moiety bonded to an aromatic ring constituting the aromatic ring group is -O-, -CO-, -$NR^N$-, -S-, or a group formed by combining these groups, and
m2 represents an integer of 2 or more.

**3.** The composition according to claim 1,

wherein the compound B is a compound represented by Formula (B1),

Formula (B1) $B^{b1}\text{-}(Z^{b1}\text{-}Y^{b1})_s\text{-}W^{b1}$

in Formula (B1), $Z^{b1}$, $Y^{b1}$, $W^{b1}$, and s have the same definitions as $Z^{b1}$, $Y^{b1}$, $W^{b1}$, and s in the partial structure in Requirement (b3), and
$B^{b1}$ represents an aromatic ring which is substituted with two or more groups represented by -$L^{b1}$-$X^{b1}$, or which is substituted with one or more groups having two or more groups represented by -$L^{b1}$-$X^{b1}$.

**4.** The composition according to claim 2,

wherein, in Formula (A2), in the substituent T, the moiety bonded to the group represented by Ya3 is -CO-O-, -O-CO-O-, -NH-CO-O-, or -CO-O-NH-, and
in Formula (A3), in the substituent T, the moiety bonded to the aromatic ring constituting the aromatic ring group is -CO-O-, -O-CO-O-, -NH-CO-O-, or -CO-O-NH-.

**5.** An optically anisotropic film formed of the composition according to any one of claims 1 to 4.

**6.** A compound that satisfies Requirement (a1) to Requirement (a3),

(a1) a value obtained by dividing a total number of methyl groups bonded to silicon atoms in a molecule by a molecular weight of the compound is 0.0140 or more,
(a2) the compound is represented by Formula (A1),

Formula (A1) $A\text{-}(Z^{a1}\text{-}Y^{a1}\text{-}(X^{a1})_m)_n$

in Formula (A1), A represents an aromatic ring which may have a substituent, an aliphatic ring which may have a substituent, or a group represented by $A^1$-$L^A$-$A^2$, $A^1$ and $A^2$ each independently represent an aromatic ring which may have a substituent or an aliphatic ring which may have a substituent, and $L^A$ represents -C≡C- or -$CH_2$-,
$Z^{a1}$'s each independently represent a chain-like alkylene group, -O-, -CO-, or a group formed by combining two or more selected from the group consisting of a chain-like alkylene group, -O-, -CO-, and -$NR^N$-, and $R^N$ represents a hydrogen atom or a substituent,

$Y^{a1}$'s each independently represent an aromatic ring which may have a substituent or an aliphatic ring which may have a substituent,
$X^{a1}$'s each independently represent a silicon-containing group having a Si-O-Si structure,
n represents an integer of 2 or more, and
m's each independently represent an integer of 1 or more, and
(a3) the compound has a molecular weight of 500 to 8000.

**7.** The compound according to claim 6,

wherein the compound is represented by Formula (A2) or Formula (A3),

Formula (A2) $A\text{-}(Z^{a1}\text{-}(Y^{a2}\text{-}Z^{a2})_r\text{-}Y^{a3}\text{-}(T^{a1})_{m1})_n$

Formula (A3) $A\text{-}(Z^{a1}\text{-}Y^{a1}\text{-}(Z^{a3}\text{-}3^{a1})_{m2})_n$

in Formula (A2) and Formula (A3), A, $Z^{a1}$, $Y^{a1}$, and n have the same definitions as A, $Z^{a1}$, $Y^{a1}$, and n in Formula (A1),
in Formula (A2), $Z^{a2}$'s each independently represent a chain-like alkylene group, -O-, -CO-, or a group formed by combining two or more selected from the group consisting of a chain-like alkylene group, -O-, -CO-, and $-NR^N-$, and $R^N$ represents a hydrogen atom or a substituent,
$Y^{a2}$ and $Y^{a3}$ each independently represent an aromatic ring which may have a substituent or an aliphatic ring which may have a substituent,
r's each independently represent an integer of 0 or more,
$T^{a1}$ represents a monovalent substituent T having a siloxane structure containing three or more silicon atoms, provided that, in the substituent T, a moiety bonded to a group represented by $Y^{a3}$ is -O-, -CO-, $-NR^N-$, -S-, or a group formed by combining these groups, and
m1 represents an integer of 1 or more,
in Formula (A3), $Z^{a3}$'s each independently represent a chain-like alkylene group, -O-, -CO-, or a group formed by combining two or more selected from the group consisting of a chain-like alkylene group, -O-, -CO-, and $-NR^N-$, and $R^N$ represents a hydrogen atom or a substituent,
$B^{a1}$ represents a monovalent aromatic ring group in which one or more monovalent substituents T each having a siloxane structure containing three or more silicon atoms are substituted, provided that, in the substituent T, a moiety bonded to an aromatic ring constituting the aromatic ring group is -O-, -CO-, $-NR^N-$, -S-, or a group formed by combining these groups, and
m2 represents an integer of 2 or more.

**8.** The compound according to claim 7,

wherein, in Formula (A2), in the substituent T, a moiety bonded to a group represented by $Y^{a3}$ is -CO-O-, -O-CO-O-, -NH-CO-O-, or -CO-O-NH-, and
in Formula (A3), in the substituent T, a moiety bonded to an aromatic ring constituting an aromatic ring group is -CO-O-, -O-CO-O-, -NH-CO-O-, or -CO-O-NH-.

**9.** A compound that satisfies Requirement (b1) to Requirement (b4),

(b1) a value obtained by dividing a total number of methyl groups bonded to silicon atoms in a molecule by a molecular weight of the compound is 0.0140 or more,
(b2) the compound has two or more groups represented by $-L^{b1}\text{-}X^{b1}$,
$L^{b1}$'s each independently represent an alkylene group which may have a heteroatom or -O-, and
$X^{b1}$ represents a monovalent group selected from the group consisting of groups represented by Formula (C-1) to Formula (C-3),

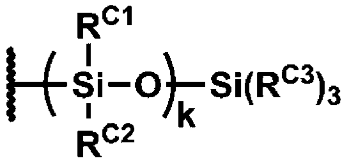

(C-1)

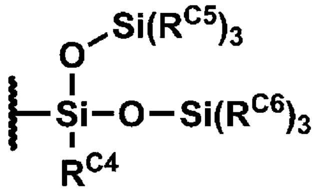

(C-2)

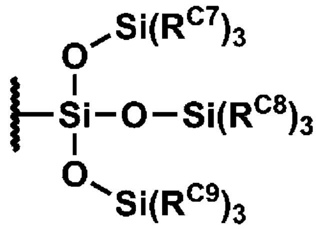

(C-3)

in Formula (C-1), $R^{C1}$ to $R^{C3}$ each independently represent an alkyl group having 1 to 10 carbon atoms, and k represents an integer of 2 to 20,
in Formula (C-2), $R^{C4}$ represents an alkyl group having 1 to 10 carbon atoms, and $R^{C5}$ and $R^{C6}$ each independently represent an alkyl group having 1 to 10 carbon atoms or a group represented by Formula (C-1X),
in Formula (C-3), $R^{C7}$ to $R^{C9}$ each independently represent an alkyl group having 1 to 10 carbon atoms or a group represented by Formula (C-1X),

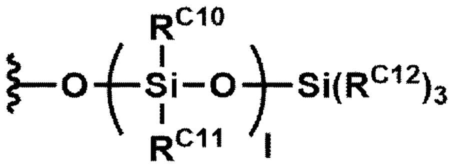

(C-1X)

in Formula (C-1X), $R^{C10}$ to $R^{C12}$ each independently represent an alkyl group having 1 to 10 carbon atoms, and l represents an integer of 0 to 20,
(b3) the compound has a partial structure represented by *-$(Z^{b1}-Y^{b1})_s-W^{b1}$,
* represents a bonding position,
$Z^{b1}$'s each independently represent an alkylene group, -O-, -CO-, -$NR^N$-, or a group formed by combining these groups, and $R^N$ represents a hydrogen atom or a substituent,
$Y^{b1}$'s each independently represent an aromatic ring which may have a substituent or an aliphatic ring which may have a substituent,
$W^{b1}$ represents a hydrogen atom or a substituent which does not contain a silicon atom, and
s represents an integer of 1 or more,
(b4) the compound has a molecular weight of 500 to 8000.

**10.** The compound according to claim 9,

wherein the compound is represented by Formula (B1),

Formula (B1) $B^{b1}-(Z^{b1}-Y^{b1})_s-W^{b1}$

in Formula (B1), $Z^{b1}$, $Y^{b1}$, $W^{b1}$, and s have the same definitions as $Z^{b1}$, $Y^{b1}$, $W^{b1}$, and s in the partial structure, and $B^{b1}$ represents an aromatic ring which is substituted with two or more groups represented by -$L^{b1}$-$X^{b1}$, or which is substituted with one or more groups having two or more groups represented by -$L^{b1}$-$X^{b1}$.

**INTERNATIONAL SEARCH REPORT**

International application No.
**PCT/JP2024/024984**

**A. CLASSIFICATION OF SUBJECT MATTER**

***G02B 5/30***(2006.01)i; ***C07F 7/08***(2006.01)i; ***C07F 7/10***(2006.01)i; ***C08F 2/44***(2006.01)i; ***C08G 77/00***(2006.01)i; ***C08L 83/00***(2006.01)i
FI: G02B5/30; C07F7/08 X CSP; C07F7/10 W CSP; C08F2/44 B; C08G77/00; C08L83/00

According to International Patent Classification (IPC) or to both national classification and IPC

**B. FIELDS SEARCHED**

Minimum documentation searched (classification system followed by classification symbols)

G02B5/30; C07F7/08; C07F7/10; C08F2/44; C08G77/00; C08L83/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | SUHAN, Natalie D. et al. Mesomorphic [2]Rotaxanes: Sheltering Ionic Cores with Interlocking Components. Journal of the American Chemical Society (2013). 10 December 2012, 135(1), pp. 400-408, ISSN 0002-7863<br>p. 401, scheme 2 | 1-2, 4-5 |
| X | | 6-9 |
| A | | 3, 10 |
| Y | PUGH, Coleen et al. Induction of Smectic Layering in Nematic Liquid Crystals Using Immiscible Components. 2. Laterally Attached Side-Chain Liquid-Crystalline Poly(norbornene)s and Their Low-Molar-Mass Analogues with Hydrocarbon/ Oligodimethylsiloxane Substituents. Macromolecules (1998). 15 July 1998, 31(16), pp. 5188-5200, ISSN 0024-9297<br>p. 5191, scheme 1, table 2 | 1-2, 5 |
| X | | 6-7, 9 |
| A | | 3-4, 8, 10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 September 2024** | **24 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/024984**

**C. DOCUMENTS CONSIDERED TO BE RELEVANT**

| Category* | Citation of document, with indication, where appropriate, of the relevant passages | Relevant to claim No. |
|---|---|---|
| Y | NICKMANS, Koen et al. 3D Orientational Control in Self-Assembled Thin Films with Sub-5 nm Features by Light. Small (2017). 24 July 2017, 13, 1701043, pp. 1-11, ISSN 1613-6810 p. 2, scheme 1 | 1-2, 5 |
| X | | 6-7, 9 |
| A | | 3-4, 8, 10 |
| Y | JP 2008-239622 A (DAI NIPPON PRINTING CO., LTD.) 09 October 2008 (2008-10-09) paragraph [0042] | 1-2, 4-5 |
| Y | JP 5-255277 A (HOECHST AKTIENGESELLSCHAFT) 05 October 1993 (1993-10-05) paragraphs [0011], [0014] | 1-2, 4-5 |
| Y | JP 2000-235184 A (FUJI PHOTO FILM CO., LTD.) 29 August 2000 (2000-08-29) paragraphs [0009], [0034]-[0036] | 5 |
| Y | JP 2007-182423 A (CHISSO CORPORATION) 19 July 2007 (2007-07-19) claims, paragraph [0096] | 5 |
| X | WO 2018/143173 A1 (NIKON CORPORATION) 09 August 2018 (2018-08-09) paragraphs [0137], [0141] | 9-10 |
| A | | 1-8 |
| X | JP 10-139648 A (L'OREAL) 26 May 1998 (1998-05-26) example 1 | 9-10 |
| A | | 1-8 |
| X | FAWCETT, Amanda S. et al. Thermoplastic Silicone Elastomers through Self-Association of Pendant Coumarin Groups. Macromolecules (2014). 18 February 2014, 47(5), pp. 1656-1663, ISSN: 0024-9297 fig. 2D | 9-10 |
| A | | 1-8 |

Form PCT/ISA/210 (second sheet) (July 2022)

**INTERNATIONAL SEARCH REPORT**

International application No. **PCT/JP2024/024984**

**Box No. III Observations where unity of invention is lacking (Continuation of item 3 of first sheet)**

This International Searching Authority found multiple inventions in this international application, as follows:

Document 1: SUHAN, Natalie D. et al. Mesomorphic [2]Rotaxanes: Sheltering Ionic Cores with Interlocking Components. Journal of the American Chemical Society (2013). 10 December 2012, 135(1), pp. 400-408, ISSN 0002-7863

Document 4: JP 2008-239622 A (DAI NIPPON PRINTING CO., LTD.) 09 October 2008 (2008-10-09) paragraph [0042] & US 2008/0230745 A1 paragraph [0054]

Document 5: JP 5-255277 A (HOECHST AKTIENGESELLSCHAFT) 05 October 1993 (1993-10-05) paragraphs [0011], [0014] & US 5200521 A column 2, lines 3-15, 42-50 & US 5439612 A & EP 477901 A2 & DE 4030579 A1 & KR 10-1992-0006331 A & TW 223062 B

Document 6: JP 2000-235184 A (FUJI PHOTO FILM CO., LTD.) 29 August 2000 (2000-08-29) paragraphs [0009], [0034]-[0036] (Family: none)

Document 7: JP 2007-182423 A (CHISSO CORPORATION) 19 July 2007 (2007-07-19) claims, paragraph [0096] & US 2007/0134447 A1 claims, paragraphs [0089]-[0090] & US 2011/0144293 A1

Claims are classified into the following two inventions.

(Invention 1) Parts in which a compound A is selected in claims 1 and 5, and claims 2, 4, and 6-8

Document 1 (in particular, p. 401, scheme 2) discloses a compound $RSi^{2+}$ which exhibits liquid crystallinity.

Here, the compound $RSi^{2+}$ has a molecular weight of 1889, and a "value obtained by dividing the total number of methyl groups bonded to silicon atoms by a molecular weight of a compound" of 0.0148, and satisfies requirements (a1) to (a3), and thus corresponds to a "compound A." In addition, the compound RSi2+ satisfies the structure specified in claims 2 and 4.

Document 1 does not disclose the feature in which a composition is obtained by mixing an additional liquid crystal compound to the compound and the feature in which an optically anisotropic film is formed by using the composition. However, the features are derived by adding a well-known feature, for example, disclosed in documents 4-7 (refer to parts of documents 4-5 for the former and documents 6-7 for the latter), and thus are not considered to exhibit a novel effect.

Therefore, parts in which a compound A is selected in claims 1 and 5, and claims 2 and 4 do not have a special technical feature, and are thus classified as invention 1.

Furthermore, claims 6-8 are the invention of a compound A, and are obtained by deleting a well-known feature from a part in which the compound A is selected in claim 1. Therefore, claims 6-8 are substantially identical to or similarly closely related to invention 1, and are thus classified as invention 1.

(Invention 2) Parts in which a compound B is selected in claims 1 and 5, and claims 3, and 9-10

Parts in which a compound B is selected in claims 1 and 5, and claims 3, and 9-10 do not correspond to an invention in the same category that includes all matters specifying the invention of a part in which the compound A is selected in claim 1. However, it cannot be said that the common technical feature between the two is a special technical feature. Also, parts selected from a compound B in claims 1 and 5, and claims 3, and 9-10 are not substantially identical to or similarly closely related to any of the claims classified as invention 1.

Therefore, parts in which a compound B is selected in claims 1 and 5, and claims 3, and 9-10 are not classified as invention 1, and are thus classified as invention 2.

Form PCT/ISA/210 (continuation of first sheet) (July 2022)

INTERNATIONAL SEARCH REPORT

International application No.
PCT/JP2024/024984

**Box No. III Observations where unity of invention is lacking (Continuation of item 3 of first sheet)**

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

**INTERNATIONAL SEARCH REPORT**
**Information on patent family members**

International application No.
**PCT/JP2024/024984**

| Patent document cited in search report | Publication date (day/month/year) | Patent family member(s) | Publication date (day/month/year) |
|---|---|---|---|
| JP 2008-239622 A | 09 October 2008 | US 2008/0230745 A1<br>paragraph [0054] | |
| JP 5-255277 A | 05 October 1993 | US 5200521 A<br>column 2, lines 3-15, 42-50<br>US 5439612 A<br>EP 477901 A2<br>DE 4030579 A1<br>KR 10-1992-0006331 A<br>TW 223062 B | |
| JP 2000-235184 A | 29 August 2000 | (Family: none) | |
| JP 2007-182423 A | 19 July 2007 | US 2007/0134447 A1<br>claims, paragraphs [0089]-[0090]<br>US 2011/0144293 A1 | |
| WO 2018/143173 A1 | 09 August 2018 | US 2019/0352260 A1<br>paragraphs [0200], [0207]<br>JP 2018-123082 A<br>CN 110198946 A<br>TW 201833124 A | |
| JP 10-139648 A | 26 May 1998 | US 6517742 B1<br>example 1<br>EP 841341 A1<br>FR 2755692 A1<br>CA 2218924 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8113577 A
- JP H08113577 A
- JP 1999513019 A
- JP H11513019 A
- JP 2005289980 A
- JP 2007108732 A
- JP 2010244038 A
- JP 2008297210 A
- JP 2010084032 A
- JP 2016081035 A
- JP 2016053709 A
- JP 2011006360 A
- JP 2011006361 A
- JP 2012207765 A
- JP 2012077055 A
- WO 12141245 A
- WO 12147904 A
- WO 14147904 A
- WO 2021060427 A
- JP 2002020363 A
- JP 2006106662 A
- JP 2012211306 A
- JP 2004198511 A
- JP 2008225281 A
- JP 2012208397 A
- JP 2008026730 A
- JP 2016193869 A
- JP 2002080478 A
- JP 2002080851 A
- JP 2002179668 A
- JP 2002179669 A
- JP 2002179670 A
- JP 2002179681 A
- JP 2002179682 A
- JP 2002338575 A
- JP 2002338668 A
- JP 2003313189 A
- JP 2003313292 A
- WO 2021033640 A
- JP 2016035579 A
- WO 01088574 A
- JP 3907735 B
- JP 2012155308 A
- WO 2005096041 A
- JP 2012018395 A
- JP 2007072163 A
- JP 2013209631 A


### Non-patent literature cited in the description


- **MASAO DOI**. Polymer Physics-Phase Transition Dynamics. Iwanami Shoten Publishers, 1992, vol. 2
- Liquid Crystal Device Handbook. chiral agents for twisted nematic (TN) or super twisted nematic (STN). Committee of the Japan Society for the Promotion of Science, 1989, vol. 4-3, 199
- Introduction to Experimental Liquid Crystal Chemistry. Sigma Publishing Co., 2007, 46
- Liquid Crystal Handbook. Maruzen Publishing Co., 196
- *RSC Advances*, 2016, vol. 6, 33249-33258
- *Chemistry - A European Journal*, 2008, vol. 14 (12), 3544